(19) Europäisches Patentamt
European Patent Office
Office européen des brevets

(11) EP 2 231 805 B1

(12) **EUROPÄISCHE PATENTSCHRIFT**

(45) Veröffentlichungstag und Bekanntmachung des Hinweises auf die Patenterteilung:
**13.04.2011 Patentblatt 2011/15**

(21) Anmeldenummer: **09704843.3**

(22) Anmeldetag: **22.01.2009**

(51) Int Cl.:
***C09J 123/12*** *(2006.01)* ***C09D 123/10*** *(2006.01)*
***D06N 7/00*** *(2006.01)*

(86) Internationale Anmeldenummer:
**PCT/EP2009/050680**

(87) Internationale Veröffentlichungsnummer:
**WO 2009/092744 (30.07.2009 Gazette 2009/31)**

(54) **VERWENDUNG VON POLYOLEFINEN MIT ATAKTISCHEN STRUKTURELEMENTEN IN BODENBELÄGEN**

USE OF POLYOLEFINS COMPRISING ATACTIC STRUCTURAL ELEMENTS IN FLOOR COVERINGS

UTILISATION DE POLYOLÉFINES À ÉLÉMENTS STRUCTURAUX ATACTIQUES DANS DES REVÊTEMENTS DE SOL

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **24.01.2008 DE 102008005947**

(43) Veröffentlichungstag der Anmeldung:
**29.09.2010 Patentblatt 2010/39**

(73) Patentinhaber: **Evonik Degussa GmbH**
**45128 Essen (DE)**

(72) Erfinder:
- **BECKER, Hinnerk Gordon**
**45257 Essen (DE)**
- **VEY, Marlies**
**45772 Marl (DE)**
- **MINDACH, Lutz**
**44797 Bochum (DE)**

(56) Entgegenhaltungen:
**EP-A- 0 309 674** **EP-A- 1 375 731**
**DE-A1- 2 610 141** **US-A1- 2003 170 477**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 231 805 B1

## Beschreibung

Die vorliegende Erfindung betrifft die Verwendung von Polyolefinen mit ataktischen Strukturelementen in Bodenbelägen, insbesondere in Teppichen oder Kunstrasen.

Die Verwendung von amorphen Olefinpolymeren zur Herstellung von Teppichen und/oder Teppichfliesen ist schon seit langem bekannt. So wird beispielsweise in der US 3,928,281 die Verwendung einer Kombination aus ataktischem Polypropylen und Urethan-Prepolymeren sowie anorganischen Füllmaterialien zur Herstellung einer Teppichrückenbeschichtung beschrieben. Die Verwendung von Isocyanat-haltigen Verbindungen bei der Teppichherstellung ist im Hinblick auf die Recyclingfähigkeit solcher Teppiche sowie aus toxikologischen Gründen nachteilig. Zudem weist das verwendete ataktische Polypropylen nicht die für eine gleichzeitige Noppen- und Filamenteinbindung erforderlichen Materialeigenschaften, wie z. B. eine definierte Polymerstruktur auf, insbesondere können niedrige Auftragsgewichte nicht erzielt werden.

Die Verwendung von Schmelzklebstoffen zur Herstellung von Teppichrückenbeschichtungen ist bereits aus der US 3,551,231 bekannt. Die verwendeten Schmelzkleber werden dabei insbesondere auf Basis von Poly(ethylen-co-vinylacetat) hergestellt und mittels besonderer Anpressmechanismen in die Teppichrohware eingedrückt. Die verwendeten Basispolymere weisen allerdings nicht die für eine gleichzeitige Noppen- und Filamenteinbindung erforderlichen Materialeigenschaften auf, insbesondere können niedrige Auftragsgewichte nicht erzielt werden.

In der US 3,982,051 wird die Verwendung von Haftschmelzklebstoffen zur Teppichrückenbeschichtung beschrieben. Dabei werden die Haftschmelzklebstoffe auf Basis von Ethylencopolymeren mit hohem Ethylengehalt wie z. B. Poly(ethylen-co-vinylacetat), Poly(ethylen-co-alkylacrylat), ataktischem Polypropylen und vulkanisiertem Gummi hergestellt. Die verwendete Materialkombination weist nicht die für die gleichzeitige Noppen- und Filamenteinbindung erforderlichen Materialeigenschaften auf, insbesondere können niedrige Auftragsgewichte nicht erzielt werden.

In der EP 0518014 werden dreidimensional verformbare recyclingfähige Bodenteppiche, insbesondere Autobodenteppiche sowie ein Verfahren zu ihrer Herstellung beschrieben, bei dem die Rückenbeschichtung des Teppichs mit einer Formmasse erfolgt, die 10 bis 95 Gew.-% eines oder mehrerer weitgehend amorpher Polyolefine enthält. Das verwendete weitgehend amorphe Polyolefin weist dabei eine Schmelzviskosität bei 190 °C von 2000 bis 200000 mPa*s und einen Erweichungspunkt von 70 bis 160 °C sowie eine Nadelpenetration von 5 bis 50 *0,1mm auf. Beschrieben wird insbesondere die Herstellung einer Teppichrückenbeschichtung unter Verwendung eines hohen bis sehr hohen Füllstoffanteils. Eine gleichzeitige Noppen- und/oder Filamenteinbindung wird nicht beschrieben. Die genannten amorphen Polyolefine sind auf Grund ihrer teilweise sehr hohen Schmelzviskosität nicht in der Lage, eine ausreichende Penetration der Teppichrohware zu gewährleisten. Insbesondere ist auf Grund der ungeordneten Polymerstruktur die notwendige Kombination aus niedriger Schmelzviskosität bei der Applikationstemperatur und hoher Zugfestigkeit, Flexibilität und Klebscherfestigkeit im erkalteten Zustand nicht gegeben.

In der EP 0592683 wird ein 2-stufiges Verfahren zur Herstellung von Teppichfliesen unter Verwendung von amorphen Polyolefinen beschrieben, wobei die aufgetragene Polymerzusammensetzung eine Schmelzviskosität von 2000 bis 100000 Centipoise aufweist, und ein Auftragsgewicht von 200 bis 2000 g/m$^2$ verwendet wird. Bei den in der Polymerzusammensetzung enthaltenen amorphen Olefinpolymeren (5 - 95 ma-%) handelt es sich um Homo- und/oder Copolymere aus Ethylen, Propylen und/oder 1-Buten, die im Wesentlichen amorph sind und keine Kristallinität aufweisen. Sie weisen eine Schmelzviskosität von 300 bis 30000 Centipoise und einen Erweichungspunkt von 100 bis 170 °C auf. Derartige Polymere weisen allerdings, da sie keine definierte Kettenstruktur besitzen, schlechte Materialeigenschaften auf und ermöglichen auch nicht die Herstellung von Teppichen mit niedrigen Auftraggewichten. Insbesondere lassen sich nicht gleichzeitig eine hohe Klebscherfestigkeit auf unbehandeltem Polypropylen, eine hohe Zugfestigkeit und eine hohe Reißdehnung bei gleichzeitig niedriger Schmelzviskosität realisieren. Hinzu kommt, dass derartige Polyolefine in der Regel eine hohe Polydispersität aufweisen und die in ihnen enthaltenen niedermolekularen Bestandteile leicht ausgasen. Weiterhin weist das beschriebene Herstellverfahren auf Grund seiner 2-Stufigkeit (getrennte Noppen/Filamenteinbindung und Teppichrückenbeschichtung) erhebliche prozesstechnische Nachteile auf, die die Wirtschaftlichkeit des Verfahrens in Frage stellen.

Ein Verfahren zur Noppen und Filamenteinbindung unter Verwendung von Schmelzklebern auf Basis von amorphen Poly(1-olefinen) ist auch aus der EP 1375731 bekannt. Die dort verwendeten amorphen Poly(1-olefin)e weisen allerdings mit einer Schmelzviskosität von 2000 bis 200000 mPa*s bei 190 °C in weiten Teilen eine schlechte Fließfähigkeit auf, wodurch die Herstellung von festen Verbünden bei niedrigen Auftragsgewichten stark erschwert wird. Außerdem ist mit den angegebenen Poly(1-olefinen), die keine definierten Kettenstrukturen aufweisen, keine Kombination aus niedriger Viskosität, hoher Zugfestigkeit und guter Klebscherfestigkeit auf unbehandeltem Polypropylen gegeben, so dass für eine technisch zufriedenstellende Lösung immer eine umfangreiche und komplexe Formulierung der amorphen Poly(1-olefine) notwendig wird.

Generell werden häufig Polyolefine für die Herstellung von Bodenbelägen, insbesondere Teppichen eingesetzt. So werden beispielsweise in der WO 93/12285 vollständig recycelbare Tuftingteppiche auf Basis synthetischer thermoplastischer Polymere beschrieben, bei denen insbesondere alle Bestandteile des Tuftingteppichs einer Polymerfamilie

angehören. Explizit wird hierbei neben Polyamiden oder Polyestern auch die Verwendung von Polypropylen beschrieben. Insbesondere werden Schmelzkleber auf Basis synthetischer thermoplastischer Polymere verwendet, die im Falle von Polypropylenteppichen auf Basis von ataktischem Polypropylen formuliert werden. Eine Kombination aus niedriger Viskosität, hoher Zugfestigkeit und guter Klebscherfestigkeit auf unbehandeltem Polypropylen ist aber bei Verwendung von ataktischem Polypropylen nicht gegeben, so dass für eine technisch zufriedenstellende Lösung immer eine umfangreiche und komplexe Formulierung notwendig wird.

Weiterhin werden beispielsweise in der WO 98/38374, der WO 98/38375 und der US 2005/0266206 die Verwendung von homogen verzweigtem Polyethylen (z. B. Poly(ethylen-co-1-octen)) mit hohem Molekulargewicht für die Herstellung von Teppichrückenbeschichtungen beschrieben. Derartige Polymere weisen allerdings auf Grund ihrer hohen Schmelzviskosität bei den gängigen Verarbeitungstemperaturen ein schlechtes Penetrationsverhalten in das Teppicherstrückenmaterial sowie auf Grund der Verzweigungen generell unterentwickelte Fließeigenschaften auf.

In der WO 2000/22226 wird die Verwendung spezieller (1-Olefin)-Copolymere für die Teppichherstellung beschrieben. Dabei werden insbesondere vinylaromatische bzw. sterisch gehinderte cycloaliphatische Comonomere eingesetzt. Insbesondere handelt es sich bei den eingesetzten Polymeren um Poly(ethylen-co-styrol). Die eingesetzten Polymere weisen insbesondere eine hohe Molmasse auf und werden, ausweislich der Beispiele, bei sehr hohen Schmelzetemperaturen von > 450 °C verarbeitet. Die beschriebenen Poly(ethylen-co-styrol)-Polymere sind nur sehr aufwendig herstell- und verarbeitbar, insbesondere bereitet die Entfernung von nicht einpolymerisiertem Styrol (bzw. cycloaliphatischen Monomeren) Probleme, deren Lösung einen hohen technologischen Aufwand erfordert und das Verfahren ökonomisch uninteressant macht. Die sehr hohen Schmelzetemperaturen (welche u. a. wegen der hohen Molmassen notwendig werden) sind zudem für die Verarbeitung thermosensitiver Teppichrohware prohibitiv.

Der Einsatz von Metallocenverbindungen als Katalysator in der Olefinpolymeristaion ist ebenfalls lange bekannt. Kaminsky et al. haben gezeigt, dass sich das Katalysatorsystem Cyclopentadienylzirkoniumdichlorid / Methylaluminoxan ($Cp_2ZrCl_2$/MAO) gut zur Polymerisation eignet (Adv. Organomet. Chem. 1980, 18, 99 - 149). Methylaluminoxan (ein partielles Hydrolyseprodukt von Trimethylaluminium) fungiert dabei als Cokatalysator. Seit dieser Zeit ist der Einsatz von Metallocenverbindungen in Verbindung mit MAO in Polymerisationsreaktionen weit verbreitet. So gibt es eine Vielzahl von Veröffentlichungen die sich mit der Metallocen-katalysierten Olefinpolymerisation, beispielsweise von Propen, beschäftigen, wie z. B. EP 0 318 049, EP 0 384 264 und EP 516 018.

Bei der Polymerisation von Propen bzw. seinen höheren Homologen, kann es zur Bildung unterschiedlicher relativer Stereoisomerer kommen. Die Regelmäßigkeit, mit der die konfigurativen Repetiereinheiten in der Hauptkette eines Makromoleküls aufeinanderfolgen, bezeichnet man als Taktizität. Zur Bestimmung der Taktizität betrachtet man die Monomereinheiten einer Polymerkette und stellt die relative Konfiguration jedes (pseudo)asymmetrischen Kettenatoms relativ zum vorangegangenen fest. Von *Isotaktizität* spricht man, wenn die hierbei festgestellte relative Konfiguration aller (pseudo)asymmetrischen Kettenatome stets die gleiche ist, d.h. die Kette aus nur einer einzigen konfigurativen Repetiereinheit aufgebaut ist. Von *Syndiotaktizität* spricht man dagegen, wenn die relative Konfiguration aufeinander folgender (pseudo)asymmetrischen Kettenatome jeweils gerade entgegengesetzt ist, d. h. die Kette alternierend aus zwei verschiedenen konfigurativen Repetiereinheiten aufgebaut ist. Bei *ataktischen* Polymeren schließlich sind die verschiedenen konfigurativen Repetiereinheiten entlang der Kette zufällig angeordnet.

Die physikalischen Eigenschaften von Propylenpolymeren sind in erster Linie von der Struktur der Makromoleküle und damit auch von der Kristallinität, ihrem Molekulargewicht und der Molekulargewichtsverteilung abhängig und lassen sich durch das verwendete Polymerisationsverfahren sowie insbesondere den verwendeten Polymerisationskatalysator beeinflussen [R.Vieweg, A.Schley, A.Schwarz (Hrsg); Kunststoff Handbuch; Bd. IV/"Polyolefine"; C. Hanser Verlag, München 1969].

Auf Basis ihrer Taktizität werden Polypropylenpolymere somit in ataktische, isotaktische und syndiotaktische Polymere unterteilt. Als Sonderformen kommen außerdem die sog. hemiisotaktischen Polypropylenpolymere und die sog. Stereoblockpolymere hinzu. Bei letzteren handelt es sich meist um Polymere mit isotaktischen und ataktischen Stereoblöcken, die sich wie thermoplastische Elastomere verhalten, da eine physikalische Vernetzung der Polymerketten stattfindet, die zu einer Verbindung unterschiedlicher kristalliner Polymerregionen führt (A. F. Mason, G.W. Coates in: "Macromolecular Engineering"; Wiley-VCH, Weinheim; 2007).

Ataktisches Polypropylen weist einen niedrigen Erweichungspunkt, eine niedrige Dichte und eine gute Löslichkeit in organischen Lösungsmitteln auf. Klassisches ataktisches Polypropylen (aPP) zeichnet sich durch eine sehr breite Molekulargewichtsverteilung aus, die einerseits zu einem breiten Schmelzbereich führt, und andererseits hohe niedermolekulare Anteile mit sich bringt, die mehr oder weniger stark zur Migration neigen. aPP hat eine sehr geringe Zugfestigkeit von ca. 1 MPa, weist aber andererseits eine sehr hohe Reißdehnung von bis zu 2000 % auf (H.-G. Elias; Makromoleküle; Bd. III; Wiley-VCH; Weinheim; 2001). Auf Grund des niedrigen Erweichungspunktes ist die Wärmestandfestigkeit von aPP-Formulierungen entsprechend niedrig, was zu einer starken Limitierung des Einsatzbereiches führt. Rein ataktische Polypropylenpolymere lassen sich auch durch Metallocenkatalyse herstellen, wobei sowohl sehr niedermolekulare als auch höhermolekulare Polymere erhalten werden können (L. Resconi in: "Metallocene based Polyolefins"; J. Scheirs, W. Kaminsky (Hrsg.); J. Wiley & Sons; Weinheim; 1999).

Syndiotaktisches Polypropylen ist hochtransparent und zeichnet sich durch eine gute Wärmebeständigkeit aus, wobei die Schmelztemperatur unter der von isotaktischem Polypropylen liegt. Es weist hohe Bruchfestigkeiten bei moderater Reißdehnung auf (A.F. Mason, G.W. Coates in "Macromolecular Engineering"; Wiley-VCH, Weinheim; 2007). Nachteilig ist die in vielen Fällen beobachtete langsame Kristallisation aus der Schmelze. Auf Grund von physikalischen Verschlaufungen liegt die Schmelzeviskosität von syndiotaktischem Polypropylen bei vergleichbarer Molmasse deutlich höher als die von isotaktischem Polypropylen, d. h. man kann mit deutlich geringeren Molmassen die gleiche Schmelzviskosität erreichen. Syndiotaktisches und isotaktisches Polypropylen sind ab einer bestimmten Molmasse nicht mischbar, entsprechende Polymerblends neigen zur Phasenseparation. Polymerblends von syndiotaktischem Polypropylen mit anderen Polyolefinen zeigen eine deutlich höhere Reißdehnung als Blends mit isotaktischem Polypropylen (T. Shiomura, N. Uchikawa, T. Asanuma, R. Sugimoto, 1. Fujio, S. Kimura, S. Harima, M. Akiyama, M. Kohno, N. Inoue in: "Metallocene based Polyolefins"; J. Scheirs, W. Kaminsky (Hrsg.); J.Wiley & Sons; Weinheim; 1999) Klassische heterogene Ziegler-Natta-Katalysatoren sind nicht in der Lage syndiotaktisches Polypropylen herzustellen.

Isotaktisches Polypropylen zeichnet sich durch eine hohe Schmelztemperatur und gute Zugfestigkeit aus. Für 100%ig isotaktisches Polypropylen liegt die berechnete Schmelztemperatur bei 185 °C und die Schmelzenthalpie bei ca. 207 J/g (J. Bicerano; J.M.S.; Rev.Macromol.Chem.Phys.; C38 (1998); 391ff). Als Homopolymer weist es allerdings eine relativ geringe Kältebeständigkeit sowie eine hohe Sprödigkeit und eine schlechte Heißsiegelbarkeit beziehungsweise Verschweißbarkeit auf. Die Zugfestigkeit (Bruch) liegt bei ca. 30 MPa, wobei so gut wie keine Reißdehnung auftritt. Verbesserte Materialeigenschaften lassen sich durch Co- bzw. Terpolymerisation mit Ethylen und 1-Buten einstellen, wobei der Comonomergehalt für Copolymere mit Ethylen bei üblicher Weise < 8 ma-% und für Terpolymere mit Ethylen und 1-Buten bei < 12 ma-% liegt. (H.-G. Elias; Makromoleküle; Bd. III; Wiley-VCH; Weinheim; 2001). Bei gleichem MFR (Melt Flow Rate = Schmelzindex) zeigt isotaktisches Polypropylen, welches durch klassische heterogene Ziegler-Natta-Katalyse hergestellt wurde, eine deutlich geringere Strukturviskosität als Polypropylen, welches durch Metallocenkatalyse hergestellt wurde. Die Schlagzähigkeit des Metallocen-basierten Polymers liegt in einem weiten Molmassenbereich über der des Ziegler-Natta-Materials. Der Anteil von xylollöslichen Bestandteilen liegt bei isotaktischem Poly(propylen)-Homopolymer, welches durch Metallocenkatalyse gewonnen wurde, üblicher Weise bei deutlich < 1 ma-%, bei random-Copolymeren mit Ethylen werden je nach Ethylenanteil xylollösliche Anteile von maximal 5 ma-% gefunden (W. Spaleck in: "Metallocene based Polyolefins"; J. Scheirs, W. Kaminsky (Hrsg.); J.Wiley & Sons; Weinheim; 1999).

Da die Löslichkeit von Polypropylen sowohl vom Molekulargewicht als auch von seiner Kristallinität abhängt, kann über Lösungsversuche ein entsprechende Fraktionierung erfolgen [A. Lehtinen; Macromol. Chem.Phys.; 195 (1994); 1539ff].

Es ist seit langem bekannt, dass sich mittels Extraktion mit Ether amorphe ataktische Anteile [J. Boor; "Ziegler-Natta Catalysts and Polymerization"; Academic Press; New York; 1979] und niedermolekulare Anteile mit geringer Kristallinität [G. Natta, I. Pasquon, A. Zambelli, G. Gatti; Makromol. Chem.; 70 (1964); 191ff] aus Polypropylenpolymeren erhalten lassen. Hoch kristalline isotaktische Polymere haben hingegen eine sehr geringe Löslichkeit sowohl in aliphatischen Lösungsmitteln wie auch in Ethern und zwar auch bei erhöhter Temperatur [B.A. Krentsel, Y.V. Kissin, V.I. Kleiner, L.L. Stotskaya; "Polymers and Copolymers of higher 1-Olefins"; S.19/20; Hanser Publ.; München; 1997]. Die löslichen Polymeranteile weisen im Allgemeinen keine bzw. nur eine sehr geringe Kristallinität auf, und zeigen keinen Schmelzpunkt [Y.V.Kissin; "Isospecific polymerization of olefins"; Springer Verlag; New York; 1985]. In Tetrahydrofuran lösliche Polypropylenoligomere weisen sehr geringe zahlenmittlere Molmassen von deutlich kleiner als 1500 g/mol auf [H. El Mansouri, N. Yagoubi, D. Scholler, A. Feigenbaum, D. Ferrier; J. Appl. Polym. Sci.; 71 (1999); 371ff].

Die verschiedenen Polymertypen unterscheiden sich wesentlich in ihren Materialeigenschaften. Die Kristallinität von hoch isotaktischen bzw. syndiotaktischen Polymeren ist auf Grund ihrer hohen Ordnung sehr hoch. Ataktische Polymere weisen hingegen einen höheren amorphen Anteil und demzufolge eine niedrigere Kristallinität auf. Polymere mit hoher Kristallinität zeigen viele Materialeigenschaften, die insbesondere im Bereich der Heißschmelzklebstoffe unerwünscht sind. So führt beispielsweise eine hohe Kristallinität bei niedermolekularen Polymeren zu einer sehr schnellen Kristallisation mit offenen Zeiten ("offene Zeit" = Zeitspanne in der die zu verklebenden Teile miteinander verbunden werden können) von teilweise weniger als einer Sekunde. Dies führt bei der Applikation (z. B. bei Düsen-Applikation durch Versprühen) bereits bei geringsten

Temperaturschwankungen zur Verstopfung des verwendeten Applikationsequipments, und damit zu einer sehr schlechten Prozessstabilität. Hinzu kommt die äußerst kurze Zeitspanne, in der nach der Applikation das Fügen der Klebverbindung erfolgen kann. Hochkristalline Polymere sind zudem bei Raumtemperatur hart, spröde und weisen nur eine sehr geringe Flexibilität auf, was bei Verklebungen ebenfalls unerwünscht ist. Hinzu kommt, dass für das Aufschmelzen von hochkristallinen Polymeren punktuell (am Ort des Eintrages) sowie über das gesamte Leitungssystem sehr hohe Energiemengen benötigt werden, was neben ökonomischen Effekten auch negative Folgen für die Prozessfähigkeit hat.

Hoch isotaktische bzw. syndiotaktische Polypropylen-Homo- bzw. Copolymere mit Ethylen und/oder höheren Olefinen, wie sie in den genannten Offenlegungen beschrieben werden, sind für den Einsatz als Schmelzkleber bzw. Klebrohstoff ungeeignet.

WO 01/46278 beschreibt 1-Olefincopolymere mit überwiegend amorphem Charakter, die durch Metallocenkatalyse erhalten werden, wobei zu ihrer Verwendung als Schmelzklebstoffe keine oder nur minimale Zusätze an Klebharzen notwendig sein sollen. Die Copolymere bestehen dabei aus A: 60 bis 94 % eines $C_3$-$C_6$ 1-Olefins, B: 6 - 40 mol-% eines oder mehrerer $C_4$-$C_{10}$ 1-Olefine und optional C:0 - 10 mol-% eines anderen ungesättigten Monomers (bevorzugt Ethylen). Durch die statistische Verteilung des Comonomers B wird die Kristallinität der Polymere besonders stark gestört, da nur noch wenige Bereiche die für eine Kristallisation notwendige Mindestblocklänge erreichen (siehe z. B. S. Davison, G.L. Taylor; Br. Polym. J.; 4 (1972); 65ff). Dies ist unter anderem auch an dem niedrigen Schmelzpunkt der beschriebenen Polymere zu erkennen. Weitgehend amorphe Polymere weisen zudem ein sehr unausgeglichenes Materialverhalten auf. Insbesondere ist die Kohäsion solcher Polymere im Verhältnis zur Adhäsion deutlich unterentwickelt, weshalb es bei den entsprechenden Klebverbindungen häufig zu kohäsivem Klebversagen kommt. Derartige Polymere mit niedrigem Schmelzpunkt führen außerdem in Verklebungen zu einem schlechten Wärmestand, was zahlreiche Einsatzgebiete ausschließt. Comonomere mit mehr als 4 Kohlenstoffatomen sind zudem sehr teuer, was die Produkte im Hinblick auf ihre Einsatzgebiete und die dort zu erzielenden Produktpreise unwirtschaftlich macht. Eine Aromatenfreiheit ist über das beschriebene Herstellungsverfahren schwer zu garantieren, zumal bevorzugt in aromatischen Lösungsmitteln polymerisiert wird und sich der verwendete Cokatalysator nicht in aliphatischen Lösungsmitteln löst. Die hohen Reaktionstemperaturen, welche (teilweise sehr weit) oberhalb der Schmelzpunkte der hergestellten Polymere liegen, führen zu sehr hohen Reaktionsdrücken, die einen wirtschaftlichen Betrieb des Polymerisationsverfahrens erschweren. Hinzu kommt, dass in weiten Teilen des angegebenen Prozessfensters ($T_R$ 40 - 250 °C, $p_R$ 10 - 3.000 bar) viele erfindungsgemäße Monomere im überkritischen Zustand vorliegen, was einen hohen technischen Aufwand zur Beherrschung des Prozesses erfordert, und die Wirtschaftlichkeit des Verfahrens weiter einschränkt.

Es besteht somit ein Bedarf an Bodenbelägen mit verbesserten Eigenschaften. Diese Aufgabe wird überraschenderweise durch die vorliegende Erfindung gelöst.

Ein erster Gegenstand der vorliegenden Erfindung ist die Verwendung von Polyolefinen in Bodenbelägen, wobei die Polyolefine maximal 30 ma-% Ethylen, entweder 70 - 100 ma-% oder maximal 30 ma-% Propylen und/oder entweder 70 - 100 ma-% oder maximal 25 ma-% 1-Buten enthalten, wobei die Summe der Anteile 100 ma-% beträgt, und die durch $^{13}C$-NMR bestimmte Triadenverteilung für Propentriaden einen ataktischen Anteil von 20 - 55 ma-%, einen syndiotaktischen Anteil von maximal 30 ma-% und einen isotaktischen Anteil von 40 - 80 ma-% aufweist und/oder die durch $^{13}C$-NMR bestimmte Triadenverteilung für 1-Butentriaden einen ataktischen Anteil von 2 - 85 ma-% und einen syndiotaktischen Anteil von maximal 20 ma-% aufweist. Die genannten Polyolefine werden in den Bodenbelägen insbesondere als oder in Klebstoffen eingesetzt.

Die Polyolefine werden insbesondere bevorzugt zur Noppen- und Filamenteinbindung und/oder zur Rückenbeschichtung eingesetzt. Die erfindungsgemäß eingesetzten Polyolefine haben bei Einsatz in Bodenbelägen den Vorteil, dass sich mit Ihrer Hilfe eine für die beabsichtige Anwendung besonders vorteilhafte Eigenschaftskombination erzielen lässt. Insbesondere sorgt die niedrige Schmelzviskosität für eine gute und vollständige Penetration der Teppichrohware durch den Schmelzklebstoff, was zusammen mit der besonders guten Adhäsion auf Polyolefinen zu einer besonders guten Noppen- bzw. Filament- bzw. Fasereinbindung führt. Gleichzeitig ermöglicht die Kombination aus niedrigem Molekulargewicht, hoher Klebscherfestigkeit auf unbehandelten Polyolefinen und hoher Flexibilität / Reißdehung besonders niedrige Auftragsgewichte, was das Herstellverfahren sowie den damit hergestellten Bodenbelag besonders wirtschaftlich macht.

Bei den erfindungsgemäßen Bodenbelägen handelt es sich vorzugsweise um textile oder nicht-textile Beläge, wobei es sich bei den nicht-textilen Belägen insbesondere um elastische Beläge handelt. Ganz besonders bevorzugt handelt es sich bei den Belägen um Teppiche oder Kunstrasen, wobei hier alle dem Fachmann bekannten Arten an Teppichen und Kunstrasen in Frage kommen.

Vorzugsweise weist bei den eingesetzten Polyolefinen die durch $^{13}C$-NMR bestimmte Triadenverteilung für Propentriaden (unter der Voraussetzung das das Polymer Propentriaden enthält) einen ataktischen Anteil von 20 - 55 ma-%, bevorzugt von 21 - 53 ma-%, besonders bevorzugt von 22 - 51 ma-% und insbesondere von 23 - 50 ma-%, bezogen auf die Propentriaden, auf.

Dadurch wird erreicht, dass die eingesetzten Polyolefine ein optimales Maß an Adhäsion auf allen relevanten Substraten, insbesondere aber auf Olefin-Homo- und -Copolymeren aufweisen sowie allein oder in Formulierungen eine hohe Flexibilität, insbesondere eine hohe Dehnbarkeit besitzen.

Ebenfalls vorzugsweise weist bei den Polyolefinen die durch $^{13}C$-NMR bestimmte Triadenverteilung für Propentriaden (unter der Voraussetzung das das Polymer Propentriaden enthält) einen isotaktischen Anteil von 40 - 80 ma-%, bevorzugt von 42 - 78 ma-%, besonders bevorzugt von 44 - 76 ma-% und insbesondere von 45 - 75 ma-%, bezogen auf die Propentriaden, auf.

Dadurch wird erreicht, dass die eingesetzten Polyolefine zusätzlich zu den adhäsiven Materialeigenschaften auch eine erhöhte Kohäsion und einen hohen Wärmestand aufweisen.

Ebenfalls vorzugsweise weist bei den Polyolefinen die durch $^{13}C$-NMR bestimmte Triadenverteilung für Propentriaden (unter der Voraussetzung das das Polymer Propentriaden enthält) einen syndiotaktischen Anteil von maximal

30 ma-%, bevorzugt von 1 - 27 ma-%, besonders bevorzugt von 3 - 25 ma-% und insbesondere von 5 - 23 ma-%, bezogen auf die Propentriaden, auf.

Dadurch wird erreicht, dass die eingesetzten Polyolefine zusätzlich zu den adhäsiven und kohäsiven Materialeigenschaften eine hohe Elastizität besitzen und beim Schmelzeauftrag einen optimalen Verlauf zeigen. Hinzu kommt eine verbesserte Transparenz, die insbesondere im Bereich der Folienverklebung erwünscht ist.

Insbesondere bevorzugt weist die durch $^{13}$C-NMR bestimmte Triadenverteilung für 1-Butentriaden (unter der Voraussetzung das das Polymer 1-Butentriaden enthält) einen isotaktischen Anteil von 20 - 98 ma-%, bevorzugt von 22 - 96 ma-%, besonders bevorzugt von 24 - 94 ma-% und insbesondere von 25 - 92 ma-%, bezogen auf die 1-Butentriaden, auf. Dadurch wird erreicht, dass die eingesetzten Polyolefine ein optimal ausbalanciertes Abbindeverhalten aufweisen. Im Vergleich mit isotaktischen Propyleneinheiten kristallisieren die isotaktischen 1-Buteneinheiten langsamer. Der erfindungsgemäße isotaktische Anteil garantiert eine optimale Anfangsfestigkeit. Durch die zeitverzögerte Phasenumwandlung von tetragonalen Phase 11-Kristalliten in hexagonale Phase I-Kristallite zeigen die Polymere nach der Abkühlung aus der Schmelze über einen relativ langen Zeitraum eine hohe Flexibilität, was sich insbesondere im Bereich der Schmelzklebstoffe für die Noppen- und/oder Filamenteinbindung und insbesondere auch für die Teppichrückenbeschichtung positiv auswirkt, insbesondere für den Fall, dass der beschichtete Teppich aufgerollt wird. Insbesondere bevorzugt weist die durch $^{13}$C-NMR bestimmte Triadenverteilung für 1-Butentriaden (unter der Voraussetzung das das Polymer 1-Butentriaden enthält) einen syndiotaktischen Anteil von maximal 20 ma-%, bevorzugt von maximal 18 ma-%, besonders bevorzugt von maximal 16 ma-% und insbesondere von 1 - 15 ma-%, bezogen auf die 1-Butentriaden, auf.

Dadurch wird erreicht, dass die eingesetzten Polyolefine eine hohe Elastizität besitzen und beim Schmelzeauftrag einen optimalen Verlauf zeigen. Hinzu kommt eine verbesserte Transparenz, die insbesondere im Bereich der Folienverklebung erwünscht ist.

Weiterhin bevorzugt weist die durch $^{13}$C-NMR bestimmte Triadenverteilung für 1-Butentriaden (unter der Voraussetzung das das Polymer 1-Butentriaden enthält) einen ataktischen Anteil von maximal 85 ma-%, bevorzugt von 2 - 80 ma-%, besonders bevorzugt von 4 - 75 ma-% und insbesondere von 5 - 70 ma-% bezogen auf die 1-Butentriaden, auf. Dadurch wird erreicht, dass die eingesetzten Polyolefine ein optimales Maß an Adhäsion auf allen relevanten Substraten, insbesondere aber auf Olefin-Homo- und -Copolymeren aufweisen sowie allein oder in Formulierungen eine hohe Flexibilität, insbesondere eine hohe Dehnbarkeit besitzen.

Zusätzlich bevorzugt weist die durch $^{13}$C-NMR bestimmte Triadenverteilung bei der Untersuchung von erfindungsgemäß hergestellten Poly(ethylen-co-propylen-co-1-buten)-Terpolymeren für Ethylengehalte bis 30 ma-% einen Anteil an Ethylentriaden von 0,1 - 10 ma-%, bevorzugt 0,25 - 7,5 ma-% besonders bevorzugt 0,3 - 7 ma-%, insbesondere bevorzugt 0,4 - 6,8 ma-%, bezogen auf den Ethylenanteil, auf, so dass das Monomer Ethylen also entweder weitgehend statistisch über die Polymerkette verteilt oder blockartig eingebaut wird.

Dadurch wird erreicht, dass sich die Kristallinität und das Materialverhalten der Polymere gezielt einstellen lassen. Bei einer statistischen Verteilung über die Polymerkette erfolgt eine starke Störung der Kristallinität, da die für eine Kristallisation notwendige Mindestblocklänge der unterschiedlichen Monomereinheiten häufig unterschritten wird. Bei blockartiger Kombination mit isotaktischen Propyleneinheiten kommt es zu einer "hart-weich"-Blockbildung, da die Ethylenblöcke im Gegensatz zu den Propylenblöcken nicht die für eine "eigene" Kristallisation notwendige Mindestblocklänge erreichen.

Die eingesetzten Polyolefine enthalten vorzugsweise maximal 30 ma-% bevorzugt maximal 25 ma-% und besonders bevorzugt maximal 23 ma-% und ganz besonders bevorzugt maximal 20 ma-% Ethylen.

In einer bevorzugten Ausführungsform der vorliegenden Erfindung enthalten die eingesetzten Polyolefine 100 ma-% Propylen oder 1-Buten.

In einer weiteren bevorzugten Ausführungsform der vorliegenden Erfindung handelt es sich bei den eingesetzten Polyolefinen insbesondere um Copolymere aus Ethylen, Propylen und/oder 1-Buten, wobei die Copolymere maximal 30 ma-% bevorzugt maximal 25 ma-% und besonders bevorzugt maximal 22 ma-% und ganz besonders bevorzugt maximal 20 ma-% Ethylen enthalten. Für den Propylen- beziehungsweise Butenanteil gibt es mehrere alternative Möglichkeiten. Entweder liegt der Propylenanteil bei 70 - 98 ma-%, bevorzugt zwischen 72 - 95 ma-% oder der Propylenanteil liegt bei maximal 30 ma-%, bevorzugt zwischen 1 - 27 ma-% und besonders bevorzugt zwischen 2 - 25 ma-%. Der Butenanteil liegt entweder bei 70 - 98 ma-%, bevorzugt zwischen 75 - 95 ma-% oder bei maximal 25 ma-%, bevorzugt zwischen 1 - 23 ma-% und besonders bevorzugt zwischen 2 - 20 ma-%. In Summe muss der Anteil aller genannten Comonomere 100 ma-% ergeben, das heißt, entweder sind die eingesetzten Polyolefine Propylen- oder Butenreicher, wobei die genannten Monomere beliebig miteinander kombiniert werden können, also Propylen mit Buten und/oder Ethylen.

Insbesondere handelt es sich bei den eingesetzten Polyolefinen um Poly(ethylen-co-propylen)-Copolymere mit einem Ethylenanteil von maximal 30 ma-%, um Poly(ethylen-co-1-buten)-Copolymere mit einem Ethylenanteil von maximal 30 ma-%, um Poly(propylen-co-1-buten)-Copolymere mit einem Propylenanteil von maximal 30 ma-% oder um Poly(propylen-co-1-buten)-Copolymere mit einem 1-Butenanteil von maximal 25 ma-%.

In einer besonderen Ausführungsform der vorliegenden Erfindung enthalten die Copolymere Propylen, 1-Buten

und/oder Ethylen sowie ein verzweigtes Olefin ausgewählt aus der Gruppe umfassend 3-Methyl-1-buten, 4-Methyl-1-penten, 3-Methyl-1-hexen, 6-Methyl-1-hexen, 3-Methyl-1-hepten, wobei der Anteil des verzweigten 1-Olefins im Copolymer maximal 50 ma-%, bevorzugt maximal 40 ma-% und besonders bevorzugt maximal 30 ma-% beträgt.

Für den ebenfalls bevorzugten Fall eines Terpolymers enthält dieses insbesondere Ethylen, Propylen und 1-Buten, wobei eines der drei Comonomere einen Anteil von mindestens 70 ma-% aufweist, während die beiden anderen Monomere zusammen einen Anteil von 30 ma-% bilden. Die Terpolymere enthalten einen Anteil von maximal 28 ma-%, bevorzugt maximal 25 ma-%, besonders bevorzugt maximal 23 ma-% Ethylen.

Folgende Unterkombinationen für die oben genannten Copolymere und Terpolymere sind dabei insbesondere bevorzugt: Poly(ethylen-co-propylen), Poly(ethylen-co-1-buten), Poly(propylen-co-1-buten), Poly(propylen-co-3-methyl-1-buten), Poly(1-buten-co-3-methyl-1-buten), Poly(propylen-co-3-methyl-1-hexen), Poly(propylen-co-3-methyl-1-hepten), Poly(ethylen-co-propylen-co-1-buten) und Poly(ethylen-co-propylen-co-3-methyl-1-buten).

Die eingesetzten Polyolefine liegen nach entsprechender Konfektionierung bevorzugt in Form eines Pulvers, in Form von Pellets oder in Form eines Granulates vor. Die direkte Weiterverarbeitung von schmelzflüssigem Polymer zu den erfindungsgemäßen Produkten ist ebenfalls möglich.

Die eingesetzten Polyolefine enthalten vorzugsweise keine aus dem Polymerisationsprozess stammenden aromatischen Verbindungen (d. h. < 100 $\mu$g/g). Darüber hinaus enthalten Sie im Wesentlichen keine organischen halogenierten Verbindungen, die aus dem

Polymerisationsprozess stammen. Ebenfalls bevorzugt ist, dass die Polymere keine Verunreinigungen durch Suspendieröle (Trennmittel), keine Reste anorganischer Trägermaterialien, insbesondere keine anorganischen Oxide und/oder Erdalkalimetallhalogenide (wie z. B. $MgCl_2$), keine anorganischen oder organischen Borverbindungen, keine Talcite und/oder Hydrotalcite und/oder deren Abbauprodukte sowie keine Verunreinigungen durch Alkohole, insbesondere durch Methanol enthalten. Dadurch wird einerseits erreicht, dass die eingesetzten Polyolefine frei von toxischen Verbindungen sind und sich in optimaler Weise auch für eine Verwendung in sensiblen Bereichen wie z. B. Teppich/Fußbodenbeläge und/oder anderen Anwendungen im Automobilinnenraum usw. eignen. Andererseits werden die negativen Auswirkungen, die die oben genannten Hilfs- und Begleitstoffe auf die Thermostabilität (insbesondere Farbstabilität) und die Klebeigenschaften der Polymere haben, ausgeschlossen.

Die Molmassenverteilung der eingesetzten Polyolefine kann monomodal oder bimodal sein, insbesondere bevorzugt ist die Molmassenverteilung monomodal.

Polymere mit monomodaler Molmassenverteilung zeichnen sich (insbesondere bei niedriger Polydispersität) durch eine geringe Varianz der Materialeigenschaften aus. So weisen monomodal verteilte Polyolefine beispielsweise ein klar definiertes Aufschmelz- und Abbindeverhalten auf. Bei sehr enger Molmassenverteilung lässt sich ein definiertes Aufschmelz-/Abbindeverhalten auch mit bimodal verteilten Polymeren erreichen, insbesondere wenn längere offene Zeiten gefordert sind und/oder keine scharfen Schmelzpeaks auftreten dürfen (z. B. bei langen Fügezeiten oder schwankender Applikationstemperatur).

Weiterhin weisen die eingesetzten Polyolefine eine Polydispersität, bestimmt durch Hochtemperatur-Gelpermeationschromatographie mit universeller Kalibrierung von 1,3 - 4, bevorzugt von 1,4 - 3,5, besonders bevorzugt von 1,4 - 3,0 , insbesondere von 1,4 - 2,9 und ganz besonders bevorzugt von 1,5 - 2,7 auf. Dieser Bereich ist besonders vorteilhaft, insbesondere für die Anwendung im Klebstoffbereich. Das Kristallisations- bzw. Aufschmelzverhalten bei Polymeren, insbesondere bei Polyolefinen ist bekannter Maßen eine Funktion der Molmasse, bei linearen Polyolefinen insbesondere der Kettenlänge. So ist z. B. von klassischen amorphen Polyolefinen, wie sie derzeit im Bereich der Heißschmelzkleber eingesetzt werden, bekannt, dass eine Polydispersität von 4 - 6 (oder noch höher) zu einem sehr breiten Aufschmelzbereich einerseits und zu einer verzögerten physikalischen Aushärtung/Kristallisation andererseits führt. Letzteres ist für Heißschmelzkleber, die im für die Herstellung von Bodenbelägen eingesetzt werden sollen, besonders nachteilig (insbesondere dann, wenn nach dem Auftrag des Schmelzklebers bzw. der Teppichbeschichtung ein Aufrollen des Teppichs erfolgen soll), weil die Polymere dadurch eine teilweise extrem lange offene Zeit (das ist die Zeit, in der eine starke Klebrigkeit des Polymers infolge von noch nicht bzw. nicht vollständig kristallisierten Bestandteilen vorliegt) aufweisen. Für die Verarbeitung in schnell laufenden Verarbeitungsmaschinen für die Herstellung von Bodenbelägen sind derartige Polymere nicht geeignet. Ein zusätzlicher Nachteil der bekannten Systeme ist, dass Polymere mit breiter Molmassenverteilung infolge der beschriebenen Kristallisationsdefizite häufig auch schlechte Zugfestigkeiten zeigen, was insbesondere für Klebstoffe, die in der Noppen- und/oder Filamenteinbindung eingesetzt werden, ebenfalls unerwünscht ist. Generell ist eine breite Molmassenverteilung ein Zeichen dafür, dass kein einheitliches Polymer sondern vielmehr eine Polymermischung (bzw. ein Polymerblend) vorliegt, was bekannter Maßen zu Einschränkungen bei den Materialeigenschaften führt.

Die gewichtsmittlere Molmasse der eingesetzten Polyolefine, bestimmt durch Hochtemperatur-Gelpermeationschromatographie mit universeller Kalibrierung, liegt üblicherweise im Bereich von 10000 bis 150000 g/mol, bevorzugt von 12000 bis 130000 g/mol, besonders bevorzugt im Bereich von 14000 bis 120000 g/mol und insbesondere bevorzugt im Bereich von 15000 bis 110000 g/mol. Dieser Bereich ist besonders vorteilhaft, insbesondere für die Anwendung im Klebstoffbereich. Die eingesetzten Polyolefine verfügen auf Grund ihrer Molmasse und ihrer Molmassenverteilung über

eine optimale Schmelzviskosität im relevanten Applikationsfenster, so dass eine optimale Benetzung der zu verklebenden Oberfläche erfolgt. Die relativ niedrige Schmelzviskosität ermöglicht außerdem eine Penetration in makroskopische und mikroskopische Oberflächenstrukturen, was die Haftung der Klebschicht erheblich verbessert. Für Anwendungen im Bereich der Noppen- und/oder Filamenteinbindung, liegt die gewichtsmittlere Molmasse mindestens eines der enthaltenen erfindungsgemäßen Polyolefine insbesondere zwischen 10000 und 50000 g/mol, bevorzugt zwischen 10000 und 40000 g/mol, besonders bevorzugt zwischen 10000 und 35000 g/mol und insbesondere bevorzugt zwischen 10000 und 30000 g/mol. Erfindungsgemäße Polyolefine mit gewichtsmittleren Molmassen von > 75000 g/mol eignen sich insbesondere auch für die Verwendung in Formmassen, wie sie z. B. für Teppichschwermassen und/oder Teppichrückenbeschichtungen eingesetzt werden können. Polymere höherer Molekularität weisen, insbesondere im Fall linearer Polyolefine, eine hohe bis sehr hohe Schmelzviskosität auf. Dies ist für viele Anwendungen, wie z. B. die Herstellung von Formkörpern oder auch die Herstellung von Filmen und Folien durchaus erwünscht, weil sie den Produkten eine hohe Steifigkeit sowie eine hohe Zugfestigkeit verleihen. Für die Anwendung als Rohstoffe für Heißschmelzkleber, sind derartige Materialien jedoch vollkommen ungeeignet. Insbesondere weisen sie eine nur zögernde Kristallisation (infolge von Kettenverschlaufungen) sowie eine schlechte Applizierbarkeit und ein schlechtes Verlaufsbild auch beim Raupen- oder Rakelauftrag auf. Sie lassen sich zudem mit den gängigen Verarbeitungs- bzw. Applikationsmaschinen im Heißschmelzklebstoffbereich auf Grund ihrer hohen Schmelzviskosität gar nicht verarbeiten, da in vielen Fällen eine Pumpbarkeit bei vertretbaren Temperaturen nicht gegeben und zudem ein sehr hoher Druckaufbau in den Rohrleitungen zu verzeichnen ist. Im Gegensatz dazu zeigen Polymere mit sehr niedrigerer Molekularität auch im erkalteten Zustand keine ausreichende Kohäsion, und weisen ein wachsartiges Verhalten auf. Sie sind somit insbesondere nicht für den Einsatz im Bereich der Schmelzklebstoffe geeignet. Niedermolekulare Bestandteile neigen außerdem zum "Ausbluten" durch Diffusion, was eine Klebverbindung stark schwächt und zu deren Versagen führt. In Bereichen mit anspruchsvollen Vorgaben bezüglich der Freisetzung organischer flüchtiger Stoffe, wie z. B. bei Autoteppichen oder Bodenbelägen für Wohnräume, können Klebstoffsysteme bzw. Schwermassen, die hohe Anteile an niedermolekularen Verbindungen aufweisen, vielfach auch aus rechtlichen bzw. regulatorischen Gründen nicht eingesetzt werden.

Weiterhin zeichnen sich die eingesetzten Polyolefine dadurch aus, dass sie einen ALPHAWERT, bestimmt durch Hochtemperatur-Gelpermeationschromatographie mit universeller Kalibrierung, im Bereich von 0,5 bis 1,2, bevorzugt im Bereich von 0,55 bis 1,15, besonders bevorzugt im Bereich von 0,58 bis 1,1 und insbesondere bevorzugt im Bereich von 0,6 bis 1,05 aufweisen. Die eingesetzten Polyolefine zeichnen sich somit durch eine geringe Verzeigungsneigung aus, insbesondere enthalten sie bevorzugt keine Langkettenverzeigungen. Verzweigte Polymere zeigen auf Grund ihrer Molekülstruktur ein hochkomplexes rheologisches Verhalten, was zu einer schlechten Applizierbarkeit aus der Schmelze, einer mangelhaften Penetration in die Teppichrohware und einem schlechten Verlauf, insbesondere bei Rakel- und Sprühauftrag, führt.

In einer besonders bevorzugten Ausführungsform liegt der durch Hochtemperatur-Gelpermeationschromatographie mit universeller Kalibrierung bestimmte ALPHAWERT zwischen 0,55 und 0,80, bevorzugt zwischen 0,57 und 0,79, und insbesondere bevorzugt zwischen 0,58 und 0,78, während gleichzeitig die ebenfalls durch Hochtemperatur-Gelpermeationschromatographie mit universeller Kalibrierung bestimmte Polydispersität der erfindungsgemäßen Polymere zwischen 2,0 und 3,5, bevorzugt zwischen 2,1 und 3,4 , besonders bevorzugt zwischen 2,2 und 3,3 und insbesondere bevorzugt zwischen 2,3 und 3,2 liegt.

In einer weiteren besonders bevorzugten Ausführungsform liegt der durch Hochtemperatur-Gelpermeationschromatographie mit universeller Kalibrierung bestimmte ALPHAWERT zwischen 0,7 und 1,1, bevorzugt zwischen 0,75 und 1,08, besonders bevorzugt zwischen 0,8 und 1,06 und insbesondere bevorzugt zwischen 0,82 und 1,05, während gleichzeitig die ebenfalls durch Hochtemperatur-Gelpermeationschromatographie mit universeller Kalibrierung bestimmte Polydispersität der erfindungsgemäßen Polymere bei maximal 3, bevorzugt bei maximal 2,5, besonders bevorzugt bei maximal 2,3 und insbesondere bevorzugt bei maximal 2,0 liegt.

Vorzugsweise liegt der bei der Untersuchung durch Hochtemperatur-Gelpermeationschromatographie mit universeller Kalibrierung gefundene Anteil an niedermolekularen Bestandteilen mit einem Molekulargewicht von 500 bis 1000 Dalton bei maximal 0,4 ma-%, bevorzugt bei maximal 0,3 ma-%, besonders bevorzugt bei maximal 0,2 ma-%, insbesondere bei maximal 0,15 ma-%. Ganz besonders bevorzugt können durch die beschriebene Methode keine Bestandteile mit einem Molekulargewicht von 500 bis 1000 Dalton detektiert werden. Dadurch wird erreicht, dass die eingesetzten Polyolefine keine Polymerbestandteile enthalten, die zur Migration z. B. an die Oberfläche und/oder die Grenzfläche neigen. Eine derartige Migration (auch als "Ausbluten" bezeichnet) führt infolge der Trennwirkung niedermolekularer Polymerbestandteile zu einer starken Schwächung einer Klebverbindung, die dieses Polymer enthält. Hinzu kommt, dass Stoffe mit migrierenden bzw. bei Raumtemperatur flüchtigen Bestandteilen in vielen Bereichen auf Grund von gesetzlichen Regularien nicht eingesetzt werden dürfen.

Weiterhin bevorzugt ist der bei der Untersuchung durch Hochtemperatur-Gelpermeationschromatographie mit universeller Kalibrierung gefundene Anteil an niedermolekularen Bestandteilen mit einem Molekulargewicht von < 500 Dalton bei maximal 0,4 ma-%, bevorzugt bei maximal 0,3 ma-%, besonders bevorzugt bei maximal 0,20 ma-%, insbesondere bei maximal 0,15 ma-%. Ganz besonders bevorzugt können mit der beschriebenen Methode keine Bestandteile

mit einem Molekulargewicht von weniger als 500 Dalton detektiert werden. Insbesondere im Kfz-Innenraum besteht die Problematik, dass niedermolekulare Polymerbestandteile mit sehr geringen Molmassen aus der Klebschicht austreten und verdampfen, was zu einem unerwünschten "Fogging"-Phänomen führt. Für derartige Anwendungen sind Polymere, die niedermolekulare Bestandteile mit geringen Molmassen enthalten daher nicht geeignet, es existieren sehr strenge Grenzwerte der Automobilhersteller. Gleiches gilt für den Bereich der Bodenbeläge in Wohn- und Geschäftsräumen.

Weiterhin zeichnen sich die eingesetzten Polyolefine dadurch aus, dass sie bei einer Temperatur von 190 °C, einer Deformation von maximal 1 % und einer Messfrequenz von 1 Hz eine komplexe Schmelzviskosität von 500 bis 100000 mPa*s, bevorzugt von 600 bis 75000 mPa*s, besonders bevorzugt von 700 bis 50000 mPa*s und insbesondere bevorzugt von 800 bis 40000 mPa*s aufweisen, wobei Schmelzviskositäten von 500 bis 10000 mPa*s, 600 bis 7500 mPa*s, 700 bis 5500 mPa*s, insbesondere 800 bis 3500 mPa*s ganz besonders bevorzugt sind.

Für den Bereich der Teppichrückenbeschichtung (z. B. durch Schwermassen) sind insbesondere Polymere mit einer Schmelzviskosität von > 40000 mPa*s bevorzugt, besonders bevorzugt > 50000 mPa*s und insbesondere bevorzugt > 60000 mPa*s. Für den Bereich der Noppen- und Filamenteinbindung sind insbesondere Polymere mit einer Schmelzviskosität (gemessen unter den oben genannten Bedingungen) von 600 bis 3500 mPa*s besonders bevorzugt.

Für Sprühapplikationen sind insbesondere Polymere mit einer Schmelzviskosität (gemessen unter den oben genannten Bedingungen) von 600 bis 5500 mPa*s besonders bevorzugt.

In einer besonderen, bevorzugten Ausführungsform werden für die Herstellung der erfindungsgemäßen Bodenbeläge die erfindungsgemäßen Polyolefine sowohl für die Noppen- und/oder Filamenteinbindung als auch für die Teppichrückenbeschichtung eingesetzt, wobei sich die Eigenschaften der erfindungsgemäß eingesetzten Polyolefine wie folgt unterscheiden.

Für die Noppen- und/oder Filamenteinbindung wird demnach bevorzugt mindestens ein erfindungsgemäßes Polyolefin eingesetzt, dass eine durch Gelpermeationschromatographie mit universeller Kalibrierung bestimmte gewichtsmittlere Molmasse von < 40000 g/mol, bevorzugt < 35000 g/mol, besonders bevorzugt < 32000 g/mol und insbesondere bevorzugt von < 30000 g/mol aufweist, während gleichzeitig die ebenfalls durch Gelpermeationschromatographie mit universeller Kalibrierung bestimmte Polydispersität maximal 3, bevorzugt maximal 2,8, besonders bevorzugt maximal 2,5 und insbesondere bevorzugt bei weniger als 2,2 beträgt, während gleichzeitig die durch Oszillationsrheometrie (Deformation maximal 1 %, Messfrequenz 1 Hz) bestimmte Schmelzviskosität bei 190 °C maximal 10000 mPa*s, bevorzugt maximal 7500 mPa*s, besonders bevorzugt maximal 5000 mPa*s und insbesondere bevorzugt weniger als 4000 mPa*s beträgt, während gleichzeitig_die durch Gelpermeationschromatographie mit universeller Kalibrierung bestimmten niedermolekularen Anteile von 1000 bis 500 Dalton und < 500 Dalton je maximal 0,2 ma-%, bevorzugt je maximal 0,15 ma-%, besonders bevorzugt je maximal 0,1 ma-% und insbesondere bevorzugt weniger als je 0,05 ma-% betragen.

Für die Teppichrückenbeschichtung (z. B. in einer Schwermasse) wird demnach bevorzugt mindestens ein erfindungsgemäßes Polyolefin eingesetzt, dass eine durch Gelpermeationschromatographie mit universeller Kalibrierung bestimmte gewichtsmittlere Molmasse von > 40000 g/mol, bevorzugt > 45000 g/mol, besonders bevorzugt > 50000 g/mol und insbesondere bevorzugt von > 60000 g/mol aufweist, während gleichzeitig die ebenfalls durch Gelpermeationschromatographie mit universeller Kalibrierung bestimmte Polydispersität maximal 3, bevorzugt maximal 2,8, besonders bevorzugt maximal 2,5 und insbesondere bevorzugt bei weniger als 2,2 beträgt, während gleichzeitig die durch Oszillationsrheometrie (Deformation maximal 1 %, Messfrequenz 1 Hz) bestimmte Schmelzviskosität bei 190 °C mindestens 40000 mPa*s, bevorzugt mindestens 50000 mPa*s, besonders bevorzugt mindestens 60.000 mPa*s und insbesondere bevorzugt mehr als 65000 mPa*s beträgt, während gleichzeitig die durch Gelpermeationschromatographie mit universeller Kalibrierung bestimmten niedermolekularen Anteile von 1000 bis 500 Dalton und < 500 Dalton je maximal 0,2 ma-%, bevorzugt je maximal 0,15 ma-%, besonders bevorzugt je maximal 0,1 ma-% und insbesondere bevorzugt weniger als je 0,05 ma-% betragen.

Als Maßstab für die Strukturviskosität der eingesetzten Polyolefine kann das Verhältnis der Schmelzviskosität gemessen bei 190 °C und einer Deformation von maximal 1 % bei einer Schergeschwindigkeit von 10 Hz und einer Schergeschwindigkeit von 0,1 Hz dienen. Dieses Verhältnis liegt für die eingesetzten Polyolefine zwischen 1 : 1 und 1 : 10, bevorzugt zwischen 1 : 1,05 und 1 : 8, besonders bevorzugt zwischen 1 : 1,075 und 1 : 6 und besonders bevorzugt zwischen 1 : 1,1 und 1 : 5.

Die eingesetzten Polyolefine weisen also eine optimale Balance zwischen Verarbeitbarkeit und Verlaufseigenschaften auf. Insbesondere ist für die Verarbeitbarkeit einer Polymerschmelze im Heißschmelzklebstoffbereich (z. B. beim Versprühen) wichtig, dass die Viskosität im Applikationswerkzeug (z. B. Sprühpistole), in dem meist hohe Schergeschwindigkeiten herrschen, niedrig ist, und sich das Material somit gut transportieren und verteilen lässt.

Für den Verlauf der applizierten Polymerschmelze auf dem Substrat hingegen ist eine Erhöhung der Viskosität bei Wegfall der Scherung wichtig, damit kein Verlauf der Polymerschmelze über den besprühten Bereich hinaus stattfindet. Die Erhöhung muss jedoch in engen Grenzen erfolgen, da ansonsten keine Coagulation der einzelnen Sprühpartikel stattfindet.

Eine wichtige Kenngröße für Schmelzklebstoffe bzw. Klebrohstoffe ist das temperaturabhängige rheologische

Verhalten. Dieses ist beispielsweise durch das Vermessen einer Abkühlkurve im Oszillationsrheometer zugänglich, wobei auf eine sehr geringe Deformation (max. 1 %) und eine langsame Abkühlgeschwindigkeit (1,5 K/min) zu achten ist. Die aus der Abkühlkurve erhältlichen Messwerte sind denen aus Aufheizkurven erhaltenen (insbesondere aus Kurven beim ersten Aufheizen) bezüglich ihrer Reproduzierbarkeit deutlich überlegen, da durch das vorhergehende Aufschmelzen einerseits die thermische Vorgeschichte der Polymerprobe nivelliert wird, und andererseits eine optimale Benetzung der Messkörperoberfläche durch die Schmelze erfolgt, wodurch Reibungs- und Rutscheffekte zwischen Messkörper und Probe ausgeschlossen sind. Hinzu kommt, dass bei den hohen Temperaturen beim Start der Messung (also in der Schmelze) die Deformationsanfälligkeit (d. h. die Gefahr einer irreversiblen Morphologieänderung) der Polymerprobe deutlich geringer als im festen Zustand ist, so dass nur auf diese Weise ein Verbleib innerhalb des linear viskoelastischen Bereiches der Polymerprobe zu gewährleisten ist. Weiterhin ist anzuführen, dass die rheologischen Materialzustände während einer Verklebung mittels Heißschmelzklebstoffen ohnehin nur über eine Abkühlkurve realistisch abgebildet werden können, da dies der vorliegende Zustand während der Verklebung ist.

Zusätzlich zeichnen sich die eingesetzten Polyolefine dadurch aus, dass die durch Oszillationsrheometrie bei einer Scherfrequenz von 1 Hz bestimmte minimale rheologische Verarbeitungstemperatur (Crosspoint, Schnittpunkt von Speichermodul und Verlustmodul) bei maximal 160 °C, bevorzugt bei maximal 140 °C, besonders bevorzugt bei maximal 135 °C und insbesondere bevorzugt bei maximal 125 °C liegt. Die eingesetzten Polyolefine weisen demnach optimale rheologische Verarbeitungseigenschaften im für Heißschmelzklebstoffe relevanten Verarbeitungsbereich von 100 - 220 °C auf. Liegt das Verlustmodul über dem Speichermodul kann unter Anwendung von Scherenergie das Polymer zum Fließen gebracht und dauerhaft deformiert werden. Liegt dagegen der Speichermodul höher, sind die elastischen Rückstellkräfte so groß, dass keine störungsfreie Applikation möglich ist.

Als rheologisches Kennzeichen des optimalen Verarbeitungsfensters kann das Verhältnis von Speicher- und Verlustmodul im Temperaturbereich vom Ende des Schmelzpunktes bis ca. 220 °C herangezogen werden. Für eine störungsfreie Applikation aus der Schmelze muss im Verarbeitungsfenster das Verlustmodul G " (als Synonym für die viskosen Materialeigenschaften) deutlich über dem Speichermodul G' (als Synonym für die elastischen Materialeigenschaften) liegen. Das Verhältnis von Speichermodul G' zu Verlustmodul G" liegt für die anspruchsgemäßen Polymerisate bei einer Schergeschwindigkeit von 1 Hz im Temperaturbereich vom Ende des höchsten Schmelzpeaks (Offset / DSC) bis ca. 220 °C zwischen 1 : 1 und 1 : 10000, bevorzugt zwischen 1 : 1,25 und 1 : 5000, besonders bevorzugt zwischen 1 : 1,5 und 1 : 2500 und insbesondere bevorzugt zwischen 1 : 2 und 1 : 1000.

Ebenfalls bevorzugt liegt die durch Oszillationsrheometrie bestimmte minimale Schergeschwindigkeit ab der das Verlustmodul oberhalb des Speichermoduls liegt (Crosspoint) und somit eine rheologische Verarbeitbarkeit der Schmelze vorliegt bei Verarbeitungstemperatur bei maximal 10 Hz, bevorzugt bei maximal 5 Hz, besonders bevorzugt bei maximal 1 Hz und insbesondere bevorzugt bei maximal 0,1 Hz. Insbesondere bevorzugt weist die frequenzabhängige Messung von Speichermodul G' und Verlustmodul G" durch Oszillationsrheometrie (Probendeformation maximal 1 %) bei Verarbeitungstemperatur im Frequenzbereich von 0,1 bis 10 Hz keinen Schnittpunkt (sog. "Crosspoint") von G' und G" auf, wobei G" im gesamten Frequenzbereich größer als G' ist. Dadurch wird erreicht, dass die eingesetzten Polyolefine bei Verarbeitungstemperatur schon mit relativ geringer Scherenergie in den Fließzustand gebracht werden können. Dies ist insbesondere bei der Verarbeitung der Schmelze durch Sprühen wichtig, und zwar sowohl innerhalb der Verarbeitungsmaschine (wodurch ein störungsfreier Transport der Schmelze ohne übermäßigen Druckaufbau gewährleistet wird) als auch auf der Applikationsfläche (wo bei geringen Scherbeanspruchungen der Verlauf des Klebstoffes erfolgen muss).

Die Nadelpenetration der eingesetzten Polyolefine liegt bei maximal 60 * 0,1 mm, bevorzugt im Bereich von 1 - 58 *0,1 mm, besonders bevorzugt von 3 - 56 *0,1 mm und insbesondere bevorzugt von 5 - 55 *0,1 mm, wobei Wertebereiche von 1 - 30 * 0,1 mm, 1 - 28 * 0,1 mm, 2 - 26 * 0,1 mm, 3 - 24 * 0,1 mm, 3 - 20 * 0,1 mm, 4 - 17 * 0,1 mm, 5 - 16 * 0,1 mm und insbesondere 6 - 15 * 0,1 mm ganz besonders bevorzugt sind. Dadurch wird erreicht, dass die eingesetzten Polyolefine ein optimales Verhältnis von Festigkeit und Plastizität aufweisen. Hochkristalline Polyolefine weisen eine Nadelpenetration von < 1 * 0,1 mm auf und sind daher sehr hart und im ungeschmolzenen Zustand nicht plastisch verformbar also unflexibel. Überwiegend amorphe Polyolefine weisen eine Nadelpenetration von > 60*0,1 mm auf und zeigen daher keine ausreichende Festigkeit.

Die eingesetzten Polyolefine sind teilkristalliner Natur, weisen also einen kristallinen Anteil auf. Dies zeigt sich in Schmelzpeaks beim ersten und/oder zweiten Aufheizen der Polymere in der DSC. Unabhängig von der Anzahl und Ausprägung der Schmelzpeaks liegen die Schmelzpeakmaxima für die erfindungsgemäßen Polyolefine bei der Vermessung mittels Differentialkalorimeter (DSC) in der 1.Aufheizung zwischen 35 und 140 °C. Es ist bevorzugt, dass bei der Vermessung im Differentialkalorimeter (DSC) beim ersten Aufheizen 1 - 3 Schmelzpeaks detektiert werden können, wobei im Falle von drei Schmelzpeaks das erste Schmelzpeakmaximum bei Temperaturen von 35 - 50 °C liegt, das zweite bei Temperaturen von 50 - 115 °C und das dritte bei Temperaturen von 70 -140 °C, besonders bevorzugt bei Temperaturen von 75 -135 °C. Treten nur zwei Schmelzpeaks auf, so liegt das erste Schmelzpeakmaximum zwischen 40 und 110 °C, das zweite zwischen 55 und 140 °C, besonders bevorzugt von 58 - 137 °C. Tritt nur ein Schmelzpeak auf, so liegt das Schmelzpeakmaximum zwischen 40 und 140 °C, bevorzugt zwischen 60 und 140 °C, besonders

bevorzugt zwischen 70 und 140 °C und insbesondere bevorzugt zwischen 78 und 138 °C.

Unabhängig von der Anzahl und Ausprägung der Schmelzpeaks liegen die Schmelzpeakmaxima für die erfindungsgemäßen Polyolefine bei der Vermessung mittels Differentialkalorimeter (DSC) in der 2. Aufheizung zwischen 50 und 140 °C. Bei der zweiten Aufheizung im Differentialkalorimeter weisen die erfindungsgemäß hergestellten Polymere bevorzugt 0, 1 oder 2 Schmelzpeaks auf. Bei zwei Schmelzpeaks liegt das erste Schmelzpeakmaximum bei 50 bis 110 °C, das zweite Schmelzpeakmaximum bei 70 -140 °C, besonders bevorzugt von 73 - 135 °C. Ist nur ein Schmelzpeak vorhanden, so liegt die Schmelztemperatur bei 60 bis 140 °C, besonders bevorzugt von 62 - 137 °C. Je nach Copolymerzusammensetzung weisen die Polymere eine Neigung zur Kaltkristallisation auf, wobei (sofern vorhanden) der exotherme Kaltkristallisationspeak beim 2. Aufheizen zwischen 5 und 40 °C liegt. Dadurch wird erreicht, dass die eingesetzten Polyolefine ein optimales Verhältnis von kristallinen und nicht kristallinen Einheiten aufweisen und sowohl im Belastungs- als auch im Verarbeitungsfall optimale thermische Eigenschaften zeigen. Im Belastungsfall kommt es bei erhöhten Temperaturen je nach Polymerzusammensetzung zu einem mehr oder weniger stark ausgeprägten partiellen Aufschmelzen bevor die Klebverbindung insgesamt aufschmilzt. Dadurch ist auch ohne das vollständige Lösen (Aufschmelzen) der Klebverbindung eine plastische Verformung möglich, was vor allem bei strukturellen Verklebungen und zeitlich begrenzter Fixierung von Vorteil ist. Ist dies nicht gewünscht so können die eingesetzten Polyolefine durch Veränderung von Polymerzusammensetzung und Polymerisationsbedingungen auch so ausgeführt werden, dass bis kurz vor den Schmelzpunkt kein signifikantes partielles Aufschmelzen stattfindet. In letzterem Fall können hohe Wärmestandfestigkeiten der Verklebung realisiert werden, wobei die Wärmestandfestigkeitstemperatur sehr dicht an der Erweichungstemperatur liegt.

Anders als hochkristalline Polyolefine, die einen einzelnen sehr scharfen Schmelzpeak aufweisen, zeigen die eingesetzten Polyolefine in der 2. Aufheizkurve der DSC-Messung bei einer Aufheizgeschwindigkeit von 10 K/min. entweder keinen Schmelzpeak, einen Schmelzpeak oder zwei Schmelzpeaks, wobei diese Schmelzpeaks unterschiedliche Intensitäten aufweisen können. Zeigen die eingesetzten Polyolefine in der 2. Aufheizkurve der DSC-Messung keinen Schmelzpeak, so bedeutet dies nicht, dass sie keine kristallinen Anteile besitzen, sondern nur, dass diese in Folge der standardisierten Versuchsbedingungen nicht detektiert werden. In der ersten Aufheizkurve zeigen alle eingesetzten Polyolefine mindestens einen Schmelzpeak. Das Ende des Aufschmelzbereiches der 2. Aufheizkurve der DSC (sog. Peak-Offset) liegt für die eingesetzten Polyolefine zwischen 70 °C und 145 °C, bevorzugt zwischen 75 °C und 140 °C besonders bevorzugt zwischen 79 °C und 138 °C und insbesondere bevorzugt zwischen 80 °C und 135 °C. Liegt das Ende des Schmelzbereiches bei niedrigen Temperaturen, so ist dies insbesondere für die Verklebung von thermolabilen Materialien von Vorteil. Liegt das Ende des Schmelzbereiches dagegen hoch, so resultiert eine besonders hohe Wärmestandfestigkeit.

Vorzugsweise weisen die Polymere eine beim zweiten Aufheizen in der DSC gemessene endotherme Schmelzenthalpie von maximal 30 J/g, bevorzugt von 1 - 27 J/g, besonders bevorzugt von 2 - 25 J/g und insbesondere bevorzugt von 3 - 23 J/g auf, wobei Wertebereiche von 0 - 10 J/g, 6 - 22 J/g, 10 - 20 J/g und insbesondere von 5 - 15 J/g ganz besonders bevorzugt sind. Dadurch wird erreicht, dass die eingesetzten Polyolefine ein optimales Verhältnis von kristallinen und nicht kristallinen Anteilen aufweisen. Je nach Polymerzusammensetzung und gewählten Polymerisationsbedingungen können so Polymere zur Verfügung gestellt werden, zu deren Aufschmelzen nur ein sehr geringer oder aber (im Vergleich mit hochkristallinen Polyolefinen) ein moderater Energiebeitrag notwendig ist.

In einer ganz besonders bevorzugten Ausführungsform weisen die erfindungsgemäßen Polyolefine eine beim 2.Aufheizen in der DSC gemessene endotherme Schmelzenthalpie von 0 J/g (d. h. keine Endothermie detektierbar) und gleichzeitig eine Nadelpenetration 20 - 60*0,1mm, bevorzugt von 25 - 55*0,1 mm und besonders bevorzugt von 27 - 53*0,1 mm auf. Diese Kombination hat den Vorteil, dass Polymere zur Verfügung gestellt werden können, die nur eine äußerst geringe Energie zum Schmelzen benötigen, gleichzeitig aber eine gute Festigkeit aufweisen. Da Festigkeit bei Polyolefinen im Allgemeinen an hohe Molmassen und/oder hohe Kristallinität geknüpft ist, ist diese Eigenschaft ein besonders herausragendes Merkmal der eingesetzten Polyolefine.

Die mittels DSC (2.Aufheizkurve, 20K/min.) bestimmte Glasübergangstemperatur der eingesetzten Polyolefine liegt bei maximal - 8 °C, bevorzugt zwischen -9 und -55 °C, besonders bevorzugt zwischen -10 und - 52 °C und insbesondere bevorzugt zwischen -12 und -50 °C, wobei Wertebereiche zwischen -8 und -18 °C, -9 und -17 °C, -10 und -16 °C sowie zwischen - 20 und -48 °C, -25 und -45 °C und insbesondere -27 und -44 °C besonders bevorzugt sind. Dadurch wird erreicht, dass die eingesetzten Polyolefine je nach Polymerzusammensetzung und gewählten Polymerisationsbedingungen auch in Anwendungsbereichen eingesetzt werden können, die hohe Tieftemperaturflexibilität verlangen und daher hochkristallinene Polyolefinen (wie z. B. isotakischem Polypropylen) verschlossen bleiben. Dabei ist insbesondere bemerkenswert, dass für die eingesetzten Polyolefine die niedrigen Glasübergangstemperaturen ohne den Einsatz von teuren Comonomeren wie z. B. 1-Penten, 1-Hexen, 1-Octen, 1-Nonen und/oder 1-Decen erreicht werden.

Weiterhin liegt je nach Copolymerzusammensetzung der Erweichungspunkt, gemessen nach der Ring & Kugelmethode bei maximal 140 °C, bevorzugt bei 75 - 138 °C, besonders bevorzugt bei 80 - 136 °C und insbesondere bei 83 bis 135 °C, wobei Wertebereiche zwischen 80 und 118 °C, 90 und 115 °C, sowie zwischen 116 und 135 °C und insbesondere 120 und 130 °C besonders bevorzugt sind. Dadurch wird erreicht, dass Polymere zur Verfügung gestellt

werden können, die trotz einer relativ geringen Kristallinität, erst bei hohen Temperaturen eine Erweichung erfahren, und damit Verklebungen mit hoher Wärmestandfestigkeit ermöglichen.

Weiterhin bevorzugt weicht bei den erfindungsgemäßen Polyolefinen, je nach Copolymerzusammensetzung (bei Polymeren, die in der 2. Aufheizkurve mindestens einen Schmelzpeak aufweisen) die gefundene Erweichungstemperatur (nach Ring-& Kugelmethode) von der in der DSC beim 2. Aufschmelzen ermittelten obersten Schmelztemperatur (maximaler Schmelzpeak) um 3 - 60 K, bevorzugt 4 - 55K, besonders bevorzugt 5 - 50 K ab. Ganz besonders bevorzugt liegt die gefundene Erweichungstemperatur (nach Ring-& Kugelmethode) 3 - 30 K, bevorzugt 4 - 27 K, besonders bevorzugt 5 - 25 K oberhalb der in der DSC beim 2. Aufschmelzen ermittelten obersten Schmelztemperatur (maximaler Schmelzpeak). In einer alternativen Ausführungsform liegt die gefundene Erweichungstemperatur (nach Ring-& Kugelmethode) 2 - 45 K, bevorzugt 3 - 42 K, besonders bevorzugt 4 - 38 K unterhalb der in der DSC beim 2. Aufschmelzen ermittelten obersten Schmelztemperatur (maximaler Schmelzpeak). Dadurch wird erreicht, dass einerseits Polymere zur Verfügung gestellt werden können, die auch oberhalb ihres Schmelzpunktes noch eine gute Materialkohäsion aufweisen, so dass hohe Wärmestandfestigkeiten erreicht werden, andererseits aber auch Polymere zur Verfügung gestellt werden können, bei denen auch unterhalb des Erweichungspunktes schon eine plastische Deformation möglich ist, d. h. mit nur geringem thermischen Energieeintrag eine nachträgliche Verformung der Klebverbindung erfolgen kann.

Eine Besonderheit der eingesetzten Polyolefine ist, dass durch entsprechende Wahl der Polymerzusammensetzung und der Polymerisationsbedingungen auch Polymere zur Verfügung gestellt werden können, die in der 2. Aufheizung der DSC keinen Schmelzpeak aufweisen, aber dennoch einen Erweichungspunkt (Ring & Kugel) von über 90 °C, bevorzugt von über 95 °C und besonders bevorzugt von über 97 °C aufweisen, und somit Verklebungen mit hohem Wärmestand bei minimaler Aufschmelzenergie ermöglichen.

Die eingesetzten Polyolefine weisen bei Raumtemperatur eine Löslichkeit in Xylol von mindestens 10 ma-% auf, vorzugsweise von mindestens 50 ma-%, bevorzugt von mindestens 55 ma-%, besonders bevorzugt von mindestens 57 ma-% und insbesondere bevorzugt von 60 - 100 ma-% auf. Dies hat den Vorteil, dass Polymere mit guter bis sehr guter Löslichkeit in Xylol zur Verfügung gestellt werden, die im Gegensatz zu bisher bekannten Systemen mit dieser Eigenschaft eine sehr enge Molmassenverteilung mit äußerst niedrigen niedermolekularen Anteilen aufweisen, so dass auch Polymere zur Verfügung gestellt werden, die trotz ihrer Löslichkeit in Xylol einen (zumindest in der ersten Aufheizung der DSC) messbaren kristallinen Anteil und eine (zumindest in der ersten Aufheizung der DSC) deutlich erkennbare Schmelztemperatur aufweisen und somit eine gute Materialkohäsion besitzen. Die eingesetzten Polyolefine mit hoher Löslichkeit in Xylol ermöglichen die Herstellung von Lösungsformulierungen mit guter Handhabbarkeit und geringem toxischen Gefährdungspotential.

In einer besonderen, bevorzugten Ausführungsform weisen die erfindungsgemäßen Polyolefine eine komplexe Schmelzviskosität (bestimmt bei 190 °C mit einer Deformation von maximal 1 % und einer Messfrequenz von 1 Hz) von maximal 15000 mPa*s, bevorzugt von maximal 10000 mPa*s, besonders bevorzugt von maximal 7500 mPa*s und insbesondere bevorzugt von maximal 5500 mPa*s auf, während gleichzeitig ihre Löslichkeit in Xylol bei Raumtemperatur mindestens 70 ma-%, bevorzugt mindestens 75 ma-%, besonders bevorzugt mindestens 80 ma-% und insbesondere bevorzugt über 90 ma-% beträgt.

Die eingesetzten Polyolefine weisen weiterhin vorzugsweise eine Löslichkeit in Tetrahydrofuran (THF) bei Raumtemperatur von mindestens 10 ma-%, bevorzugt von mindestens 25 ma-%, besonders bevorzugt von mindestens 50 ma-% und insbesondere bevorzugt von 60 - 100 ma-% auf.

Dies hat den Vorteil, dass unpolare Polymere mit guter Löslichkeit in einem polaren Lösungsmittel zur Verfügung gestellt werden können (z. B. für Lösungsmittelapplikationen), die im Gegensatz zu bisher bekannten Systemen mit dieser Eigenschaft eine relativ hohe zahlenmittlere Molmasse und eine sehr enge Molmassenverteilung mit äußerst niedrigen niedermolekularen Anteilen aufweisen, sodass Polymere zur Verfügung gestellt werden, die trotz ihrer Löslichkeit in Tetrahydrofuran eine durch Hochtemperaturgelpermeationschromatographie mit universeller Kalibrierung bestimmte zahlenmittlere Molmasse von > 4000 g/mol, einen (zumindest in der ersten Aufheizung der DSC) messbaren kristallinen Anteil und eine deutlich erkennbare Schmelztemperatur aufweisen und somit eine sehr gute Materialkohäsion besitzen. Insbesondere beträgt die in der zweiten Aufheizung der DSC bestimmte exotherme Schmelzenergie für erfindungsgemäße Polymere mit 100%iger Löslichkeit in Tetrahydrofuran bei Raumtemperatur bei maximal 20 J/g, bevorzugt zwischen 1 und 18 J/g und besonders bevorzugt zwischen 2 und 17 J/g. Gleichzeitig liegt die durch Ring- und Kugelmethode bestimmte Erweichungstemperatur bei mindestens 80 °C bevorzugt bei mindestens 83 °C und besonders bevorzugt bei mindestens 85 °C und insbesondere bevorzugt bei 90 -130 °C, während die Nadelpenetration bei maximal 55*0,1 mm, bevorzugt bei maximal 50*0,1 mm, besonders bevorzugt bei maximal 45*0,1mm und insbesondere bevorzugt bei 1 - 40*0,1 mm liegt. Die eingesetzten Polyolefine mit hoher Löslichkeit in Tetrahydrofuran ermöglichen auch die Herstellung von Lösungsformulierungen welche aufgrund des niedrigen Siedepunktes von THF die Realisierung sehr kurzer Antrocknungs-/Ablüftzeiten gestatten.

In einer besonderen, bevorzugten Ausführungsform, insbesondere wenn die erfindungsgemäßen Polyolefine für die Noppen- und/oder Filamenteinbindung eingesetzt werden, weist mindestens eines der erfindungsgemäß eingesetzten Polyolefine eine komplexe Schmelzviskosität (bestimmt bei 190 °C mit einer Deformation von maximal 1 % und

einer Messfrequenz von 1 Hz) von maximal 15000 mPa*s, bevorzugt von maximal 10000 mPa*s, besonders bevorzugt von maximal 7500 mPa*s und insbesondere bevorzugt von maximal 5500 mPa*s auf, während gleichzeitig ihre Löslichkeit in Xylol und THF bei Raumtemperatur mindestens 70 ma-%, bevorzugt mindestens 75 ma-%, besonders bevorzugt mindestens 80 ma-% und insbesondere bevorzugt über 90 ma-% beträgt.

Zusätzlich zeichnen sich die eingesetzten Polyolefine dadurch aus, dass sie ohne weitere Zusätze auf unbehandeltem isotaktischen Polypropylen nach mindestens 24 Stunden Lagerdauer eine Klebscherfestigkeit von mindestens 0,3 MPa, bevorzugt von 0,35 - 5MPa, besonders bevorzugt von 0,4 - 4,75 MPa und insbesondere bevorzugt von 0,5 - 4,5 MPa aufweisen, wobei Werte von 1,0 - 4,0 MPa ganz besonders bevorzugt sind. Im Falle von unbehandeltem Polyethylen und ohne weitere Zusätze liegt nach mindestens 24 Stunden Lagerdauer eine Klebscherfestigkeit von mindestens 0,15 MPa, bevorzugt 0,2 - 3,5 MPa, besonders bevorzugt von 0,25 - 3,25 MPa und insbesondere bevorzugt von 0,3 - 3,0 MPa vor, wobei Wertebereiche von 0,3 - 2,0 MPa, von 0,4 - 1,75 MPa, von 0,45 - 1,5 MPa und insbesondere von 0,5 - 1,25 MPa ganz besonders bevorzugt sind. Bei unbehandelten Buche-Prüfkörpern liegt die Klebscherfestigkeit ohne weitere Zusätze nach mindestens 24 Stunden Lagerdauer bevorzugt bei mindestens 0,4 MPa, besonders bevorzugt bei mindestens 0,7 MPa und insbesondere bevorzugt bei mehr als 1 MPa. Im Falle von unbehandeltem PVC und ohne weitere Zusätze liegt nach mindestens 24 Stunden Lagerdauer eine Klebscherfestigkeit von mindestens 0,25 MPa, bevorzugt von 0,30 - 5 MPa, besonders bevorzugt von 0,35-4 MPa und insbesondere bevorzugt von 0,4 - 3,5 MPa vor.

In einer ganz besonders bevorzugten Ausführungsform weisen die erfindungsgemäßen Polyolefine gleichzeitig eine Klebscherfestigkeit auf unbehandeltem Buchenholz und unbehandeltem isotaktischen Polypropylen von mindestens 0,75 MPa, bevorzugt von mindestens 1,25 MPa, besonders bevorzugt von mindestens 1,5 MPa, und insbesondere bevorzugt von mindestens 1,75 MPa auf. In einer weiteren ganz besonders bevorzugten Ausführungsform weisen die erfindungsgemäßen Polyolefine eine Klebscherfestigkeit auf unbehandeltem Buchenholz von mindestens 1,0 MPa, bevorzugt von mindestens 1,5 MPa, besonders bevorzugt von mindestens 2 MPa und insbesondere bevorzugt von mindestens 2,5 MPa auf, während gleichzeitig die Klebscherfestigkeit auf unbehandeltem isotaktischen Polypropylen mindestens 1,0 MPa, bevorzugt mindestens 1,5 MPa, besonders bevorzugt mindestens 2,0 MPa und insbesondere bevorzugt mindestens 2,5 MPa beträgt. Wobei die beiden hier angeführten Materialien "unbehandeltes Buchenholz" und "isotaktisches Polyolefine" sinngemäß für Naturmaterialien (Buchenholz) und unpolare synthetische Polymere (Polypropylen) stehen, wie Sie in der Herstellung von Bodenbelägen eingesetzt werden.

Die offene Zeit der eingesetzten Polyolefine kann je nach Polymerzusammensetzung und verwendeten Polymerisationsbedingungen bis zu 30 Minuten betragen.

Besonders bevorzugt, insbesondere für die Verwendung der eingesetzten Polyolefine in Klebstoffen, die für die Noppen- und/oder Filamenteinbindung eingesetzt werden, beträgt die offene Zeit ohne weitere Zusätze maximal 300 Sekunden, bevorzugt maximal 150 Sekunden, besonders bevorzugt maximal 80 Sekunden und insbesondere bevorzugt maximal 60 Sekunden.

Weiterhin zeichnen sich die eingesetzten Polyolefine dadurch aus sie ohne weitere Zusätze nach mindestens 24 Stunden Lagerdauer im Zugversuch eine Zugfestigkeit von mindestens 0,2 MPa, bevorzugt von mindestens 0,5 MPa, besonders bevorzugt von mindestens 1 MPa und insbesondere von 1,25 bis 20 MPa aufweisen und/oder eine absolute Dehnung von mindestens 10 %, bevorzugt von mindestens 15 %, besonders bevorzugt von mindestens 40 % und insbesondere bevorzugt von 50 - 1200 % aufweisen.

In einer ganz besonders bevorzugten Ausführungsform zeichnen sich die erfindungsgemäßen Polyolefine gleichzeitig durch eine Schmelzviskosität bei 190 °C von < 5000 mPa*s, eine Zugfestigkeit von mindestens 1 MPa eine Klebscherfestigkeit auf unbehandeltem isotaktischem Polypropylen von > 2 MPa und eine Erweichungstemperatur (bestimmt nach der Ring- und Kugelmethode) von > 90 °C aus.

In einer weiteren ganz besonders bevorzugten Ausführungsform weisen die erfindungsgemäßen Polyolefine eine Zugfestigkeit von mindestens 2,0 MPa, bevorzugt von mindestens 3,0 MPa und insbesondere bevorzugt von mindestens 4,0 MPa auf, während gleichzeitig die absolute Bruchdehnung mindestens 100 %, bevorzugt mindestens 200 %, besonders bevorzugt mindestens 300 % und insbesondere bevorzugt mindestens 350 % beträgt, und gleichzeitig die Klebscherfestigkeit auf unbehandeltem Buchenholz und unbehandeltem isotaktischen Polypropylen bei mindestens 1 MPa, bevorzugt bei mindestens 1,5 MPa, besonders bevorzugt bei mindestens 1,75 MPa und insbesondere bevorzugt bei mindestens 2,0 MPa liegt.

Das Verfahren zur Herstellung der eingesetzten Polyolefine umfasst das in Kontakt bringen einer Metallocenverbindung, mindestens eines ersten Lösungsmittels, wobei das mindestens eine erste Lösungsmittel ein nicht halogeniertes aliphatisches Lösungsmittel ist, mindestens einer durch Alkylgruppen modifizierten Methylaluminoxankomponente, die gegebenenfalls in einem zweiten Lösungsmittel gelöst und/oder suspendiert vorliegt, wobei das zweite Lösungsmittel ein nicht halogeniertes Lösungsmittel ist, das gleich oder verschieden vom ersten Lösungsmittel sein kann, und mindestens eines 1-Olefin-Monomers in einem Reaktionsraum und anschließende Polymerisation des mindestens einen 1-Olefin-Monomers bei einer Reaktionstemperatur unter Bildung von erfindungsgemäßen Polyolefinen, dadurch gekennzeichnet, dass die Reaktionstemperatur oberhalb der Siedetemperatur des oder der ersten Lösungsmittel(s) liegt.

Das genannte Verfahren hat den Vorteil, dass ein solches Verfahren insbesondere die vollständige Abtrennung

des verwendeten Lösungsmittels vom Polymerisat ermöglicht. Für das in der vorliegenden Erfindung beschriebene Verfahren handelt es sich um ein essentielles Charakteristikum, da auf diese Weise bereits in der ersten Verdampfungsstufe ein Großteil des Lösungsmittels abgetrennt werden kann.

Gleichzeitig wird durch die Temperaturbegrenzung nach oben (Erweichungspunkt des erfindungsgemäß hergestellten Polymers) eine übermäßige thermische Belastung der hergestellten Polymerisate vermieden sowie eine für die erfindungsgemäß eingesetzten Metallocenkatalysatoren optimale Reaktionstemperatur gewährleistet.

Wesentlich für das Verfahren ist, dass die Reaktionstemperatur im stationären Reaktionszustand oberhalb der Siedetemperatur des oder der ersten Lösungsmittel(s) und vorzugsweise gleichzeitig unterhalb des Erweichungspunktes (bestimmt nach der Ring- und Kugelmethode) des erfindungsgemäß hergestellten Polymers liegt. Insbesondere liegt die Polymerisationstemperatur im stationären Reaktionszustand mindestens 10 K unterhalb der Erweichungstemperatur, bevorzugt mindestens 15 K, besonders bevorzugt mindestens 20 K und insbesondere bevorzugt mindestens 25 K. Letzteres ist ein besonders herausragendes Charakteristikum des erfindungsgemäßen Verfahrens, weil es trotz dieser Temperaturführung bei Anwendung des erfindungsgemäßen Verfahrens nicht zur Ausbildung von makroskopischen Polymerpartikeln (wie sie etwa bei einer Slurrypolymerisation vorliegen) im Polymerisationsmedium kommt, sondern in homogener Phase polymerisiert wird.

Das mindestens eine erste Lösungsmittel ist ausgewählt aus nicht halogenierten cyclischen und/oder linearen aliphatischen Lösungsmitteln. Vorzugsweise weist das Lösungsmittel eine Siedetemperatur bei Normaldruck von nicht mehr als 101 °C auf. Vorzugsweise weisen die aliphatischen Lösungsmittel eine Siedetemperatur bei Normaldruck von nicht mehr als 80 °C, bevorzugt von nicht mehr als 60 °C, besonders bevorzugt von nicht mehr als 40 °C und insbesondere bevorzugt von nicht mehr als 20 °C auf. Insbesondere handelt es sich bei den nicht halogenierten aliphatischen Lösungsmitteln um cyclische und/oder lineare aliphatische Verbindungen mit nicht mehr als 7 C-Atomen, vorzugsweise mit nicht mehr als 6 C-Atomen und besonders bevorzugt mit nicht mehr als 5 C-Atomen. Besonders bevorzugt ist das nicht halogenierte aliphatische Lösungsmittel ausgewählt aus der Gruppe umfassend Propan, Butan, Pentan, Cyclopentan, Methylcyclopentan, Hexan, Cyclohexan, Methylcyclohexan, Heptan oder Mischungen hieraus. Ganz besonders bevorzugt ist das Lösungsmittel Propan und/oder n-Butan.

Die Metallocenverbindung, die im vorliegenden Verfahren vorzugsweise eingesetzt wird, ist ausgewählt aus Verbindungen gemäß der Formel I $Z_xR^1R^{1a}YR^2R^{2a}(IndR^3R^4R^5R^6R^7R^8)_2MCl_2$ I

worin M ein Übergangsmetall ist, ausgewählt aus der Gruppe umfassend Zr, Hf und Ti, vorzugsweise Zr, worin Ind Indenyl bedeutet und worin $Z_xR^1R^{1a}YR^2R^{2a}$ als Brücke die Indenyl-Reste verbindet, mit Z und Y ausgewählt aus Kohlenstoff und/oder Silizium, mit x = 0 oder 1, worin $R^1$, $R^{1a}$ und $R^2$ und $R^{2a}$ unabhängig voneinander ausgewählt sind aus H, linearen oder verzweigten Alkylgruppen mit 1 bis 6 C-Atomen, Alkoxylalkylgruppen mit 1 bis 6 C-Atomen, Arylgruppen oder Alkoxyarylgruppen mit 6 bis 10 C-Atomen und mit $R^3$ bis $R^B$ ausgewählt aus der Gruppe umfassend H und/oder lineare oder verzweigte Alkylgruppen mit 1 bis 10 C-Atomen, Alkylarylgruppen, Arylalkylgruppen oder Arylgruppen mit 6 bis 10 C-Atomen. Vorzugsweise sind die Reste $R^3$, $R^5$ und/oder $R^7$ ausgewählt aus der Gruppe umfassend H und/oder lineare oder verzweigte Alkylgruppen mit 1 bis 10 C-Atomen oder Arylgruppen mit 6 bis 10 C-Atomen, insbesondere lineare oder verzweigte Alkylgruppen mit 1 bis 10 C-Atomen. Sind $R^6$ und $R^7$ gleichzeitig nicht mit H substituiert, so sind $R^6$ und $R^7$ insbesondere bevorzugt miteinander verknüpft, insbesondere in Form eines kondensierten Benzylrings. Besonders bevorzugt sind $R^3$ bis $R^8$ Wasserstoff, das heißt der Indenylring ist unsubstituiert. In einer besonderen Ausführungsform sind die Indenylliganden Tetrahydroindenylliganden.

Die Metallocenverbindung ist bevorzugt eine der Formeln II,

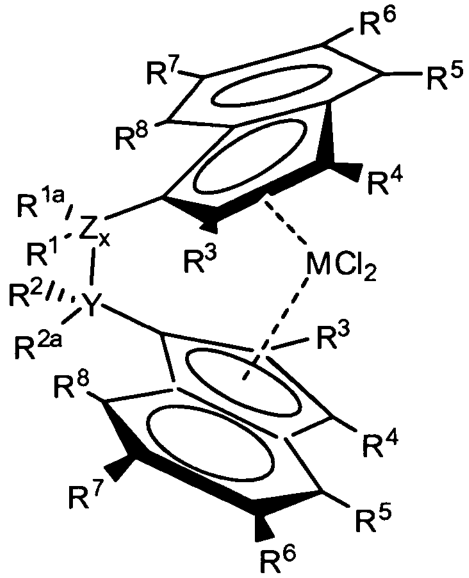

II

worin $R^1$ bis $R^8$ die vorab genannte Bedeutung haben.

Lineare und verzweigte Alkylgruppen mit 1 bis 10 C-Atomen sind insbesondere Substituenten ausgewählt aus der Gruppe umfassend Methyl, Ethyl, Propyl, iso-Propyl, Butyl, tert.-Butyl, Pentyl, Hexyl, Heptyl, Octyl, Nonyl oder Decyl.

Alkoxygruppen mit 1 bis 4 C-Atomen sind insbesondere ausgewählt aus der Gruppe umfassend Methoxy, Ethoxy, iso-Propyloxy, tert-Butyloxy.

Arylgruppen mit 6 bis 10 C-Atomen sind insbesondere ausgewählt aus der Gruppe umfassend Benzyl, Phenyl und Indenyl.

Alkylarylgruppen mit 6 bis 10 C-Atomen sind insbesondere ausgewählt aus der Gruppe umfassend Methylenphenyl, Methylenindenyl und Ethylbenzyl.

Aryalkyllgruppen mit 6 bis 10 C-Atomen sind insbesondere ausgewählt aus der Gruppe umfassendMethylphenyl, Dimethylphenyl, Ethylphenyl, Ethyl-Methylphenyl und Methylindenyl.

Alkoxyarylgruppen mit 6 bis 10 C-Atomen sind insbesondere ausgewählt aus der Gruppe umfassend Methoxyphenyl, Dimethoxyphenyl, Ethyoxyphenyl, Methoxy-Ethoxyphenyl und Methoxyindenyl, wobei mindestens eine der enthaltenen Alkoxygruppen in para-Stellung zur Verknüpfung des Substituenten steht.

Insbesondere ist $Z_xR^1R^{1a}YR^2R^{2a}$ ausgewählt aus der Gruppe umfassend $-CH_2-$, $-HCCH_3-$ $-C(CH_3)_2-$, $-CH_2CH_2-$, $-C(CH_3)_2C(CH_3)_2-$, $-CH_2C(CH_3)_2-$, $-Si(CH_3)_2-$, $-Si(CH_3)_2Si(CH_3)_2-$, $-Si(CH_3)_2C(CH_3)_2-$, $-C(CH_3)_2Si(CH_3)_2-$, $-C(C_6H_5)_2-$, $-C(C_6H_40CH_3)_2-$, $-C(OCH_2C_6H_5)_2-$, $-C(OCH_3)_2-$ ,$-C(OCH_3)_2C(OCH_3)_2$, und $-CH_2C(OCH_3)_2-$.

Ganz besonders bevorzugt handelt es sich bei der Metallocenverbindung im vorliegenden erfindungsgemäßen Verfahren um Ethylidenbis(indenyl)-Zirkoniumdichlorid, Diphenylsilyl-bis(indenyl)-Zirkoniumdichlorid, Dimethylmethylen-bis(indenyl)Zirkoniumdichlorid, Dimethylsilyl-bis(2-methylindenyl)Zirkoniumdichlord, Dimethylsilyl-bis(2-methyl-4,6-diisopropylindenyl)-Zirkoniumdichlorid oder Dimethylsilyl-bis(2-methylbenzoindenyl)-Zirkoniumdichlorid oder Ethylidenbis(tetrahydroindenyl)-Zirkoniumdichlorid.

Die genannten Verbindungen liegen vorzugsweise als racemisches Enantiomerengemisch vor und enthalten insbesondere bevorzugt nicht die enantiomorphe, optisch inaktive meso-Form in signifikantem Umfang. Der Anteil der meso-Form ist bei der vorliegenden Erfindung nicht größer als 5 ma-%, vorzugsweise nicht größer als 2 ma-% und insbesondere bevorzugt nicht größer als 1 ma-%.

Der Katalysator wird dem Polymerisationsraum vorzugsweise zusammen mit einem hohen Überschuss an aliphatischem Kohlenwasserstoff(en) zugeführt, besonders bevorzugt des ersten Lösungsmittels, wobei er besonders bevorzugt in homogener Form, d.h. vollständig gelöst zugeführt wird.

Die bei der Polymerisation eingesetzten 1-Olefin-Monomere können grundsätzlich aus allen dem Fachmann bekannten 1-Olefinen ausgewählt werden. Insbesondere ist das mindestens eine 1-Olefin-Monomer ausgewählt aus der Gruppe umfassend Ethylen und lineare 1-Olefine. Geeignete lineare 1-Olefinen sind insbesondere Propen und/oder 1-Buten.

Bei der Reaktionsführung des erfindungsgemäßen Verfahrens werden vorzugsweise die Metallocenverbindung und die mindestens eine durch Alkylgruppen modifizierte Methylaluminoxankomponente dem Reaktionsraum in homogener Form zugeführt. Dies erfolgt insbesondere, indem die Metallocenverbindung im ersten Lösungsmittel und die

mindestens eine durch Alkylgruppen modifizierte Methylaluminoxankomponente in dem zweiten Lösungsmittel gelöst vorliegen und gemeinsam dem Reaktionsraum zugeführt werden, wobei bevorzugt erst unmittelbar vor dem Eintritt in den Reaktionsraum oder erst im Reaktionsraum selbst, besonders bevorzugt erst im Reaktionsraum selbst, eine Durchmischung der beiden Feedströme stattfindet. Der dem Polymerisationsraum zugeführte (Metallocen)Katalysatorfeed enthält vorzugsweise keinerlei Aluminiumverbindungen. Dies hat den Vorteil, dass keine unkontrollierte Präformierung und/oder Nebenreaktion von Metallocenkatalysator und Cokatalysator stattfindet, die zu schlecht reproduzierbaren Katalysatoraktivitäten und Polymerisationsergebnissen führen kann.

Die mindestens eine durch Alkylgruppen modifizierte

Methylaluminoxankomponente dient im erfindungsgemäßen Verfahren als Cokatalysator. Insbesondere handelt es sich bei dem Cokatalysator um eine Verbindung der Formel III für den linearen Typ

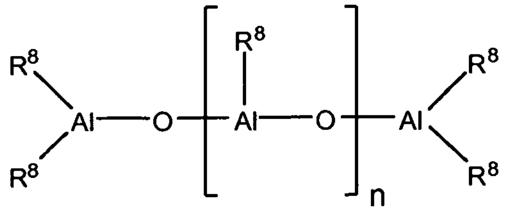

III

und/oder der Formel IV für den cyclischen Typ

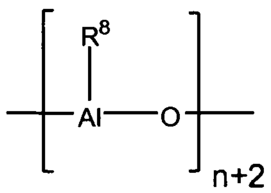

IV

wobei in den Formeln 111 und IV $R^8$ Methyl und/oder iso-Butyl bedeutet und n eine ganze Zahl von 2 bis 50 ist. Insbesondere sind 15 bis 45 mol-% der Reste $R^8$ iso-Butyl, bevorzugt 17 bis 45 mol-%, besonders bevorzugt 19 bis 43 mol-% und insbesondere bevorzugt 20 bis 40 mol-%. Erst durch den Anteil an iso-Butyl-Resten wird eine Löslichkeit des Cokatalysators in nicht aromatischen Lösungsmitteln ermöglicht. Vorzugsweise liegt der Cokatalysator in einem zweiten Lösungsmittel gelöst vor, dessen Siedetemperatur insbesondere bevorzugt bei maximal 101 °C liegt. Das zweite Lösungsmittel des Cokatalysators ist insbesondere ausgewählt aus linearen Alkanen mit 3 - 7 C-Atomen, bevorzugt mit 4 - 6 C-Atomen, wobei vorzugsweise die Siedetemperatur des zweiten Lösungsmittels deutlich unterhalb der Polymerisationstemperatur liegt, dies ist jedoch nicht zwingend. Insbesondere handelt es sich bei dem zweiten Lösungsmittel um Propan, n-Butan, n-Pentan, Cyclopentan, Methylcyclopentan, n-Hexan, Cyclohexan, Methylcyclohexan und/oder n-Heptan.

Der Anteil des zweiten Lösungsmittels an der Gesamtlösungsmittelmenge bei der Polymerisation ist sehr gering, vorzugsweise unter 5 ma-%, insbesondere unter 2 ma-%. Selbst wenn das zweite Lösungsmittel eine höhere Siedetemperatur haben sollte als die gewählte Polymerisationstemperatur, so werden trotzdem die vorab beschriebenen erfindungsgemäßen Vorteile erzielt, da der Anteil des zweiten Lösungsmittels sehr gering ist, und somit im Wesentlichen auch keinen Einfluss auf den Ablauf der Polymerisation hat. Insgesamt wird bei dem erfindungsgemäßen Verfahren im gesamten Prozessablauf auf den Einsatz aromatischer und/oder halogenierter, insbesondere chlorierter Lösungsmittel verzichtet, und nur unhalogenierte, aliphatische Lösungsmittel werden eingesetzt. Während des gesamten Polymerisationsverfahrens wird vorzugsweise als Lösungsmittel, Suspendiermedium und/oder Monomer keine Kohlenwasserstoffverbindung mit mehr als 7 Kohlenstoffatomen eingesetzt.

Bei dem Reaktionsraum zur Durchführung des erfindungsgemäßen Verfahrens kann es sich um einen Rührkessel, eine Rührkesselkaskade mit mindestens zwei Rührkesseln, ein Strömungsrohr und/oder ein Strömungsrohr mit Zwangsförderung (z. B. eine Schneckenmaschine) handeln. Dabei können die oben genannten Reaktoren entweder als Einzellösung oder in beliebiger Kombination eingesetzt werden. Weiterhin bevorzugt werden in dem erfindungsgemäßen Verfahren weder vor noch während der Polymerisation und/oder der Lösungsmittel-/Monomerabtrennung Trennmittel wie beispielsweise Öle und/oder Wachse eingesetzt. Dies hat den Vorteil, dass das erfindungsgemäße Polymer keine Trennmittel enthält, die die Klebeigenschaften in unerwünschter Weise beeinflussen und im Endprodukt zu einer

schlechten Performance führen. Die andernfalls notwendige Abtrennung der Trennmittel entweder bei stark erhöhten Temperaturen (Gefahr der Produktverfärbung) und/oder sehr niedrigen Drücken (aufwendige/teure Technologie) bzw. eine Aufreinigung der Polymere durch Umfällen und/oder Extraktion (aufwendige/teure Technologie) kann entfallen.

Die so hergestellten Polymerisate können dem Stand der Technik entsprechend entweder in Form ihrer Reaktionslösung oder zu einem späteren Zeitpunkt chemisch stabilisiert werden, um sie vor dem Einfluss von Sonneneinstrahlung, Luftfeuchtigkeit und Sauerstoff zu schützen. Dabei können beispielsweise Stabilisatoren, die gehinderte Amine (HALS-Stabilisatoren), gehinderte Phenole, Phosphite und/oder aromatische Amine enthalten, zum Einsatz kommen. Die wirksame Menge an Stabilisatoren liegt dabei im Bereich von 0,1 bis 3 Gew.-%, bezogen auf das Polymer.

In besonderen Fällen können sogenannte Antifoggingsubstanzen als Zusatzstoffe eingesetzt werden. Dabei können z. B. Fettsäureester zum Einsatz kommen; die wirksame Konzentration liegt in der Regel im Bereich von 0,1 bis 2 Gew.-%, bezogen auf das Polymer. Das erfindungsgemäß erhaltene Polymer wird nach der Polymerisation entweder durch Ausfällen in einem gegenpolaren Fällungsmittel (etwa Wasser und/oder Alkoholen wie z. B. Ethanol, Isopropanol oder Butanol) oder durch direkte Entgasung mit anschließendem Aufschmelzvorgang erhalten. Dabei können in beiden Fällen sowohl Rührkessel als auch Rührkesselkaskaden oder Strömungsrohre bzw. rohrförmige Reaktoren mit Zwangsförderung (beispielsweise eine Schneckenmaschine) verwendet werden. Bei letzterem ist insbesondere der Einsatz von mehrwelligen Schneckenmaschinen bevorzugt.

Im Anschluss an die Entgasung kann das hergestellte Polymer einer weiteren Konfektionierung unterzogen werden, wobei es sich bei der Konfektionierung um eine Additivierung und/oder eine Pulverisierung und/oder eine Pelletierung und/oder eine Granulierung handelt. Die Direktabfüllung des schmelzflüssigen Polymers in begleitbeheizte Transportbehälter ist ebenfalls möglich.

Im Falle der Granulierung handelt es sich um eine Stranggranulierung oder um eine Unterwasser-Granulierung, insbesondere die Unterwasserstrang- oder die Unterwasser-Vorkopfgranulierung. Gegebenenfalls ist der Einsatz eines Tensides und/oder Dispergierhilfsmittels bzw. einer Trennmittelemulsion notwendig. Auch der Einsatz verflüssigter oder tiefkalter Gase, wie z. B. $CO_2$ und/oder $N_2$, als Kühlmittel ist möglich. Die Pulverisierung kann entweder durch einen separaten Mahlschritt oder durch Einsatz einer Versprühungsmethode erfolgen. In beiden Fällen ist auch der Einsatz von überkritischen Fluiden wie z. B. $CO_2$ Wasser oder Propan möglich. Bei diesem, z. B. unter dem Namen PGSS ("Particle from Gas Saturated Solutions"), bekannten Verfahren wird die Polymerschmelze mit einem überkritischen Medium vermischt und anschließend in einem Sprühturm verdüst. Dabei lassen sich durch die Düsen- und Turmgeometrie die Korngrößen steuern. Der Mahlprozess kann auch unter Verwendung tiefkalter Gase, wie z. B. $CO_2$ und/oder $N_2$, erfolgen.

Um die Fließfähigkeit des Granulats und/oder Pulvers zu gewährleisten, können die im Polymerbereich üblicherweise verwendeten Fließhilfsmittel eingesetzt werden. Diese können sowohl anorganischer als auch organischer Natur sein sowie sowohl nieder- als auch hochmolekulare Komponenten enthalten, wobei in allen Fällen sowohl kristalline als auch amorphe Fließhilfsmittel eingesetzt werden können. Die Fließhilfsmittel können mit den erfindungsgemäß hergestellten Polymeren im Sinne der thermodynamischen Mischbarkeit sowohl verträglich als auch unverträglich sein. Besonders bevorzugt sind dabei Fließhilfsmittel, die mit den erfindungsgemäß hergestellten Polymeren verträglich sind und die Klebeigenschaften der Polymere nicht beeinträchtigen. Als Fließhilfsmittel können z. B. Polyolefinwachse (sowohl auf Polyethylen- als auch auf Polypropylenbasis) als auch Fischer-Tropsch-Wachse eingesetzt werden. Auch Polyolefinwachse auf 1-Butenbasis können eingesetzt werden. Ebenso ist der Einsatz von Mikrowachsen möglich. Neben Wachsen können auch Olefinpolymere wie z. B. Polyethylen, Polypropylen und/oder Poly(1-buten), insbesondere isotaktisches oder syndiotaktisches Polypropylen eingesetzt werden. Sowohl Wachse als auch Polymere können auch in modifizierter Form (z. B. mit Maleinsäureanhydrid modifiziert) verwendet werden. Auch der Einsatz vernetzter Polymere wie z. B. vernetzter Polyolefine oder vernetzter Styrol-Divinylbenzol-Polymerisate im pulverisierten Zustand ist möglich. Als anorganische Materialien kommen z. B. MgO, Talkum, Kieselsäure usw. in Frage.

Vorzugsweise werden die eingesetzten Polyolefine als oder in Klebstoffen und/oder Beschichtungsmassen zur Herstellung der erfindungsgemäßen Bodenbeläge eingesetzt, insbesondere bevorzugt in Klebstoff- und Beschichtungsformulierungen. Im Wesentlichen enthalten die erfindungsgemäßen bevorzugten Klebstoff- und Beschichtungsformulierungen das erfindungsgemäße Polymer.

In den erfindungsgemäßen Klebstoffformulierungen können neben den eingesetzten Polyolefinen weitere Bestandteile enthalten sein. Bei den weiteren Bestandteilen kann es sich insbesondere bei Lösungsformulierungen um cyclische und/oder lineare aliphatische und/oder aromatische Kohlenwasserstoffe handeln, auch um entsprechende halogenierte Kohlenwasserstoffe. Hierbei erweist sich die gute Löslichkeit der eingesetzten Polyolefine in unterschiedlichen Lösungsmitteln wie z. B. Xylol und Tetrahydrofuran als besonders vorteilhaft. Es ist somit nicht notwendig, halogenierte Lösungsmittel zu wählen, um eine Lösungsformulierung herstellen zu können. Vorzugsweise werden daher keine halogenierten Kohlenwasserstoffe verwendet. In den bei Raumtemperatur flüssigen Klebstoffformulierungen haben die genannten Kohlenwasserstoffe einen Formulierungsanteil von maximal 90 ma-% bevorzugt maximal 80 ma-%, besonders bevorzugt maximal 75 ma-%, und insbesondere bevorzugt von maximal 50 ma-%.

Ganz besonders bevorzugt handelt es sich bei der Klebstoffformulierung um eine Heißschmelzklebstoffformulierung. Bei den Beschichtungsmassen handelt es sich ganz besonders bevorzugt um Schwerbeschichtungsmassen welche aus der Schmelze appliziert werden.

Die Heißschmelzklebstoffformulierung bzw. Beschichtungsformulierung kann weitere Bestandteile enthalten, die zur Erzielung spezieller Eigenschaften wie z. B. Verformungsfähigkeit, Haftungsvermögen, Verarbeitungsfähigkeit, (Schmelz- bzw. Lösungs-) Viskosität, Festigkeit, Kristallisationsgeschwindigkeit, Klebrigkeit, Lagerstabilität usw. notwendig sind. Der Anteil der weiteren Bestandteile liegt in einer besonderen Ausführungsform der vorliegenden Erfindung insbesondere bevorzugt bei maximal 10 ma-%. Dies hat den Vorteil, dass die Materialeigenschaften der Klebstoffformulierung im Wesentlichen die des verwendeten erfindungsgemäßen Polymers sind. Eine solche Klebstoff- bzw. Beschichtungsformulierung lässt sich mit sehr geringem Aufwand herstellen.

Alternativ kann in einer weiteren Ausführungsform der vorliegenden Erfindung der Anteil der weiteren Bestandteile > 10 ma-% betragen. In diesem Falle machen die weiteren Bestandteile maximal 80 ma-% der Gesamtformulierung, bevorzugt maximal 60 ma-%, besonders bevorzugt maximal 50 ma-%, insbesondere bevorzugt maximal 40 ma-% aus.

Bei den weiteren Bestandteilen kann es sich um anorganische und/oder organische Füllstoffe, die wahlweise elektrisch leitfähig oder isolierend sein können, anorganische und/oder organische Pigmente, die wahlweise elektrisch leitfähig oder isolierend sein können, synthetische und/oder natürliche Harze, insbesondere Klebharze, synthetische und/oder natürliche Öle, anorganische und/oder organische, synthetische und/oder natürliche Polymere, die wahlweise elektrisch leitfähig oder isolierend sein können, anorganische und/oder organische, synthetische und/oder natürliche Fasern, die wahlweise elektrisch leitfähig oder isolierend sein können, anorganische und/oder organische Stabilisatoren, anorganische und/oder organische Flammschutzmittel handeln.

Insbesondere umfassen die weiteren Bestandteile Harze, wobei die Harze eingesetzt werden, um bestimmte Eigenschaften der Klebschicht, insbesondere die Klebrigkeit und/oder Haftung, das Fließ- und Kriechverhalten der Klebschicht und/oder die Klebstoffviskosität an besondere Anforderungen anzupassen. Es kann sich dabei um Naturharze und/oder Kunstharze handeln. Im Falle von Naturharzen enthalten diese Naturharze als Hauptbestandteil Abietinsäure (z. B. Kollophonium). Weiterhin kann es sich bei den Harzen um Terpen- bzw. Polyterpenharze, Petroleumharze und/oder Kumaron-Inden-Harze handeln, wobei es sich insbesondere um sogenannte $C_5$-Harze und/oder $C_9$-Harze und/oder um Mischpolymerisate aus $C_5$-/$C_9$-Harzen handelt. Der Anteil der Harze in der erfindungsgemäßen Heißschmelzklebstoffformulierung beträgt insbesondere maximal 45 ma-%, bevorzugt zwischen 1 und 40 ma-%, besonders bevorzugt zwischen 2 und 30 ma-% und insbesondere bevorzugt zwischen 3 und 20 ma-%, bezogen auf die Gesamtformulierung.

Weiterhin können in den erfindungsgemäßen Heißschmelzklebstoffformulierungen klassische amorphe Poly ($\alpha$-Olefine) (sog. APAOs) als weitere Bestandteile enthalten sein. Bei den genannten amorphen Poly($\alpha$-Olefinen) kann es sich um Homo-/Co- und/oder Terpolymere aus Ethylen, Propylen, 1-Buten bzw. linearen und/oder verzweigten 1-Olefinen mit 5 - 20 Kohlenstoffatomen handeln, welche z. B. durch klassische Ziegler-Natta-Katalyse oder Metallocenkatalyse erhältlich sind. Der Anteil der amorphen Poly($\alpha$-Olefine) liegt insbesondere bei maximal 50 ma-% bevorzugt bei maximal 40 ma-% und besonders bevorzugt bei maximal 30 ma-%, bezogen auf die Gesamtformulierung. Vorzugsweise handelt es sich bei den weiteren Bestandteilen um kristalline beziehungsweise teilkristalline Polyolefine, die insbesondere isotaktisches Polypropylen, syndiotaktisches Polypropylen, Polyethylen (HDPE, LDPE und/oder LLDPE), isotaktisches Poly(1-buten), syndiotaktisches Poly(1-buten) deren Copolymere und/oder deren Copolymere mit linearen und/oder verzweigten 1-Olefinen mit 5 bis 10 Kohlenstoffatomen umfassen. Weiterhin ist bevorzugt, dass es sich bei den kristallinen bzw. teilkristallinen Polyolefinen um chemisch modifizierte Polyolefine handelt, wobei die chemische Modifizierung insbesondere solche durch Maleinsäureanhydrid, Itaconsäureanhydrid, Acrylsäure, Acrylate, Methacrylate, ungesättigte Epoxyverbindungen, Silanacrylate, Silane und Hydroxyalkylsilane umfasst.

Weiterhin können die weiteren Bestandteile Polymere mit polaren Gruppen umfassen. Polymere mit polaren Gruppen umfassen Polystyrolcopolymere (z. B. mit Maleinsäureanhydrid, Acrylnitril usw.), Polyacrylate, Polymethacrylate, (Co)polyester, Polyurethane, (Co)polyamide, Polyetherketone, Polyacrylsäure, Polycarbonate sowie chemisch modifizierte Polyolefine (wie z. B. Poly(propylen-graft-maleinsäureanhydrid) oder Poly(propylen-graft-alkoxyvinylsilan).

Weiterhin können die weiteren Bestandteile Homo- und/oder Copolymere auf Basis von Ethylen, Propylen, Acrylnitril, Butadien, Styrol und/oder Isopren umfassen, insbesondere handelt es sich bei diesen Polymeren um Blockcopolymere, insbesondere um Kautschuke wie z. B. Beispiel Natur- und Synthesekautschuk, Poly(butadien), Poly(isopren), Styrol-Butadien-Kautschuk und Nitrilkautschuk. Der Anteil der Polymere auf Basis von Butadien, Styrol, und/oder Isopren beträgt maximal 20 ma-%, bevorzugt 1 - 15 ma-%, besonders bevorzugt 1,5 - 10 ma-% und insbesondere 2 - 9 ma-%, bezogen auf die Heißschmelzklebstoffformulierungen.

Weiterhin können die weiteren Bestandteile elastomere Polymere auf Basis von Ethylen, Propylen, einem Dien und/oder *cis,cis*-1,5-Cyclooctadien, exo-Dicyclopentadien, endo-Dicyclopentadien und 1,4-Hexadien und 5-Ethyliden-2-norbornen umfassen, insbesondere handelt es sich hierbei um Ethylen-Propylen-Rubber, EPM (doppelbindungsfrei, Ethylengehalt 40 - 75 ma-%) und/oder EPDM. Der Anteil der Polymere auf Basis von Ethylen, Propylen, einem Dien und/oder cis,cis-1,5-Cyclooctadien, exo-Dicyclopentadien, *endo*-Dicyclopentadien, 1,4-Hexadien und 5-Ethyliden-2-norbornen beträgt üblicherweise maximal 20 ma-%, bevorzugt 1 - 15 ma-%, besonders bevorzugt 1,5 - 10 ma-% und

insbesondere 2 - 9 ma-%, bezogen auf die Heißschmelzklebstoffformulierungen.

Alternativ können die weiteren Bestandteile Wachse umfassen, insbesondere modifizierte und unmodifizierte Wachse, wobei es sich bei diesen vorzugsweise um kristalline, teilkristalline und/oder amorphe Polyolefinwachse auf Basis von Polyethylen, Polypropylen und/oder Poly(1-buten), Paraffinwachse, Metallocenwachse, Mikrowachse, Polyamidwachse, Polytetrafluorethylenwachse und/oder Fischer-Tropsch-Wachse handelt. Der Anteil der Wachse beträgt maximal 50 ma-%, bevorzugt 1 - 40 ma-%, besonders bevorzugt 2 - 30 ma-% und insbesondere bevorzugt 3 - 20 ma-%, bezogen auf die Heißschmelzklebstoffformulierungen.

Weiterhin können die weiteren Bestandteile Füllstoffe umfassen, wobei die Füllstoffe eingesetzt werden, um spezielle Eigenschaftsprofile der Klebschicht, wie z. B. den Temperaturanwendungsbereich, die Festigkeit, die Schrumpfung, die elektrische Leitfähigkeit, den Magnetismus und/oder die Wärmeleitfähigkeit gezielt an spezifische Anforderungen anzupassen. Insbesondere werden Füllstoffe bei der Herstellung von Teppichschwerbeschichtungen eingesetzt. Allgemein handelt es sich bei den Füllstoffen um anorganische und/oder organische Füllstoffe. Die anorganischen Füllstoffe sind insbesondere ausgewählt aus Kieselsäuren (inkl. hydrophobierte Kieselsäuren), Quarzmehl, Kreiden, Schwerspat, Glaspartikeln (insbesondere sphärischen Partikeln zur Erhöhung der Lichtreflexion), Glasfasern, Kohlefasern, Asbestpartikeln, Asbestfasern und/oder Metallpulvern. Organische Füllstoffe sind beispielsweise Ruß, Bitumen, vernetztes Polyethylen, vernetzte Kautschuk- bzw. Gummimischungen synthetische Fasern wie z. B. Polyethylenfasern, Polypropylenfasern, Polyesterfasern, Polyamidfasern, Aramidfasern, Saranfasern, MP-Fasern oder Naturfasern wie Stroh, Wolle, Baumwolle, Seide, Flachs, Hanf, Jute, und/oder Sisal. Der Anteil der Füllstoffe beträgt maximal 80 ma-%, bevorzugt 1 - 60 ma-%, besonders bevorzugt 5 - 40 ma-% und insbesondere bevorzugt 7 - 30 ma-%, bezogen auf die Heißschmelzklebstoffformulierungen.

Ebenfalls können die weiteren Bestandteile Stabilisatoren umfassen, wobei diese eingesetzt werden, um die Klebstoffformulierung vor externen Einflüssen wie z. B. dem Einfluss von (Verarbeitungs-)Wärme, Scherbeanspruchung, Sonneneinstrahlung, Luftfeuchtigkeit und Sauerstoff zu schützen. Geeignete Stabilisatoren sind beispielsweise gehinderte Amine (HALS-Stabilisatoren), gehinderte Phenole, Phosphite und/oder aromatische Amine. In den genannten Formulierungen beträgt der Anteil der Stabilisatoren maximal 3 ma-%, bevorzugt zwischen 0,05 und 2,5 ma-% und insbesondere bevorzugt zwischen 0,1 und 2 ma-%, bezogen auf die Heißschmelzklebstoffformulierungen.

Darüber hinaus können die weiteren Bestandteile ein oder mehrere Öle umfassen, wobei es sich um natürliche und/oder synthetische Öle handeln kann. Diese ein oder mehreren Öle haben vorzugsweise bei der Verarbeitungstemperatur eine Viskosität von 1 bis 1000 mPa*s, bevorzugt von 2 - 750 mPa*s, am meisten bevorzugt von 3 - 500 mPa*s. Geeignete Öle sind beispielsweise Mineralöle, (medizinische) Weißöle, Isobutenöle, Butadienöle, hydrierte Butadienöle und/oder Paraffinöle. Der Anteil der ein oder mehreren Öle beträgt maximal 50 ma-%, bevorzugt 1 - 45 ma-%, besonders bevorzugt 3 - 40 ma-% und insbesondere 5 - 38 ma-%, bezogen auf die Heißschmelzklebstoffformulierungen.

Weiterhin können in den Heißschmelzklebstoffformulierungen anorganische und/oder organische Pigmente, UV-aktive Substanzen, organische und/oder anorganische Nukleierungsmittel, die die Kristallisation der Polymere beschleunigen und damit die offene Zeit der Verklebung reduzieren, enthalten sein.

In einer weiter bevorzugten Form der erfindungsgemäßen Heißschmelzklebstoffformulierungen handelt es sich bei den vorab beschriebenen Formulierungen um Multiphasenblends.

Insbesondere die oben genannten Heißschmelzklebstoffformulierungen werden zur Herstellung von Bodenbelägen eingesetzt, wobei die Formulierungen zur Noppen- und Filamenteinbindung und/oder zur Rückenbeschichtung eingesetzt werden.

Im Falle der Noppen- und Filamenteinbindung werden üblicherweise Fasern bzw. Faserverbunde auf Basis von natürlichen und/oder synthetischen Fasern eingesetzt. Beispiele natürlicher Fasern bzw. Faserverbunde sind Wolle, Baumwolle, Sisal, Jute, Stroh, Hanf, Flachs, Seide und/oder Mischungen aus diesen Fasern.

Beispiele einzubindender synthetischer Fasern bzw. Faserverbunde sind (Co)Polyamidfasern, Polyethylenfasern, Co(polyesterfasern), Polypropylenfasern und/oder Mischungen aus diesen Fasern. Im Falle von Kunstrasenverklebungen sind die durch die Verklebung eingebundenen Filamente ausgewählt aus Polypropylenfilamenten, Polyethylenfilamenten, Polyamidfilamenten, Polyesterfilamenten oder Mischfilamenten der aufgeführten Kunststoffe.

In den genannten Anwendungen zur Noppen- und Filamenteinbindung liegt die untere Grenze Schmelzviskosität bei 190 °C für das enthaltene bzw. die enthaltenen erfindungsgemäße(n) Polyolefin(e) prinzipiell bei ca. 200 mPa*s und die obere Grenze bei ca. 10000 mPa*s. Bevorzugt weist mindestens eines der enthaltenen erfindungsgemäßen Polyolefine bei 190 °C eine Schmelzviskosität von 500 bis 8000 mPa*s, besonders bevorzugt von 550 bis 6000 mPa*s und insbesondere bevorzugt von 600 bis 4000 mPa*s auf. Für die mindestens ein erfindungsgemäßes Polyolefin enthaltenden Formulierungen und/oder Beschichtungsmassen welche zur Noppen- und/oder Filamenteinbindung eingesetzt werden liegt die Schmelzviskosität bei 190 °C zwischen 200 und 8500 mPa*s, bevorzugt zwischen 300 und 6500 mPa*s, besonders bevorzugt zwischen 400 und 5000 mPa*s und insbesondere bevorzugt zwischen 500 und 4000 mPa*s. Der Anteil der erfindungsgemäßen Polyolefine liegt insbesondere bei 60 - 98 ma-%. Das Auftragsgewicht beträgt insbesondere 20 - 1500 g/$m^2$, bevorzugt 50 bis 1250 g/$m^2$, besonders bevorzugt 75 bis 1000 g/$m^2$ und insbesondere bevorzugt von 80 bis 500 g/$m^2$. In einer besonderen Ausführungsform, insbesondere wenn Polyolefine mit einer Schmelzviskosität gemessen bei 190 °C von < 6000 mPa*s eingesetzt werden, beträgt das Auftragsgewicht weniger als 750 $g/m^2$, bevorzugt weniger als 650 $g/m^2$, besonders bevorzugt weniger als 500 $g/m^2$ und insbesondere bevorzugt weniger als 450 $g/m^2$.

Der Schmelzklebstoff bzw. die Beschichtungsmasse wird vorzugsweise auf die Rückseite der Teppichrohware (z. B. Nadelfilz, Tufting: Velour, Schlingenware usw.) aufgetragen, wobei Schmelzklebstoff bzw. Beschichtungsmasse bevorzugt in schmelzflüssiger Form vorliegen. Als Auftragsverfahren kommen alle dem Fachmann bekannten Verfahren in Frage, insbesondere Mehrwalzenauftrag, Rakelauftrag, Sprühauftrag, Rollenauftrag sowie der Auftrag mittels Breitschlitzdüse (z. B. in Kombination mit einem zusätzlichen Rakel und/oder einer Einpressrolle). In einer besonderen Ausführungsform erfolgt der Auftrag unter Verwendung eines Schmelzeextruders, in Kombination mit einer Breitschlitzdüse. In einer weiteren besonderen Ausführungsform werden im Rahmen einer Coextrusion gleichzeitig oder aufeinander folgend weitere Beschichtungen aufgetragen. Insbesondere lassen sich durch die Verwendung von Rollenauftragsverfahren besonders niedrige Auftragsgewichte realisieren. Die Auftragstemperatur orientiert sich einerseits an der Thermostabilität der verwendeten Teppichrohware (insbesondere auch an der Thermostabilität des verwendeten Teppichfärbemittels bzw. anderer Additive), andererseits an den thermischen (z. B. Schmelzpunkt) und rheologischen (z. B. Schmelzviskosität) Eigenschaften des verwendeten erfindungsgemäßen Polyolefins. Bevorzugt liegt die Auftragstemperatur bei den bei Raumtemperatur festen Schmelzklebstoffen bzw. Beschichtungsmassen oberhalb der Erweichungstemperatur der eingesetzten Schmelzklebstoffe bzw. Beschichtungsmassen, besonders bevorzugt im Bereich 80 bis 250 °C, insbesondere bevorzugt im Bereich 95 bis 200 °C. In einer besonderen Ausführungsform, insbesondere wenn die Teppichrohware Polyolefinfasern wie z. B. Polypropylenfasern und/oder Naturfasern enthält, liegt die Auftragstemperatur zwischen 100 und 190 °C, bevorzugt zwischen 105 und 185 °C, besonders bevorzugt zwischen 110 und 180 °C und insbesondere bevorzugt zwischen 115 und 175 °C. In einer weiteren besonderen Ausführungsform, insbesondere, wenn die Teppichrohware Polyamidfasern, insbesondere Fasern aus Polyamid-6,6 enthält, können auch deutlich höhere Auftragstemperaturen eingesetzt werden, beispielsweise liegt die Auftragstemperatur in diesem Fall bei > 150 °C, bevorzugt bei > 160 °C, und besonders bevorzugt zwischen 165 und 295 °C und insbesondere bevorzugt zwischen 170 und 275 °C. Vor dem Auftrag der Beschichtungsmasse kann die Teppichrohware bzw. der Bodenbelag vorgeheizt werden, wobei bevorzugt Infrarotstrahlung als Wärmequelle eingesetzt wird. Die vorgeschaltete Temperierung der Teppichrohware bzw. des Bodenbelages ist insbesondere von Vorteil, wenn eine besonders vollständige bzw. tiefe Penetration des verwendeten Schmelzklebstoffes bzw. der verwendeten Beschichtungsmasse gewünscht wird. In einer besonderen Ausführungsform werden temperierte Walzen und/oder Rollen für die Vortemperierung der Teppichrohware eingesetzt, wobei es zu einem besonders intensiven Kontakt und einem besonders guten Wärmeübergang kommt.

Das erforderliche Beschichtungsgewicht (Menge an Schmelzklebstoff bzw. Beschichtungsmasse pro Flächeneinheit) ist insbesondere von Art und Form der verwendeten Teppichrohware bzw. des verwendeten Bodenbelages abhängig. Insbesondere ist eine Abhängigkeit zur Dicke der Noppen gegeben, wobei dicke Noppen in der Regel einen dickeren Auftrag (d.h. ein höheres Beschichtungsgewicht) benötigen. Weiterhin ist eine Abhängigkeit zur Noppendichte gegeben, wobei mit steigender Anzahl von Noppen pro Flächeneinheit das Beschichtungsgewicht in der Regel ansteigt.

Nach dem Auftrag der Beschichtungsmasse kann der Teppich bzw. der Bodenbelag eine Nachtemperierung erfahren, die die Fließfähigkeit des verwendeten Schmelzklebstoffes bzw. der verwendeten Beschichtungsmasse verlängert, und damit eine besonders vollständige bzw. tiefe Penetration des verwendeten Schmelzklebstoffes bzw. der verwendeten Beschichtungsmasse ermöglicht. Als Wärmequelle für die nachgeschaltete Temperierung wird bevorzugt Infrarotstrahlung eingesetzt, der Einsatz anderer Wärmequellen wie z. B. Heißluft und/oder Dampf und/oder weiterer Wärmequellen ist ebenfalls möglich. In einer besonderen Ausführungsform werden temperierte Walzen und/oder Rollen für die Nachtemperierung des Teppichs bzw. Bodenbelages eingesetzt, wobei es zu einem besonders intensiven Kontakt und einem besonders guten Wärmeübergang kommt. Insbesondere wird durch die zusätzliche Druckbelastung eine besonders gute Penetration und Verteilung des verwendeten Schmelzklebstoffes bzw. der verwendeten Beschichtungsmasse erreicht, die besonders niedrige Auftragsgewichte ermöglicht. In einer weiteren besonderen Ausführungsform weisen die für die Vortemperierung und/oder den Auftrag des Schmelzklebstoffes bzw. der Beschichtungsmasse und/oder die Nachtemperierung verwendeten Rollen bzw. Walzen unterschiedliche Temperaturen auf, wodurch eine präzise Steuerung des Penetrations- und/oder Beschichtungsvorganges gewährleistet wird.

Alternativ oder ergänzend werden die Polyolefine, insbesondere in Form von Klebstoffen, zur Rückenbeschichtung eingesetzt.

In einer besonders bevorzugten Ausführungsform der vorliegenden Erfindung werden in einem Arbeitsschritt gleichzeitig bzw. unmittelbar hintereinander Polfäden und/oder Polschlingen eingebunden und ein textiles Substrat, und/oder ein Vlies, und/oder ein Filz und/oder ein Schaum zulaminiert. Das zulaminierte textile Substrat bzw. der Vlies bzw. der Filz, kann dabei aus einem oder mehreren unterschiedlichen Materialien bestehen, insbesondere aus natürlichen und/oder synthetischen anorganischen und/oder organischen Materialien wie z. B. Wolle, Baumwolle, Sisal, Jute, Stroh, Hanf, Flachs, Seide, (Co)Polyamid, Polyethylen, Co(polyester), Polypropylen und/oder Mischungen dieser Materialien. Alternativ dazu oder zusätzlich, kann mit dem gleichen Auftragssystem, auch eine Schwerbeschichtungsmasse appliziert werden. In einer besonders bevorzugten Ausführungsform wird der verwendete Schmelzkleber bzw. die verwendete

Beschichtungsmasse so gewählt, dass nach dem Auftrag eine schnelle Verfestigung erfolgt, die ein sofortiges Aufrollen des Teppichs unmittelbar nach der Herstellung erlaubt. In einer weiteren besonders bevorzugten Ausführungsform erfolgt zunächst die Noppen- und/oder Filamenteinbindung der Teppichrohware unter Verwendung mindestens eines erfindungsgemäßen Polymers, wobei der so fixierte teilfertige Teppich unmittelbar nach der Fixierung aufgerollt wird. In einem separaten Arbeitsschritt erfolgt darauf folgend die Auftragung einer Schwerbeschichtungsmasse welche vorzugsweise ebenfalls mindestens ein erfindungsgemäßes Polyolefin enthält mit anschließender Formgebung des schwerbeschichteten Teppichs z. B. durch Stanzen.

Ein weiterer Gegenstand der vorliegenden Erfindung sind Bodenbeläge enthaltend Polyolefine, wobei die Polyolefine maximal 30 ma-% Ethylen, entweder 70-100 ma-% oder maximal 30 ma-% Propylen und/oder entweder 70-100 ma-% oder maximal 25 ma-% 1-Buten enthalten, wobei die Summe der Anteile 100 ma-% beträgt, und die durch $^{13}$C-NMR bestimmte Triadenverteilung für Propentriaden einen ataktischen Anteil von 20 - 55 ma-%, einen syndiotaktischen Anteil von maximal 30 ma-% und einen isotaktischen Anteil von 40 - 80 ma-% aufweist und/oder die durch $^{13}$C-NMR bestimmte Triadenverteilung für 1-Butentriaden einen ataktischen Anteil von 2 - 85 ma-% und einen syndiotaktischen Anteil von maximal 20 ma-% aufweist. Insbesondere handelt es sich bei den Bodenbelägen um Teppiche oder Kunstrasen.

Bei den Teppichelementen handelt es sich beispielsweise um sogenannte Meterware, um Teppichfliesen oder um einen nachträglich verformbaren Autoteppich.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

**Beispiele:**

**Analytik:**

**a) Hochtemperatur-$^{13}$C-NMR**

Die Polymerzusammensetzung wird über Hochtemperatur-$^{13}$C-NMR bestimmt. Die $^{13}$C-NMR-Spektroskopie von Polymeren ist beispielsweise in folgenden Publikationen beschrieben:

[1] S. Berger, S. Braun, H.-O. Kalinowski, 13C-NMR-Spektroskopie, Georg Thieme Verlag Stuttgart 1985
[2] A.E. Tonelli, NMR Spectroscopy and Polymer Microstructure, Verlag Chemie Weinheim 1989
[3] J.L. Koenig, Spectroscopy of Polymers, ACS Professional Reference Books, Washington 1992
[4] J.C. Randall, Polymer Sequence Determination, Academic Press, New York 1977
[5] A. Zambelli et al: Macomolecules, 8, 687 (1975)
[6] A. Filho, G.Galland: J.Appl.Polym.Sci., 80, 1880 (2001)

**b) Hochtemperatur-GPC**

Die Bestimmung des Molekulargewichts erfolgt über Hochtemperatur-GPC. Die Bestimmung wird gemäß ASTM D6474-99 durchgeführt; jedoch bei einer höheren Temperatur (160 °C statt 140 °C) sowie einem geringeren Injektionsvolumen von 150 µl statt 300 µl. Als weitere Literatur zur GPC-Analyse von Polymeren sei angeführt:

H. G. Elias: "Makromoleküle"; Bd.2; Wiley-VCH; Weinheim 2001;
Z. Grubisic, P. Rempp, H. Benoit; Polym. Lett.; 5; 753 (1967);
K.A. Boni, F.A. Sliemers, P.B. Stickney; J.Polym.Sci.;A2; 6; 1579 (1968);
D. Goedhart, A. Opschoor; J.Polym.Sci.;A2; 8; 1227 (1970);
A. Rudin, H.L.W. Hoegy; J.Polym.Sci.;A1; 10; 217 (1972);
G. Samay, M. Kubin, J. Podesva; Angew. Makromol. Chem.; 72; 185 (1978);
B. Ivan, Z. Laszlo-Hedvig, T. Kelen, F. Tüdos; Polym. Bull.;8; 311 (1982);
K.-Q. Wang, S.-Y. Zhang, J. Xu, Y. Li, H.P. Li; J.Liqu.Chrom.; 5; 1899 (1982);
T.G. Scholte, H.M. Schoffeleers, A.M.G. Brands; J.Appl.Polym.Sci.; 29; 3763 (1984).

Als Lösungsmittel wird Trichlorbenzol verwendet. Die Messung erfolgt bei einer Säulentemperatur von 160 °C. Die dabei für die Auswertung der Elutionskurven verwendete universelle Kalibrierung wird auf Basis von Polyolefin-Standards durchgeführt. Die Ergebnisse sind nicht mit Messungen vergleichbar, deren Kalibrierungen auf Basis von

artfremden Polymeren - z. B. auf Polystyrol-Basis - erfolgte, oder die ohne universelle Kalibrierung erfolgt sind, da ansonsten ein unzulässiger Vergleich unterschiedlicher dreidimensionaler Polymerstrukturen bzw. hydrodynamischer Radien erfolgt. Auch der Vergleich mit Messungen, die andere als das angegebene Lösungsmittel verwenden, ist nicht zulässig, da in unterschiedlichen Lösungsmitteln unterschiedliche dreidimensionale Polymerstrukturen bzw. hydrodynamische Radien vorliegen können, die zu einem abweichenden Ergebnis bei der Molekulargewichtsbestimmung führen.

Die Polydispersität $P_d$ ist als Quotient von zahlenmittlerer und gewichtsmittlerer Molmasse definiert. Sie ist insbesondere ein Maß für die Breite der vorliegenden Molmassenverteilung, die wiederum Rückschlüsse auf das vorliegende Polymerisationsverhalten zulässt. Sie wird über Hochtemperatur-GPC bestimmt. Die Polydispersität ist in gewissen Grenzen für eine bestimmte Katalysator-Cokatalysator-Kombination charakteristisch. Die Polydispersität hat einen relativ starken Einfluss auf die Klebrigkeit des Materials bei Raumtemperatur sowie auf die Haftung.

Bei der Bestimmung der Molmassen mittels Gel-Permeations-Chromatographie (GPC) spielt der hydrodynamische Radius der in Lösung vorliegenden Polymerketten eine besondere Rolle. Als Detektionsmechanismen werden neben Wärmeleitfähigkeits-, RI-(Brechungsindex) bzw. UVNIS- und FTIR- oder Lichtstreuungsdetektoren auch Viskositätsdetektoren eingesetzt. Betrachtet man die Polymerkette als ungestörtes Knäuel, so lässt sich die Beziehung zwischen ihrer Grenzviskositätszahl und der Molmasse empirisch durch die sog. KMHS-Gleichung

$$[\eta] = K_V M_V^{\alpha}$$

beschreiben (H.-G. Elias, Makromoleküle, Band 2, 6. Auflage, Wiley-VCH, Weinheim 2001, S. 411-413). Kv und $\alpha$ sind dabei Konstanten, die sowohl von der Konstitution, Konfiguration und Molmasse des Polymeren beeinflusst werden als auch vom Lösungsmittel und der Temperatur. Die wesentliche Aussage des Alpha-Wertes in der vorliegenden Erfindung ist die des hydrodynamischen Radius, dieser hängt mehr oder weniger von den an den Polymerketten befindlichen Verzweigungsstellen ab. Bei einer geringen Verzweigung ist der Alpha-Wert hoch, bei einer höheren Verzweigung niedrig.

**c) Rheologie**

Die Rheologischen Messungen erfolgen gemäß ASTM D 4440-01 ("Standard

Test Method for Plastics: Dynamic Mechanical Properties Melt Rheology") unter Verwendung eines Rheometers MCR 501 der Firma Anton Paar mit einer Platte-Platte-Geometrie (Plattendurchmesser: 50 mm) als Oszillationsmessung. Als maximale Probendeformation wird in allen Messungen 1 % verwendet, die temperaturabhängigen Messungen werden bei einer Messfrequenz von 1 Hz und einer Abkühlgeschwindigkeit von 1,5 K/min durchgeführt.

Die Schmelzviskosität wird durch Oszillationsrheometrie bestimmt, wobei mit einer Schergeschwindigkeit von 1 Hz gearbeitet wird. Die maximale Deformation der Probe wird so gewählt, dass sich die Probe während der gesamten Messdauer im linear viskoelastischen Bereich befindet. Viskoelastische Materialien zeichnen sich gegenüber Hookschen Festkörpern durch die Fähigkeit aus, aus einer Deformation resultierende Spannungen über eine bestimmte Zeit dissipativ abzubauen (Relaxation). Im Gegensatz zu Newtonschen Flüssigkeiten, die unter Einwirkung einer Scherung/ Dehnung einer ausschließlich irreversiblen Verformung unterliegen, können viskoelastische Fluide einen Teil der Deformationsenergie zurückgewinnen, nachdem die Scherkraft entfernt wurde (sog. "Memory Effekt") [N.P.Cheremisinoff; "An Introduction to Polymer Rheology and Processing"; CRC Press; London; 1993]. Ein weiteres Kennzeichen polymerer Schmelzen ist das Auftreten einer sogenannten Strukturviskosität. Als solche bezeichnet man ein Verhalten, bei dem die Schubspannung als auftretende Kraft die Ausgangsstruktur des Materials in Abhängigkeit von der Schergeschwindigkeit abbaut. Da dieser Abbauprozess eine Mindestschergeschwindigkeit voraussetzt, fließt das Material unterhalb dieser Schergeschwindigkeit wie eine Newtonsche Flüssigkeit. Eine Erklärung liefert das Prinzip von Le Chatelier, wobei das "Ausweichen" der strukturviskosen Flüssigkeit (vor der mechanischen Beanspruchung) in der Ausrichtung entlang der Schubflächen zur Verminderung des Reibungswiderstandes besteht. Letzteres führt zum Abbau der Gleichgewichtsstruktur des Anfangszustandes und zum Aufbau einer schuborientierten Struktur, was wiederum ein erleichtertes Fließen (Viskositätsverminderung) zur Folge hat. In Polymerschmelzen ist der Newtonsche Bereich nur bei sehr kleinen Schergeschwindigkeiten bzw. kleinen Scheramplituden wahrnehmbar. Seine Bestimmung ist über rheometrische Testmethoden (Amplituden-"Sweeps", d. h. Messung bei fester Frequenz in Abhängigkeit von der Scheramplitude) möglich und notwendig, wenn die Messung im reversiblen, d. h. reproduzierbaren Bereich durchgeführt werden soll [R.S.Lenk; "Rheologie der Kunststoffe"; C.Hanser Verlag; München; 1971; J.Meissner; "Rheologisches Verhalten von Kunststoff-Schmelzen und -Lösungen" in: "Praktische Rheologie der Kunststoffe"; VDI-Verlag; Düsseldorf; 1978; J.-F. Jansson; Proc.8th.Int.Congr.Rheol.; 1980; Vol.3]. Die Schwingungsrheometrie ist auf Grund ihrer geringen Krafteinwirkung, ihrer geringen Deformation und der somit geringen Auswirkung auf die Probenmorphologie besonders gut zur Untersuchung von Materialien geeignet, die ein strukturviskoses Verhalten zeigen.

**d) Nadelpenetration**

Die Nadelpenetration wird gemäß DIN EN 1426 bestimmt.

**e) DSC**

Die Bestimmung der Schmelzenthalpie, der Glasübergangstemperatur und des Schmelzbereichs des kristallinen Anteils erfolgt über Differentialkalorimetrie (DSC) gemäß DIN 53 765 aus der 2. Aufheizkurve bei einer Heizrate von 10 K/min. Der Wendepunkt der Wärmestromkurve wird als Glasübergangstemperatur ausgewertet.

**f) Xylollöslichkeit**

Es wird ein Xylol-Isomerengemisch verwendet, wobei das Polymer unter

Rückfluss gelöst und dann die Lösung auf Raumtemperatur abgekühlt wird. 2 g Polyolefin werden in 250 mL Xylol unter Rühren und Heizen bis zum Siedepunkt von Xylol gelöst. Nachdem 20 min unter Rückfluss gekocht wurde, lässt man die Polymerlösung auf 25°C abkühlen. Ungelöstes bzw. ausgefallenes Polyolefin wird mit abgenutscht (15 cm-Nutsche, Sartorius 390-Filterpapier) und getrocknet. Die überbleibende Polymerlösung wird in einem 5fachen Überschuss an Methanol (mit einem Tropfen 37-prozentiger wässriger HCl versetzt) ausgefällt. Der entstehende Niederschlag wird abgenutscht und bei 80 °C im Trockenschrank (Vakuum) getrocknet.

**g) Löslichkeit in THF**

Die Löslichkeit in THF ist ein Kennzeichen teilkristalliner Polyolefine. Die

Durchführung erfolgt analog zu den Lösungsversuchen in Xylol.

**h) Zugfestigkeit und Reißdehnung**

Die Bestimmung der Zugfestigkeit und Reißdehnung erfolgt nach DIN EN ISO 527-3.

**i) Erweichungspunkt (Ring&Kugel)**

Die Bestimmung des Erweichungspunktes nach der Ring- und Kugelmethode erfolgt nach DIN EN 1427.

**j) Klebscherfestigkeit**

Die Bestimmung der Klebscherfestigkeit erfolgt nach DIN EN 1465.

Verwendung von Metallocen-Polvolefinen mit ataktischen Strukturelementen in Bodenbelägen:

1. Eingesetzte Polymere

**a) Mikrostruktur**

Die Polymerzusammensetzung sowie die Mikrostruktur der hergestellten Polymere werden über Hochtemperatur-$^{13}C$-NMR bestimmt.

| Polymer | 1 | 2 | 4 | 5 | 6 | 7 |
|---|---|---|---|---|---|---|
| Polymerzusammen-setzung | | | | | | |
| Ethylen [ma-%] | 7,4 | 7,5 | 9 | 12,6 | 18,6 | 14,9 |
| Propylen [m-a%] | 77 | 0 | 82 | 74,5 | 81,4 | 85,1 |
| 1-Buten [ma-%] | 15,6 | 92,5 | 9 | 12,9 | 0 | 0 |
| Propylen-Triaden | | | | | | |
| Isotaktisch [ma-%] | 75 | -- | 74 | 67 | 48 | 53 |
| Syndiotaktisch [ma-%] | 5 | -- | 6 | 13 | 19 | 15 |
| Ataktisch [ma-%] | 20 | -- | 20 | 20 | 34 | 32 |
| 1-Buten-Triaden | | | | | | |
| Isotaktisch [ma-%] | 45 | 68 | 28 | 32 | -- | -- |
| Syndiotaktisch [ma-%] | 5 | 6 | 9 | 9 | -- | -- |
| Ataktisch [ma-%] | 49 | 25 | 63 | 58 | -- | -- |
| Ethylen-Triaden [ma-%] | 0,7 | 1,4 | 0,7 | 5,6 | 0,8 | 0,4 |

| Polymer | 8 | 9 | 10 | 11 | 12 |
|---|---|---|---|---|---|
| Polymerzusammen-setzung | | | | | |
| Ethylen [ma-%] | 10 | 7,7 | 4 | 6,9 | 14 |
| Propylen [m-a%] | 90 | 92,3 | 96 | 93,1 | 86 |
| 1-Buten [ma-%] | 0 | 0 | 0 | 0 | 0 |
| Propylen-Triaden | | | | | |
| Isotaktisch [ma-%] | 60 | 72 | 74 | 66 | 66 |
| Syndiotaktisch [ma-%] | 11 | 7 | 6 | 12 | 10 |
| Ataktisch [ma-%] | 29 | 22 | 20 | 23 | 24 |
| 1-Buten-Triaden | | | | | |
| Isotaktisch [ma-%] | -- | -- | -- | -- | -- |
| Syndiotaktisch [ma-%] | -- | -- | -- | -- | -- |
| Ataktisch [ma-%] | -- | -- | -- | -- | |
| Ethylen-Triaden [ma-%] | 0,2 | 0 | 0 | 0 | 5,2 |

**b) Molmassen, Molmassenverteilung und Polymerverzweigung**

Die Bestimmung des Molekulargewichts erfolgt über Hochtemperatur-GPC. Die Bestimmung wird gemäß ASTM D6474-99 durchgeführt, jedoch bei einer höheren Temperatur (160 °C statt 140 °C) sowie einem geringeren Injektionsvolumen von 150 µl statt 300 µl. Beispiele für erfindungsgemäße und nicht erfindungsgemäße Molmassenverteilungen mit bzw. ohne niedermolekularen Anteil finden sich in den Zeichnungen.

| **Polymer** | **1** | **2** | **4** | **5** |
|---|---|---|---|---|
| **Modalität MMV** | monomodal | bimodal | monomodal | monomodal |
| **$M_w$ [g/mol]** | 30000 | 38200 | 83000 | 18400 |
| **Pd [-]** | 2,6 | 3,0 | 1,5 | 1,6 |
| **α-Wert [-]** | 0,58 | 0,74 | 1,04 | 1,04 |
| **Bestandteile 1000-500 D** | 0,3 | 0,01 | 0 | 0 |
| **Bestandteile < 500 D** | 0 | 0 | 0 | 0 |

| **Polymer** | **6** | **7** | **8** | **9** | **10** |
|---|---|---|---|---|---|
| **Modalität MMV** | Mono modal | Mono modal | Mono modal | Mono modal | bimodal |
| **$M_w$ [g/mol]** | 24900 | 27500 | 22800 | 19200 | 14000 |
| **Pd [-]** | 1,5 | 1,5 | 1,5 | 1,4 | 1,6 |
| **α-Wert [-]** | 0,83 | 0,82 | 0,86 | 0,93 | 0,82 |
| **Bestandteile 1000-500 D** | 0 | 0 | 0 | 0 | 0 |
| **Bestandteile < 500 D** | 0 | 0 | 0 | 0 | 0 |

| **Polymer** | **11** | **12** |
|---|---|---|
| **Modalität MMV** | Bimodal | Mono modal |
| **$M_w$ [g/mol]** | 11.600 | 43500 |
| **Pd [-]** | 1,61 | 2,4 |

| | | |
|---|---|---|
| **α-Wert [-]** | 0,82 | 0,56 |
| **Bestandteile 1000-500 D** | 0 | 0,1 |
| **Bestandteile < 500 D** | 0 | 0,01 |

**c) Thermische Eigenschaften:**

Die Bestimmung des Erweichungspunktes nach der Ring- und Kugelmethode erfolgt nach DIN EN 1427.

Die Bestimmung der Schmelzenthalpie, der Glasübergangstemperatur und des Schmelzbereichs des kristallinen Anteils erfolgt über

Differentialkalorimetrie (DSC) gemäß DIN 53 765 aus der 2. Aufheizkurve bei einer Heizrate von 10 K/min. Der Wendepunkt der Wärmestromkurve wird als Glasübergangstemperatur ausgewertet. Ein beispielhaftes DSC-Thermogram für ein erfindungsgemäßes Polyolefin findet sich in den Zeichnungen.

| **Polymer** | **1** | **2** | **4** | **5** |
|---|---|---|---|---|
| **Erweichungspunkt (R&K) [°C]** | 90 | 83 | 97 | 91 |
| **Anzahl der Schmelzpeaks beim 1. Aufheizen** | 2 | 3 | 1 | 2 |
| **1. Aufheizen $T_M$ [°C]** | 44<br>77 | 38<br>57<br>76 | 111 | 75<br>123 |
| **Anzahl der Schmelzpeaks beim 2. Aufheizen** | 1 | 2 | 1 | 2 |
| **2. Aufheizen $T_M$ [°C]** | 75 | 54<br>73 | 96 | 70<br>123 |
| **2. Aufheizen : $\Delta H_M$ [J/g]** | 12 | 14,4 | 7,55 | 14 |
| **2. Aufheizen: $T_g$ [°C]** | - 35 | - 44 | - 35 | - 34 |
| **Kaltkristallisation (Peak bei: [°C])** | Nein<br>(-) | Ja<br>(25) | Nein<br>(-) | Ja<br>(6) |
| **2. Aufheizen: $T_M$ -Offset [°C]** | 101 | 90 | 125 | 125 |
| **$\Delta$ [$T_M$-$T_{Erw.}$] [K]** | 15 | 10 | 1 | 32 |

| Polymer | 6 | 7 | 8 | 9 | 10 |
|---|---|---|---|---|---|
| Erweichungspunkt (R&K) [°C] | 102 | 110 | 113 | 107 | 117 |
| Anzahl der Schmelzpeaks beim 1. Aufheizen | 1 | 1 | 3 | 2 | 3 |
| 1. Aufheizen $T_M$ [°C] | 42 | 42 | 42<br>106<br>115 | 95<br>110 | 50<br>107<br>120 |
| Anzahl der Schmelzpeaks beim 2. Aufheizen | 0 | 0 | 2 | 2 | 2 |
| 2. Aufheizen $T_M$ [°C] | -- | -- | 101<br>118 | 97<br>112 | 108<br>120 |
| 2. Aufheizen : $\Delta H_M$ [J/g] | -- | -- | 5 | 13 | 30 |
| 2. Aufheizen: $T_g$ [°C] | - 39 | - 33 | - 30 | - 27 | - 26 |
| 2. Aufheizen, Kaltkristallisation (Peak bei: [°C]) | Nein (-) | Nein (-) | Nein (-) | Nein (-) | Nein (-) |
| 2. Aufheizen: $T_M$ -Offset [°C] | -- | -- | 125 | 123 | 126 |
| $\Delta$ [$T_M$-$T_{Erw.}$] [K] | -- | -- | 5 | 5 | 3 |

*Glasübergangsstufe nur sehr schwach ausgeprägt

| Polymer | 11 | 12 |
|---|---|---|
| Erweichungspunkt (R&K) [°C] | 107 | 127 |
| Anzahl der Schmelzpeaks beim 1. Aufheizen | 3 | 1 |
| 1. Aufheizen $T_M$ [°C] | 50<br>95<br>106 | 41 |
| Anzahl der Schmelzpeaks beim 2. Aufheizen | 2 | 1 |
| 2. Aufheizen $T_M$ [°C] | 65 | 113 |

| | | |
|---|---|---|
| | 97 | |
| **2. Aufheizen : $\Delta H_M$ [J/g]** | 30 | 2,1 |
| **2. Aufheizen: $T_g$ [°C]** | - 29 | - 40 |
| **2. Aufheizen, Kaltkristallisation (Peak bei: [°C])** | Nein (-) | Nein (-) |
| **2. Aufheizen: $T_M$ -Offset [°C]** | 120 | 142 |
| **$\Delta$ [$T_M$-$T_{Erw.}$] [K]** | 10 | 14 |

**d) Klebtechnische Eigenschaften**

Die Ermittlung der Klebscherfestigkeit erfolgt nach DIN EN 1465. Die Polymerproben werden bei 190 °C im Trockenschrank unter Schutzgasatmosphäre (z. B. Stickstoff, Argon usw.) eine Stunde aufgeschmolzen und anschließend bei einer Temperatur von 170 °C (mit Hilfe eines Thermofühlers) auf einen Prüfkörper appliziert. Dieser wird innerhalb von 20 Sekunden mit einem weiteren Prüfkörper des gleichen Materials auf einer Fläche von 4 $cm^2$ einfach überlappend zusammengefügt und 5 Minuten mit einem Gewicht von 2 Kg aneinandergepresst. Überstehendes Klebpolymer wird entfernt. Anschließend lagert das Verklebungsmuster 7 Tage bei 20 °C / 65 % rel. Luftfeuchte im Klimaschrank und wird anschließend mittels Zugprüfung auf seine mechanischen Eigenschaften hin getestet. Als Prüfmaterialien werden unbehandeltes Buchenholz (Dicke: 2 mm), unbehandeltes isotaktisches Polypropylen (Dicke: 2 mm, isotaktisches Polypropylen, "PP-DWST"/ Hersteller: Simona AG), Unbehandeltes Polyethylen (Dicke: 2 mm; "PE-HWST", Hersteller: Simona AG) und unbehandeltes Poly(vinylchlorid) (Dicke: 2mm, Hart-PVC "Kömmadur ES"; Hersteller Kömmerling-Profine)) verwendet.

| **Polymer** | **1** | **2** | **4** | **5** | **6** |
|---|---|---|---|---|---|
| **Nadelpenetration [0,1mm]** | 18 | 15 | 11 | 21 | 52 |
| **Schmelzviskosität bei 190 °C [mPa*s]** | 2200 | 3000 | 17000 | 600 | 3800 |

| | | | | | |
|---|---|---|---|---|---|
| Klebscherfestigkeit PP/PP [N/mm²] | 1,33 | 0,92 | 2 | 0,66 | 0,35 |
| Klebscherfestigkeit Buche/Buche [N/mm²] | 1,52 | 1,4 | 1,9 | 0,84 | 0,4 |
| Klebscherfestigkeit PE/PE [MPa] | 0,3 | 0,27 | 0,33 | 0,45 | 0,38 |
| Klebscherfestigkeit PVC/PVC [MPa] | 0,5 | 0,44 | 0,62 | 0,62 | 0,36 |
| Zugfestigkeit [MPa] | 1,8 | 2,4 | 2,3 | 1 | 0,2 |
| Reißdehnung [%] | 70 | 25 | 430 | 20 | 140 |
| Xylollöslichkeit [ma-%] | 100 | 100 | 100 | 92 | 100 |
| THF-Löslichkeit [ma-%] | 99,8 | 99,5 | 100 | 92,2 | 99,3 |

| Polymer | 7 | 8 | 9 | 10 | 11 | 12 |
|---|---|---|---|---|---|---|
| Nadelpenetration [0,1mm] | 32 | 17 | 6 | 6 | 15 | 17 |
| Schmelzviskosität bei 190 °C [mPa*s] | 3700 | 1400 | 1300 | 570 | 500 | 5600 |
| Klebscherfestigkeit PP/PP [N/mm²] | 0,8 | 2,43 | 2,61 | 0,6 | 0,95 | 2,25 |
| Klebscherfestigkeit Buche/Buche [N/mm²] | 0,7 | 1,5 | 2,2 | 1,70 | 1,90 | 2,20 |
| Klebscherfestigkeit PE/PE [MPa] | 0,6 | 0,42 | 0,33 | 0,13 | 0,25 | 0,34 |
| Klebscherfestigkeit PVC/PVC [MPa] | 0,52 | 0,52 | 0,32 | 0,1 | 0,15 | 1,05 |
| Zugfestigkeit [MPa] | 0,5 | 2 | 5,2 | 1,2 | 2,2 | 2,1 |
| Reißdehnung [%] | 112 | 44 | 56 | 10 | 20 | 60 |
| Xylollöslichkeit [ma-%] | 100 | 98 | 99 | 84,9 | 87,8 | 95 |
| THF-Löslichkeit [ma-%] | 100 | 96 | 96 | 70,2 | 73,3 | 82,4 |

**d) Rheologische Eigenschaften**

Beispiele für den frequenzabhängigen Verlauf von komplexer Viskosität,

Speichermodul und Verlustmodul erfindungsgemäß eingesetzter Polyolefine finden sich in den Zeichnungen.

**Beispielformulierungen für die Noppen- und Filamenteinbindung von Teppichrohware**

**Vorgehensweise:**

Nach Aufschmelzen der erfindungsgemäßen Polymere bei 190 °C im Trockenschrank unter Schutzgasatmosphäre (z. B. Stickstoff, Argon, usw.) für eine Stunde werden die Formulierungsbestandteile zugegeben, gegebenenfalls Aufgeschmolzen und dann mit einem geeigneten Mischapparat (z. B. auf einer Heizplatte mit einem IKA-Rührer mit Kneter) homogen vermischt. Die Materialeigenschaften der Formulierungen werden bestimmt, anschließend erfolgt die Beschichtung der Teppichrohware durch Mehrwalzenauftrag und Auftrag mittels Breitschlitzdüse und Messerrakel.

**Prüfungen der Poleinbindung von VESTOPLAST-basierende Hot-Melt-Beschichtungen bei Tuftingteppichen**

| **Versuchs - Nr.** | | **A** | **B** | **C** | **D** | **E** |
|---|---|---|---|---|---|---|
| Erfindungsgemäßes Polymer 9 (Viskosität bei 190 °C: 3200mPa*s Penetration 19 0,1 mm, EP: 108ªC) | Gew.-% | 60 | 65 | 55 | 55 | 45 |
| VESTOPLAST® 750, Fa. Evonik Degussa GmbH | Gew.-% | | | 5 | 5 | 5 |
| ESCOREZ 5300, Fa. ExxonMobil Chemical | Gew.-% | 30 | 30 | 30 | 30 | 30 |
| VESTOWAX® A415, Fa. Evonik Degussa GmbH | Gew.-% | 10 | 5 | 10 | 5 | 5 |
| Mikrosöhl (Kreide) | Gew.-% | | | | | 10 |
| | | | | | | |
| Erweichungspunkt (R.u.K.) | °C | 112 | 114 | 111 | 113 | 121 |
| Nadelpenetration | 0,1 mm | 13,5 | 14,4 | 14.0 | 14,5 | 13,5 |
| Schmelzviskosität bei 190 °C | mPa*s | 2340 | 2620 | 2580 | 2730 | 4200 |
| **Pre-coating auf einen Polyamid- Tufting-Teppichrücken 620 g/m$^2$** | | | | | | |
| **Mehrwalzenauftrag** | | | | | | |
| **Versuchs - Nr.** | | **A** | **B** | **C** | **D** | **E** |
| | | | | | | |
| Beschichtungsgewicht | g/m$^2$ | 310 | 320 | 320 | 300 | 350 |
| Noppenausreißfestigkeit | kg | 5,6 | 5,7 | 5,7 | 5,3 | 6,1 |
| | | | | | | |
| **Prüfung mit dem Tretradgerät in Anlehnung an System Lisson EN 1963** | | | | | | |
| visuelle Beurteilung nach Anzahl der Trittfrequenzen | 750 | + + | + + | + + | + + | + + |
| | 1000 | + + | + + | + + | + + | + + |
| | 1500 | + + | ++ | ++ | ++ | ++ |
| | 2300 | + + | ++ | ++ | +/++ | +/++ |
| | | | | | | |

(fortgesetzt)

| Auftrag mit der Breitschlitzdüse | | | | | | |
|---|---|---|---|---|---|---|
| **Versuchs - Nr.** | | **A** | **B** | **C** | **D** | **E** |
| Beschichtungsgewicht | $g/m^2$ | 420 | 460 | 420 | 400 | 400 |
| Noppenausreißfestigkeit | kg | 5,6 | 5,2 | 6,1 | 6,1 | 6,1 |
| | | | | | | |
| **Prüfung mit dem Tretradgerät in Anlehnung an System Lisson EN 1963** | | | | | | |
| visuelle Beurteilung nach Anzahl der Trittfrequenzen | 750 | + + | + + | + + | + + | + + |
| | 1000 | + + | + + | + + | + + | + + |
| | 1500 | + + | + + | + + | + + | + + |
| | 2300 | + + | ++ | ++ | +/++ | +/++ |
| **Auftrag mit dem Messerrakel** | | | | | | |
| **Versuchs - Nr.** | | **A** | **B** | **C** | **D** | **E** |
| Beschichtungsgewicht | $g/m^2$ | 400 | 430 | 435 | 385 | 385 |
| Noppenausreißfestigkeit | kg | 5,6 | 5,4 | 5,8 | 5,9 | 5,9 |
| | | | | | | |
| **Prüfung mit dem Tretradgerät in Anlehnung an System Lisson EN 1963** | | | | | | |
| visuelle Beurteilung nach Anzahl der Trittfrequenzen | 750 | + + | + + | + + | + + | + + |
| | 1000 | + + | + + | + + | + + | + + |
| | 1500 | + + | +/+ + | + + | +/+ + | +/+ + |
| | 2300 | + + | +/++ | + + | +/+ + | +/+ + |
| o mäßig + gut + + sehr gut | | | | | | |

**Patentansprüche**

1. Verwendung von Polyolefinen in Bodenbelägen, **dadurch gekennzeichnet, dass** die Polyolefine maximal 30 ma-% Ethylen, entweder 70 - 100 ma-% oder maximal 30 ma-% Propylen und/oder entweder 70 - 100 ma-% oder maximal 25 ma-% 1-Buten oder eines anderen linearen 1 -Olefins enthalten, wobei die Summe der Anteile 100 ma-% beträgt, und die durch $^{13}$C-NMR bestimmte Triadenverteilung für Propentriaden einen ataktischen Anteil von 20 - 55 ma-%, einen isotaktischen Anteil von 40 - 80 ma-% und einen syndiotaktischen Anteil von maximal 30 ma-%, aufweist und/oder die durch $^{13}$C-NMR bestimmte Triadenverteilung für 1-Butentriaden einen ataktischen Anteil von 2 - 85 ma-% und einen syndiotaktischen Anteil von maximal 20 ma-%, aufweist.

2. Verwendung gemäß Anspruch 1, **dadurch gekennzeichnet, dass** es sich bei den Bodenbelägen um Teppiche oder Kunstrasen handelt.

3. Verwendung gemäß Anspruch 1 oder 2, **dadurch gekennzeichnet, dass** die Polyolefine als oder in Klebstoffen eingesetzt werden.

4. Verwendung gemäß einem oder mehreren der Ansprüche 1 bis 3, **dadurch gekennzeichnet, dass** die Polyolefine als oder in Schwerbeschichtungsmassen eingesetzt werden.

5. Verwendung gemäß Anspruch 3, **dadurch gekennzeichnet, dass** es sich bei den Klebstoffen um Heißschmelzklebstoffformulierungen handelt.

6. Verwendung gemäß einem oder mehreren der Ansprüche 3 bis 5, **dadurch gekennzeichnet, dass** die Klebstoffe oder Schwerbeschichtungsmassen zusätzlich anorganische und/oder organische Füllstoffe, anorganische und/oder organische Pigmente, synthetische und/oder natürliche Harze, anorganische und/oder organische, synthetische und/oder natürliche Polymere, anorganische und/oder organische, synthetische und/oder natürliche Fasern, anorganische und/oder organische Stabilisatoren, anorganische und/oder organische Flammschutzmittel, Harze, amorphe Poly($\alpha$-Olefine), Polymere mit polaren Gruppen, Polymere auf Basis von Ethylen, Butadien, Styrol und/oder Isopren, elastomere Polymere auf Basis von Ethylen, Propylen, Acrylnitril, einem Dien und/oder einem cyclischen Dien, Styrol, Wachse, ein oder mehrere synthetische oder natürliche Öle und/oder UV-Aktive Substanzen enthalten.

7. Verwendung gemäß einem oder mehreren der Ansprüche 1 bis 6, **dadurch gekennzeichnet, dass** die Polyolefine zur Noppen- und Filamenteinbindung und/oder zur Rückenbeschichtung eingesetzt werden.

8. Verwendung gemäß einem oder mehreren der Ansprüche 1 bis 7, **dadurch gekennzeichnet, dass** ein Auftragsgewicht von 20 bis 1500 g/m$^2$ verwendet wird.

9. Verwendung gemäß einem oder mehreren der Ansprüche 1 bis 8, **dadurch gekennzeichnet, dass** die Bodenbeläge auf natürlichen und/oder synthetischen Fasern basieren.

10. Verwendung gemäß einem oder mehreren der Ansprüche 1 bis 9, **dadurch gekennzeichnet, dass** die Nadelpenetration der Polyolefine bei maximal 60 * 0,1 mm liegt.

11. Verwendung gemäß einem oder mehreren der Ansprüche 1 bis 10, **dadurch gekennzeichnet, dass** es sich bei den erfindungsgemäßen Polyolefinen um Copolymere aus Ethylen, Propylen und/oder 1-Buten handelt, wobei die Copolymere maximal 30 ma-% Ethylen enthalten.

12. Verwendung gemäß einem oder mehreren der Ansprüche 1 bis 11, **dadurch gekennzeichnet, dass** sie bei einer Temperatur von 190 °C, einer Deformation von maximal 1 % und einer Messfrequenz von 1 Hz eine komplexe Schmelzviskosität von 500 bis 100000 mPa*s aufweisen.

13. Verwendung gemäß einem oder mehreren der Ansprüche 1 bis 12, **dadurch gekennzeichnet, dass** die mittels DSC bestimmte Glasübergangstemperatur der Polyolefine bei maximal -8°C liegt.

14. Schmelzklebstoffe zur Noppen- und/oder Filamenteinbindung **dadurch gekennzeichnet dass** sie Polyolefine mit maximal 30 ma-% Ethylen, entweder 70 - 100 ma-% oder maximal 30 ma-% Propylen und/oder entweder 70 - 100 ma-% oder maximal 25 ma-% 1-Buten oder eines anderen linearen 1-Olefins enthalten, wobei die Summe der Anteile 100 ma-% beträgt, und die durch $^{13}$C-NMR bestimmte Triadenverteilung für Propentriaden einen ataktischen Anteil von 20 - 55 ma-%, einen isotaktischen Anteil von 40 - 80 ma-% und einen syndiotaktischen Anteil von maximal 30 ma-%, aufweist und/oder die durch $^{13}$C-NMR bestimmte Triadenverteilung für 1-Butentriaden einen ataktischen Anteil von 2 - 85 ma-% und einen syndiotaktischen Anteil von maximal 20 ma-%, aufweist, enthalten.

15. Schwerbeschichtungsmassen für die Herstellung von Bodenbelägen **dadurch gekennzeichnet, dass** sie Polyolefine mit maximal 30 ma-% Ethylen, entweder 70 - 100 ma-% oder maximal 30 ma-% Propylen und/oder entweder 70 - 100 ma-% oder maximal 25 ma-% 1-Buten oder eines anderen linearen 1-Olefins enthalten, wobei die Summe der Anteile 100 ma-% beträgt, und die durch $^{13}$C-NMR bestimmte Triadenverteilung für Propentriaden einen ataktischen Anteil von 20 - 55 ma-%, einen isotaktischen Anteil von 40 - 80 ma-% und einen syndiotaktischen Anteil von maximal 30 ma-%, aufweist und/oder die durch $^{13}$C-NMR bestimmte Triadenverteilung für 1-Butentriaden einen ataktischen Anteil von 2 - 85 ma-% und einen syndiotaktischen Anteil von maximal 20 ma-%, aufweist, enthalten.

16. Bodenbeläge enthaltend Polyolefine, wobei die Polyolefine maximal 30 ma-% Ethylen, entweder 70 - 100 ma-% oder maximal 30 ma-% Propylen und/oder entweder 70 - 100 ma-% oder maximal 25 ma-% 1-Buten oder eines anderen linearen 1-Olefins enthalten, wobei die Summe der Anteile 100 ma-% beträgt, und die durch $^{13}$C-NMR bestimmte Triadenverteilung für Propentriaden einen ataktischen Anteil von 20 - 55 ma-%, einen isotaktischen Anteil von 40 - 80 ma-% und einen syndiotaktischen Anteil von maximal 30 ma-%, aufweist und/oder die durch $^{13}$C-NMR bestimmte Triadenverteilung für 1-Butentriaden einen ataktischen Anteil von 2 - 85 ma-% und einen syndiotaktischen Anteil von maximal 20 ma-%, aufweist

17. Bodenbeläge gemäß Anspruch 16, **dadurch gekennzeichnet, dass** es sich um Teppiche oder Kunstrasen handelt.

## Claims

1. Use of polyolefins in floor coverings, **characterized in that** the polyolefins contain not more than 30% by mass of ethylene, either 70-100% by mass or not more than 30% by mass of propylene and/or either 70-100% by mass or not more than 25% by mass of 1-butene or of another linear 1-olefin, with the sum of the proportions being 100% by mass, and the triad distribution for propene triads determined by $^{13}C$-NMR has an atactic proportion of 20-55% by mass, an isotactic proportion of 40-80% by mass and a syndiotactic proportion of not more than 30% by mass and/or the triad distribution for 1-butene triads determined by $^{13}C$-NMR has an atactic proportion of 2-85% by mass and a syndiotactic proportion of not more than 20% by mass.

2. Use according to Claim 1, **characterized in that** the floor coverings are carpets or artificial lawns.

3. Use according to Claim 1 or 2, **characterized in that** the polyolefins are used as or in adhesives.

4. Use according to one or more of Claims 1 to 3, **characterized in that** the polyolefins are used as or in heavy coating compositions.

5. Use according to Claim 3, **characterized in that** the adhesives are hot melt adhesive formulations.

6. Use according to one or more of Claims 3 to 5, **characterized in that** the adhesives or heavy coating compositions additionally contain inorganic and/or organic fillers, inorganic and/or organic pigments, synthetic and/or natural resins, inorganic and/or organic, synthetic and/or natural polymers, inorganic and/or organic, synthetic and/or natural fibres, inorganic and/or organic stabilizers, inorganic and/or organic flame retardants, resins, amorphous poly(a-olefins), polymers having polar groups, polymers based on ethylene, butadiene, styrene and/or isoprene, elastomeric polymers based on ethylene, propylene, acrylonitrile, a diene and/or a cyclic diene, styrene, waxes, one or more synthetic or natural oils and/or UV-active substances.

7. Use according to one or more of Claims 1 to 6, **characterized in that** the polyolefins are used for nap and filament binding and/or for rear-side coating

8. Use according to one or more of Claims 1 to 7, **characterized in that** an application weight of from 20 to 1500 g/m$^2$ is used.

9. Use according to one or more of Claims 1 to 8, **characterized in that** the floor coverings are based on natural and/or synthetic fibres.

10. Use according to one or more of Claims 1 to 9, **characterized in that** the needle penetration of the polyolefins is not more than 60 * 0.1 mm.

11. Use according to one or more of Claims 1 to 10, **characterized in that** the polyolefins according to the invention are copolymers of ethylene, propylene and/or 1-butene, with the copolymers containing not more than 30% by mass of ethylene.

12. Use according to one or more of Claims 1 to 11, **characterized in that** the polyolefins have a complex melt viscosity at a temperature of 190°C, a deformation of not more than 1% and a measurement frequency of 1 Hz of from 500 to 100000 mPa*s.

13. Use according to one or more of Claims 1 to 12, **characterized in that** the glass transition temperature of the polyolefins determined by means of DSC is not more than -8°C.

14. Hot melt adhesives for nap and/or filament binding, **characterized in that** the polyolefins contain not more than 30% by mass of ethylene, either 70-100% by mass or not more than 30% by mass of propylene and/or either 70-100% by mass or not more than 25% by mass of 1-butene or of another linear 1-olefin, with the sum of the proportions being 100% by mass, and the triad distribution for propene triads determined by $^{13}C$-NMR has an atactic proportion of 20-55% by mass, an isotactic proportion of 40-80% by mass and a syndiotactic proportion of not more than 30% by mass and/or the triad distribution for 1-butene triads determined by $^{13}C$-NMR has an atactic proportion of 2-85% by mass and a syndiotactic proportion of not more than 20% by mass.

**15.** Heavy coating compositions for the production of floor coverings, **characterized in that** the polyolefins contain not more than 30% by mass of ethylene, either 70-100% by mass or not more than 30% by mass of propylene and/or either 70-100% by mass or not more than 25% by mass of 1-butene or of another linear 1-olefin, with the sum of the proportions being 100% by mass, and the triad distribution for propene triads determined by $^{13}$C-NMR has an atactic proportion of 20-55% by mass, an isotactic proportion of 40-80% by mass and a syndiotactic proportion of not more than 30% by mass and/or the triad distribution for 1-butene triads determined by $^{13}$C-NMR has an atactic proportion of 2-85% by mass and a syndiotactic proportion of not more than 20% by mass.

**16.** Floor coverings containing polyolefins, wherein the polyolefins contain not more than 30% by mass of ethylene, either 70-100% by mass or not more than 30% by mass of propylene and/or either 70-100% by mass or not more than 25% by mass of 1-butene or of another linear 1-olefin, with the sum of the proportions being 100% by mass, and the triad distribution for propene triads determined by $^{13}$C-NMR has an atactic proportion of 20-55% by mass, an isotactic proportion of 40-80% by mass and a syndiotactic proportion of not more than 30% by mass and/or the triad distribution for 1-butene triads determined by $^{13}$C-NMR has an atactic proportion of 2-85% by mass and a syndiotactic proportion of not more than 20% by mass.

**17.** Floor coverings according to Claim 16, **characterized in that** they are carpet or artificial lawns.

## Revendications

**1.** Utilisation de polyoléfines dans des revêtements de sol, **caractérisée en ce que** les polyoléfines contiennent au plus 30 % en masse d'éthylène, 70 à 100 % en masse ou au plus 30 % en masse de propylène et/ou 70 à 100 % en masse ou au plus 25 % en masse de 1-butène ou d'une autre 1-oléfine linéaire, la somme des proportions étant de 100 % en masse, et la répartition des triades déterminée par RMN $^{13}$C pour les triades de propène présente une proportion atactique de 20 à 55 % en masse, une proportion isotactique de 40 à 80 % en masse et une proportion syndiotactique d'au plus 30 % en masse et/ou la répartition des triades déterminée par RMN $^{13}$C pour les triades de 1-butène présente une proportion atactique de 2 à 85 % en masse et une proportion syndiotactique d'au plus 20 % en masse.

**2.** Utilisation selon la revendication 1, **caractérisée en ce que** les revêtements de sol sont des tapis ou du gazon artificiel.

**3.** Utilisation selon la revendication 1 ou 2, **caractérisée en ce que** les polyoléfines sont utilisées en tant que ou dans des adhésifs.

**4.** Utilisation selon une ou plusieurs des revendications 1 à 3, **caractérisée en ce que** les polyoléfines sont utilisées en tant que ou dans des matériaux de revêtement lourds.

**5.** Utilisation selon la revendication 3, **caractérisée en ce que** les adhésifs sont des formulations d'adhésifs thermofusibles.

**6.** Utilisation selon une ou plusieurs des revendications 3 à 5, **caractérisée en ce que** les adhésifs ou matériaux de revêtement lourds contiennent également des charges inorganiques et/ou organiques, des pigments inorganiques et/ou organiques, des résines synthétiques et/ou naturelles, des polymères inorganiques et/ou organiques, synthétiques et/ou naturels, des fibres inorganiques et/ou organiques, synthétiques et/ou naturelles, des stabilisateurs inorganiques et/ou organiques, des agents ignifuges inorganiques et/ou organiques, des résines, des poly($\alpha$-oléfines) amorphes, des polymères contenant des groupes polaires, des polymères à base d'éthylène, de butadiène, de styrène et/ou d'isoprène, des polymères élastomères à base d'éthylène, de propylène, d'acrylonitrile, d'un diène et/ou d'un diène cyclique, de styrène, des cires, une ou plusieurs huiles synthétiques ou naturelles et/ou des substances actives sous UV.

**7.** Utilisation selon une ou plusieurs des revendications 1 à 6, **caractérisée en ce que** les polyoléfines sont utilisées pour la liaison de touffes et de filaments et/ou pour l'enduction d'envers.

**8.** Utilisation selon une ou plusieurs des revendications 1 à 7, **caractérisée en ce qu'**un poids d'application de 20 à 1 500 g/m$^2$ est utilisé.

**9.** Utilisation selon une ou plusieurs des revendications 1 à 8, **caractérisée en ce que** les revêtements de sol sont à base de fibres naturelles et/ou synthétiques.

**10.** Utilisation selon une ou plusieurs des revendications 1 à 9, **caractérisée en ce que** la pénétrabilité à l'aiguille des polyoléfines est d'au plus 60 * 0,1 mm.

**11.** Utilisation selon une ou plusieurs des revendications 1 à 10, **caractérisée en ce que** les polyoléfines selon l'invention sont des copolymères d'éthylène, de propylène et/ou de 1-butène, les copolymères contenant au plus 30 % en masse d'éthylène.

**12.** Utilisation selon une ou plusieurs des revendications 1 à 11, **caractérisée en ce qu'**elles présentent une déformation d'au plus 1 % à une température de 190 °C et une viscosité complexe à l'état fondu de 500 à 100 000 mPa*s à une fréquence de mesure de 1 Hz.

**13.** Utilisation selon une ou plusieurs des revendications 1 à 12, **caractérisée en ce que** la température de transition vitreuse des polyoléfines déterminée par DSC est d'au plus -8 °C.

**14.** Adhésifs fusibles pour la liaison de touffes et/ou de filaments, **caractérisés en ce qu'**ils contiennent des polyoléfines contenant au plus 30 % en masse d'éthylène, 70 à 100 % en masse ou au plus 30 % en masse de propylène et/ou 70 à 100 % en masse ou au plus 25 % en masse de 1-butène ou d'une autre 1-oléfine linéaire, la somme des proportions étant de 100 % en masse, et la répartition des triades déterminée par RMN $^{13}C$ pour les triades de propène présentant une proportion atactique de 20 à 55 % en masse, une proportion isotactique de 40 à 80 % en masse et une proportion syndiotactique d'au plus 30 % en masse et/ou la répartition des triades déterminée par RMN $^{13}C$ pour les triades de 1-butène présentant une proportion atactique de 2 à 85 % en masse et une proportion syndiotactique d'au plus 20 % en masse.

**15.** Matériaux de revêtement lourds pour la fabrication de revêtements de sol, **caractérisés en ce qu'**ils contiennent des polyoléfines contenant au plus 30 % en masse d'éthylène, 70 à 100 % en masse ou au plus 30 % en masse de propylène et/ou 70 à 100 % en masse ou au plus 25 % en masse de 1-butène ou d'une autre 1-oléfine linéaire, la somme des proportions étant de 100 % en masse, et la répartition des triades déterminée par RMN $^{13}C$ pour les triades de propène présentant une proportion atactique de 20 à 55 % en masse, une proportion isotactique de 40 à 80 % en masse et une proportion syndiotactique d'au plus 30 % en masse et/ou la répartition des triades déterminée par RMN $^{13}C$ pour les triades de 1-butène présentant une proportion atactique de 2 à 85 % en masse et une proportion syndiotactique d'au plus 20 % en masse.

**16.** Revêtements de sol contenant des polyoléfines, les polyoléfines contenant au plus 30 % en masse d'éthylène, 70 à 100 % en masse ou au plus 30 % en masse de propylène et/ou 70 à 100 % en masse ou au plus 25 % en masse de 1-butène ou d'une autre 1-oléfine linéaire, la somme des proportions étant de 100 % en masse, et la répartition des triades déterminée par RMN $^{13}C$ pour les triades de propène présentant une proportion atactique de 20 à 55 % en masse, une proportion isotactique de 40 à 80 % en masse et une proportion syndiotactique d'au plus 30 % en masse et/ou la répartition des triades déterminée par RMN $^{13}C$ pour les triades de 1-butène présentant une proportion atactique de 2 à 85 % en masse et une proportion syndiotactique d'au plus 20 % en masse.

**17.** Revêtements de sol selon la revendication 16, **caractérisés en ce qu'**il s'agit de tapis ou de gazon artificiel.

*Beispiel für erfindungsgemäße monomodale Molmassenverteilung ohne niedermolekkulare Anteile (Polymer 4):*

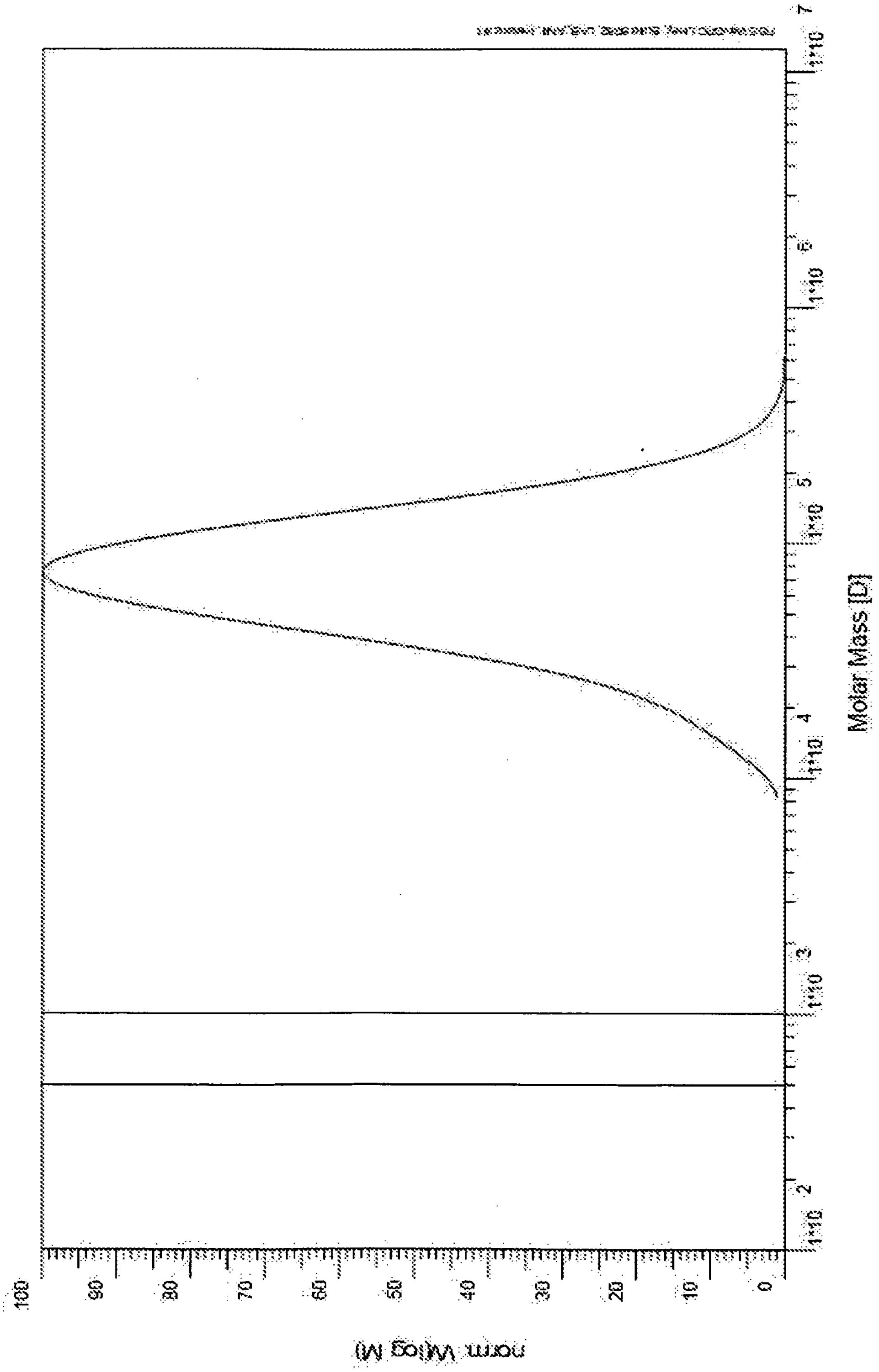


**Figur 1**

*Beispiel für erfindungsgemäße bimodale Molmassenverteilung mit geringen niedermolekularen Anteilen (Polymer 2):*

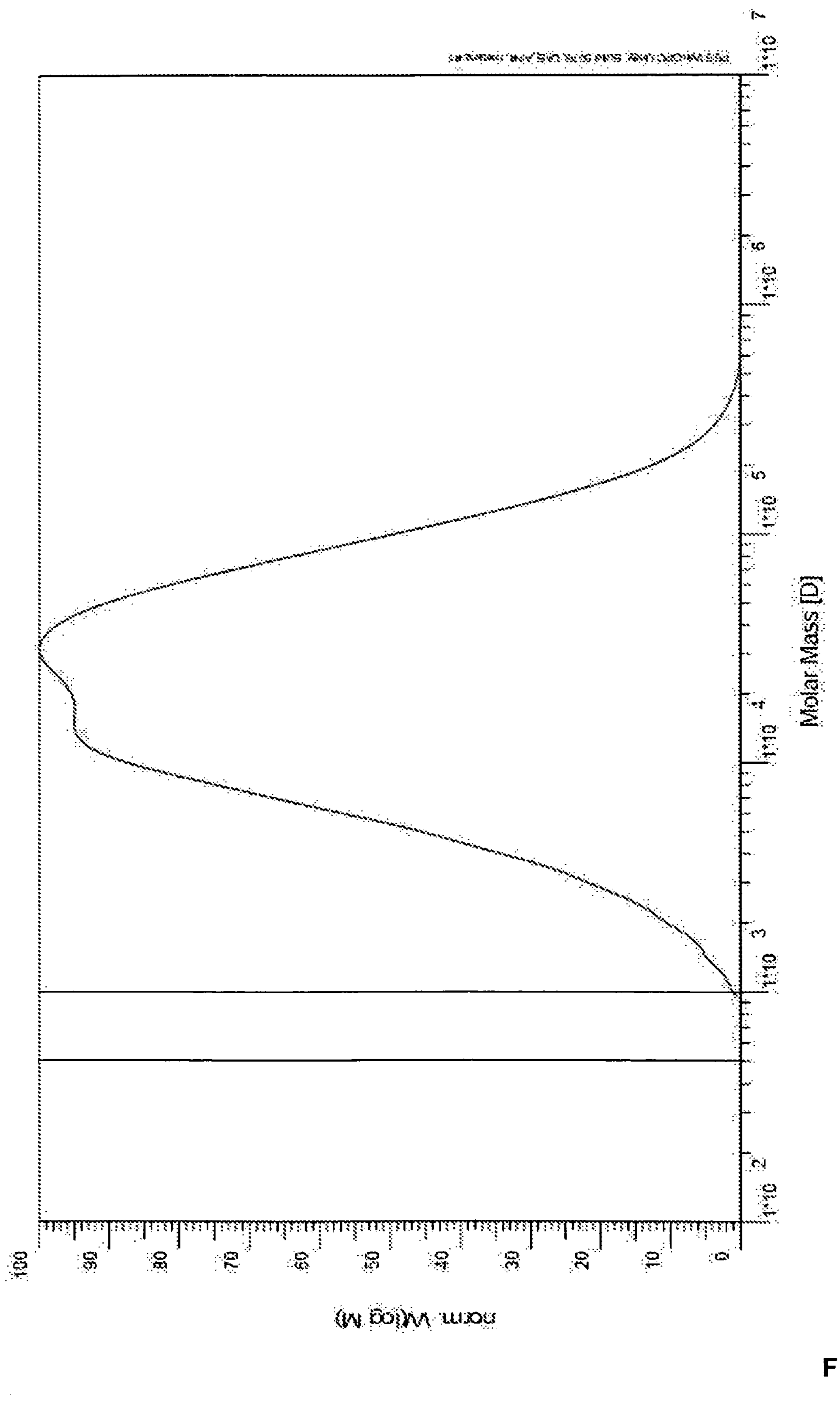


**Figur 2**

*Beispiel für Thermogramm mit unterschiedlicher Anzahl von Schmelzpeaks in der 1. und 2. Aufheizkurve und Kaltkristallisation (Polymer 2)*

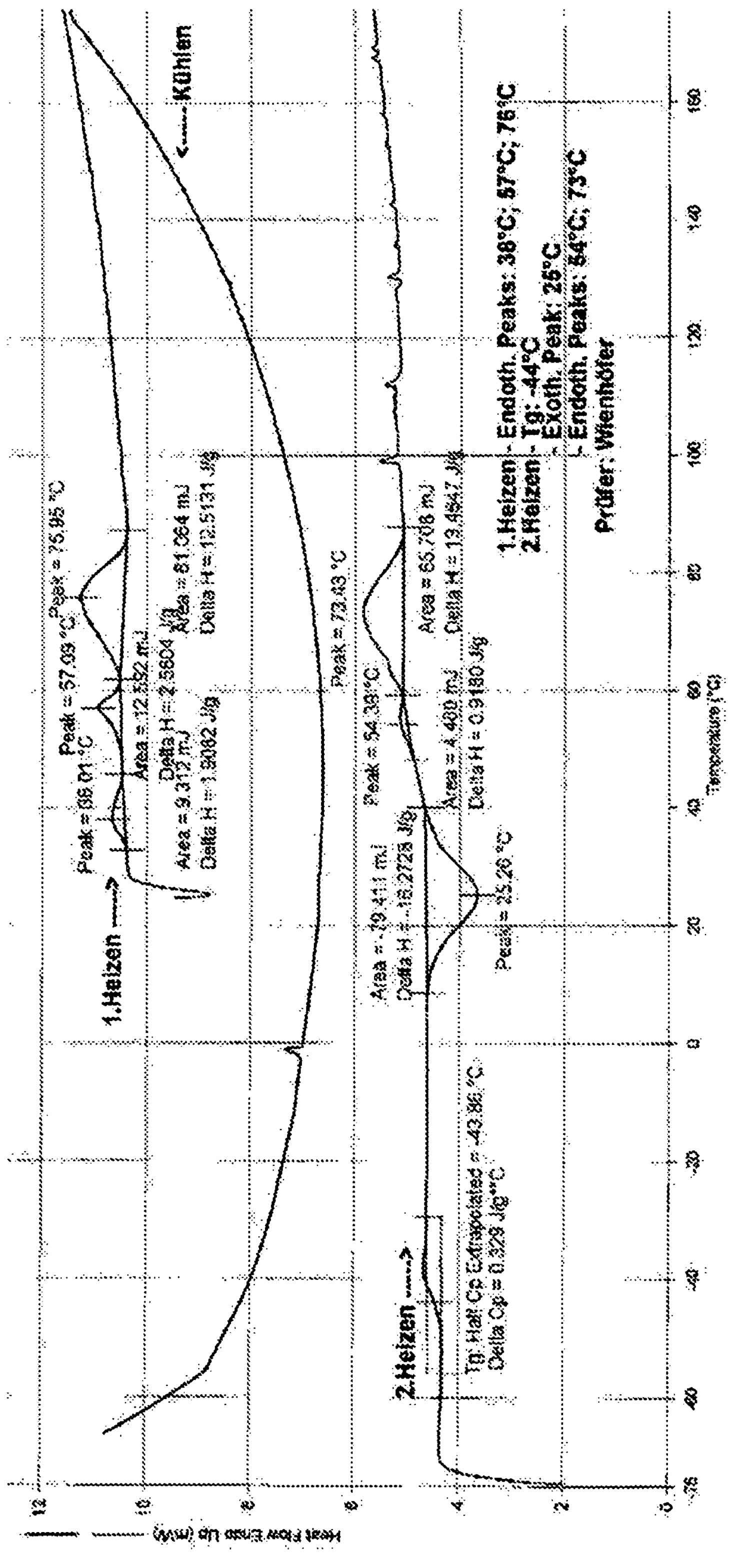


Figur 3

*Beispiel für den frequenzabhängigen Verlauf von komplexer Viskosität, Speichermodul und Verlustmodul eines erfindungsgemäß eingesetzten Polyolefins mit Dominanz des Verlustmoduls im betrachteten Frequenzbereich (Polymer aus Versuch 4) bei 150 °C:*

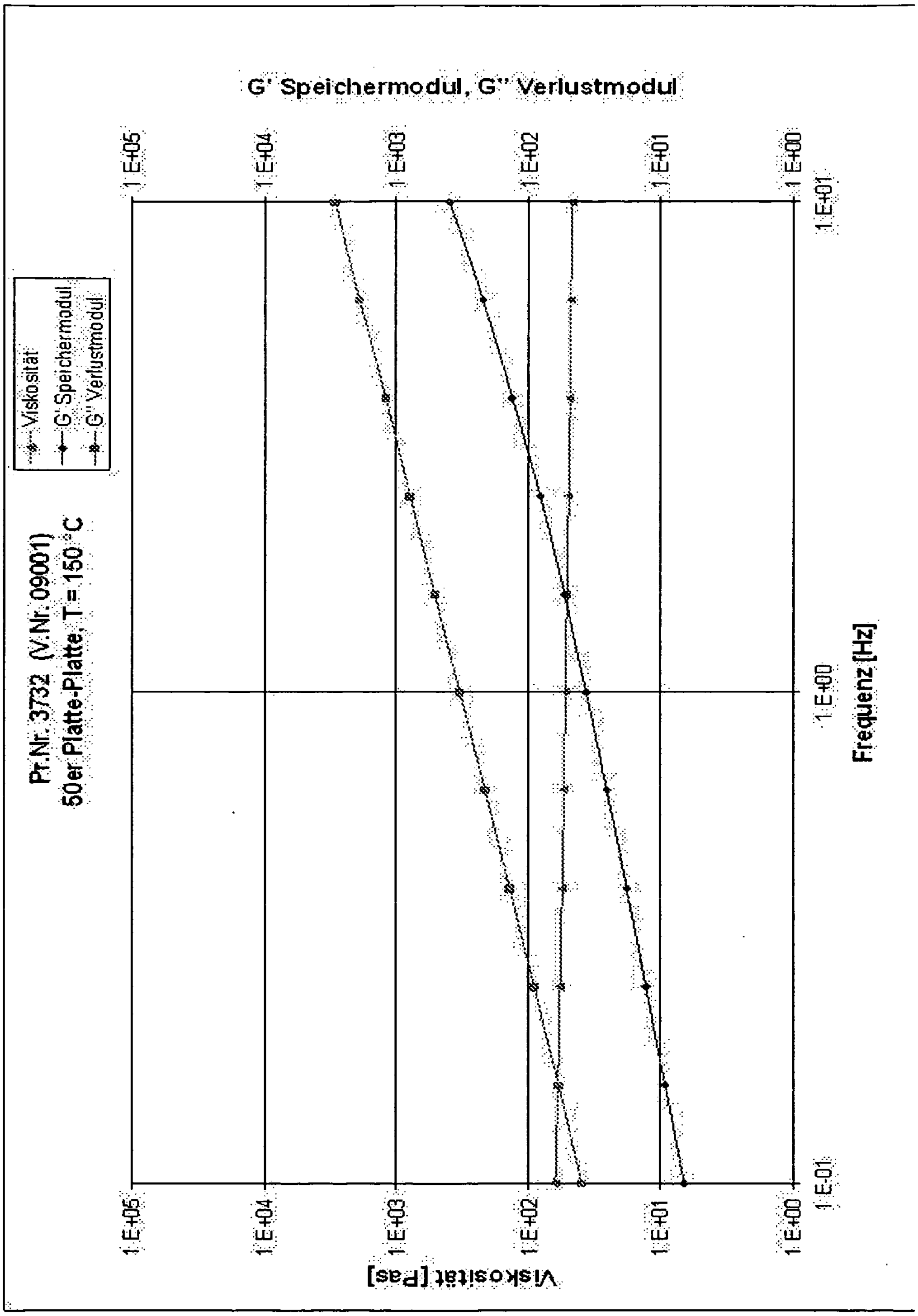


**Figur 4**

*Beispiel für den frequenzabhängigen Verlauf von komplexer Viskosität, Speichermodul und Verlustmodul eines nicht erfindungsgemäß eingesetzten Polyolefins mit Dominanz des Speichermoduls im betrachteten Frequenzbereich (Polymer: Eastoflex P1023PI) bei 150 °C:*

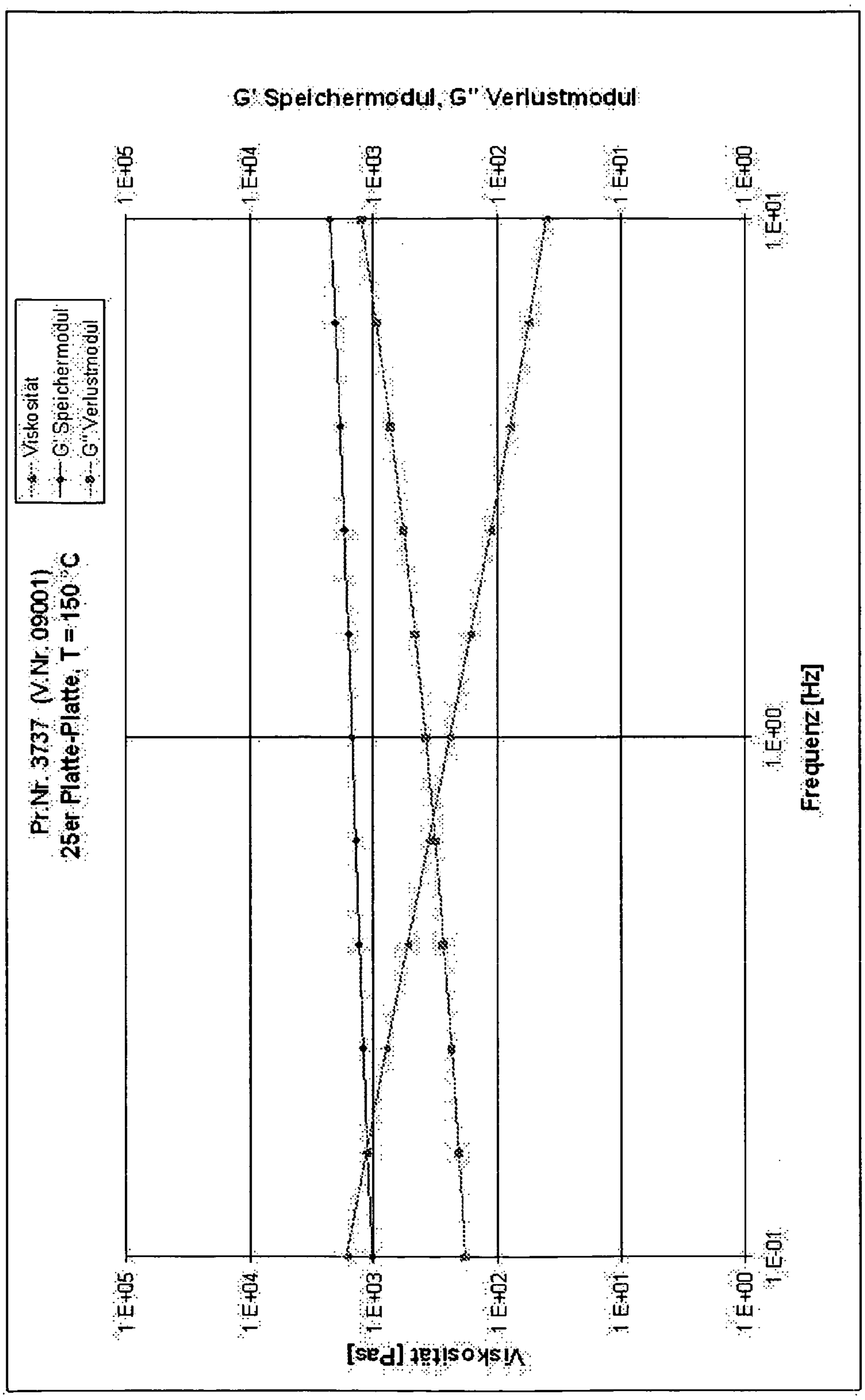


Figur 5

*Beispiel für den temperaturabhängigen Verlauf von komplexer Viskosität, Speichermodul und Verlustmodul eines erfindungsgemäß eingesetzten Polyolefins (Polymer 4) zwischen 250 und 25 °C mit Dominanz des Verlustmoduls im betrachteten Temperaturbereich:*

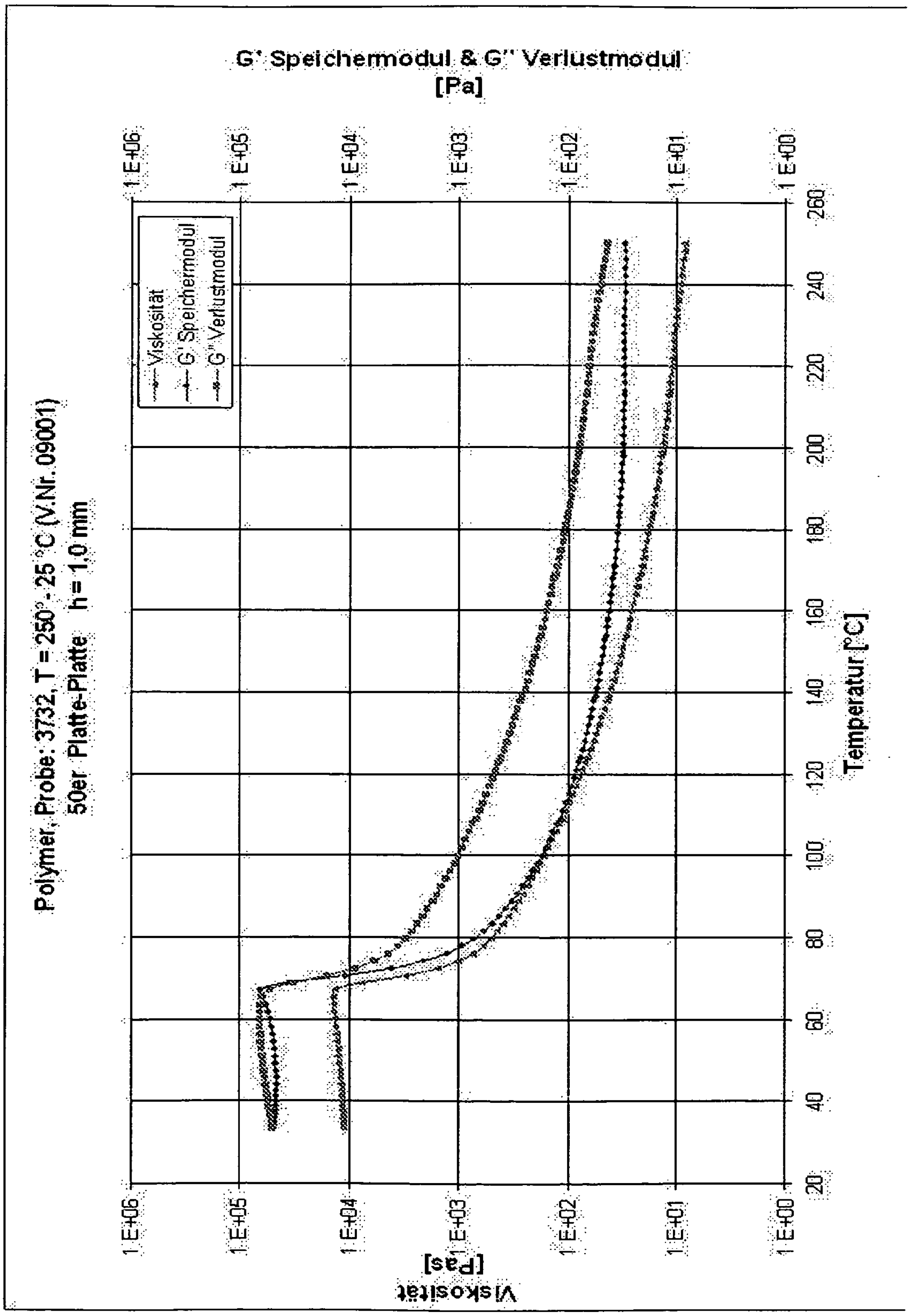


**Figur 6**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3928281 A
- US 3551231 A
- US 3982051 A
- EP 0518014 A
- EP 0592683 A
- EP 1375731 A
- WO 9312285 A
- WO 9838374 A
- WO 9838375 A
- US 20050266206 A
- WO 200022226 A
- EP 0318049 A
- EP 0384264 A
- EP 516018 A
- WO 0146278 A


### In der Beschreibung aufgeführte Nicht-Patentliteratur


- *Adv. Organomet. Chem.,* 1980, vol. 18, 99-149
- Polyolefine. Kunststoff Handbuch. C. Hanser Verlag, 1969, vol. IV
- **A. F. Mason ; G.W. Coates.** Macromolecular Engineering. Wiley-VCH, 2007
- **H.-G. Elias.** Makromoleküle. Wiley-VCH, 2001, vol. III
- **L. Resconi.** Metallocene based Polyolefins. J. Wiley & Sons, 1999
- **A.F. Mason ; G.W. Coates.** Macromolecular Engineering. Wiley-VCH, 2007
- Metallocene based Polyolefins. J.Wiley & Sons, 1999
- **J. Bicerano; J.M.S.** *Rev.Macromol.Chem.Phys.,* 1998, vol. C38, 391ff
- **W. Spaleck.** Metallocene based Polyolefins. J.Wiley & Sons, 1999
- **A. Lehtinen.** *Macromol. Chem.Phys,* 1994, vol. 195, 1539ff
- **J. Boor.** Ziegler-Natta Catalysts and Polymerization. Academic Press, 1979
- **G. Natta ; I. Pasquon ; A. Zambelli ; G. Gatti.** *Makromol. Chem.,* 1964, vol. 70, 191ff
- **B.A. Krentsel ; Y.V. Kissin ; V.I. Kleiner ; L.L. Stotskaya.** Polymers and Copolymers of higher 1-Olefins. Hanser Publ, 1997, 19, 20
- **Y.V.Kissin.** Isospecific polymerization of olefins. Springer Verlag, 1985
- **H. El Mansouri ; N. Yagoubi ; D. Scholler ; A. Feigenbaum ; D. Ferrier.** *J. Appl. Polym. Sci.,* 1999, vol. 71, 371ff
- **B. S. Davison ; G.L. Taylor.** *Br. Polym. J.,* 1972, vol. 4, 65ff
- **S. Berger ; S. Braun ; H.-O. Kalinowski.** *C-NMR-Spektroskopie,* 1985
- **A.E. Tonelli.** NMR Spectroscopy and Polymer Microstructure. Verlag Chemie, 1989
- **J.L. Koenig.** Spectroscopy of Polymers. ACS Professional Reference Books, 1992
- **J.C. Randall.** Polymer Sequence Determination. Academic Press, 1977
- **A. Zambelli et al.** *Macomolecules,* 1975, vol. 8, 687
- **A. Filho ; G.Galland.** *J.Appl.Polym.Sci.,* 2001, vol. 80, 1880
- **H. G. Elias.** Makromoleküle. Wiley-VCH, 2001, vol. 2
- **Z. Grubisic ; P. Rempp ; H. Benoit.** *Polym. Lett.,* 1967, vol. 5, 753
- **K.A. Boni ; F.A. Sliemers ; P.B. Stickney.** *J.Polym.Sci.,* 1968, vol. A2 (6), 1579
- **D. Goedhart ; A. Opschoor.** *J.Polym.Sci.,* 1970, vol. A2 (8), 1227
- **A. Rudin ; H.L.W. Hoegy.** *J.Polym.Sci.,* 1972, vol. A1 (10), 217
- **G. Samay ; M. Kubin ; J. Podesva.** *Angew. Makromol. Chem.,* 1978, vol. 72, 185
- **B. Ivan ; Z. Laszlo-Hedvig ; T. Kelen ; F. Tüdos.** *Polym. Bull.,* 1982, vol. 8, 311
- **K.-Q. Wang ; S.-Y. Zhang ; J. Xu ; Y. Li ; H.P. Li.** *J.Liqu.Chrom.,* 1982, vol. 5, 1899
- **T.G. Scholte ; H.M. Schoffeleers ; A.M.G. Brands.** *J.Appl.Polym.Sci.,* 1984, vol. 29, 3763
- **H.-G. Elias.** Makromoleküle. Wiley-VCH, 2001, vol. 2, 411-413
- **N.P.Cheremisinoff.** An Introduction to Polymer Rheology and Processing. CRC Press, 1993
- **R.S.Lenk.** Rheologie der Kunststoffe. C.Hanser Verlag, 1971
- Rheologisches Verhalten von Kunststoff-Schmelzen und -Lösungen. **J.Meissner.** Praktische Rheologie der Kunststoffe. VDI-Verlag, 1978

- **J.-F. Jansson.** *Proc.8th.Int.Congr.Rheol.,* 1980, vol. 3